# EUROPEAN PATENT SPECIFICATION

(11) **EP 3 066 028 B1**
(45) Date of publication and mention of the grant of the patent: **02.05.2018**
(21) Application number: 14806496.7
(22) Date of filing: 06.11.2014
(51) Int. Cl.: B65D 75/00, B65D 75/20, B65D 75/52, B65D 75/54, B65D 75/56, B65D 30/10, B65D 75/58, B65D 33/02, B65D 81/03, B65B 1/02, B65B 3/02, B65B 5/02, B65B 31/04, B65D 33/00

(54) **FLEXIBLE CONTAINERS FOR USE WITH SHORT SHELF-LIFE PRODUCTS**
FLEXIBLE BEHÄLTER ZUR VERWENDUNG FÜR PRODUKTE MIT KURZER HALTBARKEIT
CONTENANTS FLEXIBLES DESTINÉS À ÊTRE UTILISÉS AVEC DES PRODUITS À COURTE DURÉE DE CONSERVATION

(30) Priority: 06.11.2013 US 201361900765 P
(43) Date of publication of application: 14.09.2016
(73) Proprietor: The Procter & Gamble Company, Cincinnati, OH 45202 (US)
(72) Inventor: ARENT, Lee, Mathew, Cincinnati, OH 45202 (US); STANLEY, Scott, Kendyl, Cincinnati, OH 45202 (US); BOURGEOIS, Marc, Richard, Cincinnati, OH 45202 (US); BERG, Charles, John, Jr., Cincinnati, OH 45202 (US)
(74) Representative: Engisch, Gautier
(86) International application number: PCT/US2014/064284
(87) International publication number: WO 2015/069858

(56) References cited:
- WO-A1-98/01354
- WO-A1-02/085729
- WO-A1-2008/064508
- US-A1- 2010 308 062

## Description

### FIELD

The present disclosure relates in general to containers, and in particular, to containers made from flexible material and for use with short shelf-life products.

### BACKGROUND

Fluent products include liquid products and/or pourable solid products. In various embodiments, a container can be used to receive, contain, and dispense one or more fluent products. And, in various embodiments, a container can be used to receive, contain, and/or dispense individual articles or separately packaged portions of a product. A container can include one or more product volumes. A product volume can be configured to be filled with one or more fluent products. A container receives a fluent product when its product volume is filled. Once filled to a desired volume, a container can be configured to contain the fluent product in its product volume, until the fluent product is dispensed. A container contains a fluent product by providing a barrier around the fluent product. The barrier prevents the fluent product from escaping the product volume. The barrier can also protect the fluent product from the environment outside of the container. A filled product volume is typically closed off by a cap or a seal. A container can be configured to dispense one or more fluent products contained in its product volume(s). Once dispensed, an end user can consume, apply, or otherwise use the fluent product(s), as appropriate. In various embodiments, a container may be configured to be refilled and reused or a container may be configured to be disposed of after a single fill or even after a single use. A container should be configured with sufficient structural integrity, such that it can receive, contain, and dispense its fluent product(s), as intended, without failure.

A container for fluent product(s) can be handled, displayed for sale, and put into use. A container can be handled in many different ways as it is made, filled, decorated, packaged, shipped, and unpacked. A container can experience a wide range of external forces and environmental conditions as it is handled by machines and people, moved by equipment and vehicles, and contacted by other containers and various packaging materials. A container for fluent product(s) should be configured with sufficient structural integrity, such that it can be handled in any of these ways, or in any other way known in the art, as intended, without failure.

A container can also be displayed for sale in many different ways as it is offered for purchase. A container can be offered for sale as an individual article of commerce or packaged with one or more other containers or products, which together form an article of commerce. A container can be offered for sale as a primary package with or without a secondary package. A container can be decorated to display characters, graphics, branding, and/or other visual elements when the container is displayed for sale. A container can be configured to be displayed for sale while laying down or standing up on a store shelf, while presented in a merchandising display, while hanging on a display hanger, or while loaded into a display rack or a vending machine. A container for fluent product(s) should be configured with a structure that allows it to be displayed in any of these ways, or in any other way known in the art, as intended, without failure.

A container can also be put into use in many different ways, by its end user. A container can be configured to be held and/or gripped by an end user, so a container should be appropriately sized and shaped for human hands; and for this purpose, a container can include useful structural features such as a handle and/or a gripping surface. A container can be stored while laying down or standing up on a support surface, while hanging on or from a projection such as a hook or a clip, or while supported by a product holder, or (for refillable or rechargeable containers) positioned in a refilling or recharging station. A container can be configured to dispense fluent product(s) while in any of these storage positions or while being held by the user. A container can be configured to dispense fluent product(s) through the use of gravity, and/or pressure, and/or a dispensing mechanism, such as a pump, or a straw, or through the use of other kinds of dispensers known in the art. Some containers can be configured to be filled and/or refilled by a seller (e.g. a merchant or retailer) or by an end user. A container for fluent product(s) should be configured with a structure that allows it to be put to use in any of these ways, or in any other way known in the art, as intended, without failure. A container can also be configured to be disposed of by the end user, as waste and/or recyclable material, in various ways.

One conventional type of container for fluent products is a rigid container made from solid material(s). Examples of conventional rigid containers include molded plastic bottles, glass jars, metal cans, cardboard boxes, etc. These conventional rigid containers are well-known and generally useful; however their designs do present several notable difficulties.

First, some conventional rigid containers for fluent products can be expensive to make. Some rigid containers are made by a process shaping one or more solid materials. Other rigid containers are made with a phase change process, where container materials are heated (to soften/melt), then shaped, then cooled (to harden/solidify). Both kinds of making are energy intensive processes, which can require complex equipment.

Second, some conventional rigid containers for fluent products can require significant amounts of material. Rigid containers that are designed to stand up on a support surface require solid walls that are thick enough to support the containers when they are filled. This can require significant amounts of material, which adds to the cost of the containers and can contribute to difficulties with their disposal.

Third, some conventional rigid containers for fluent products can be difficult to decorate. The sizes, shapes, (e.g. curved surfaces) and/or materials of some rigid containers, make it difficult to print directly on their outside surfaces. Labeling requires additional materials and processing, and limits the size and shape of the decoration. Overwrapping provides larger decoration areas, but also requires additional materials and processing, often at significant expense.

Fourth, some conventional rigid containers for fluent products can be prone to certain kinds of damage. If a rigid container is pushed against a rough surface, then the container can become scuffed, which may obscure printing on the container. If a rigid container is pressed against a hard object, then the container can become dented, which may look unsightly. And if a rigid container is dropped, then the container can rupture, which may cause its fluent product to be lost.

Fifth, some fluent products in conventional rigid containers can be difficult to dispense. When an end user squeezes a rigid container to dispense its fluent product, the end user must overcome the resistance of the rigid sides, to deform the container. Some users may lack the hand strength to easily overcome that resistance; these users may dispense less than their desired amount of fluent product. Other users may need to apply so much of their hand strength, that they cannot easily control how much they deform the container; these users may dispense more than their desired amount of fluent product.

Document WO98/01354A1 discloses a flexible container according to the preamble of claim 1.

### SUMMARY

The invention provides a container in accordance with the claims. The present disclosure describes various embodiments of containers made from flexible material. Because these containers are made from flexible material, these containers can be less expensive to make, can use less material, and can be easier to decorate, when compared with conventional rigid containers. First, these containers can be less expensive to make, because the conversion of flexible materials (from sheet form to finished goods) generally requires less energy and complexity, than formation of rigid materials (from bulk form to finished goods). Second, these containers can use less material, because they are configured with novel support structures that do not require the use of the thick solid walls used in conventional rigid containers. Third, these flexible containers can be easier to print and/or decorate, because they are made from flexible materials, and flexible materials can be printed and/or decorated as conformable webs, before they are formed into containers. Fourth, these flexible containers can be less prone to scuffing, denting, and rupture, because flexible materials allow their outer surfaces to deform when contacting surfaces and objects, and then to bounce back. Fifth, fluent products in these flexible containers can be more readily and carefully dispensed, because the sides of flexible containers can be more easily and controllably squeezed by human hands. Even though the containers of the present disclosure are made from flexible material, they can be configured with sufficient structural integrity, such that they can receive, contain, and dispense fluent product(s), as intended, without failure. Also, these containers can be configured with sufficient structural integrity, such that they can withstand external forces and environmental conditions from handling, without failure. Further, these containers can be configured with structures that allow them to be displayed and put into use, as intended, without failure.

In accordance with an embodiment of the disclosure, a flexible material for a flexible container can include a first laminate and a second laminate joined to at least a portion of the first laminate by at least one seal. The first laminate can include a first gas barrier layer disposed between first and second sealable layers, wherein the first and second sealable layers define opposed exterior layers of the first laminate. The second laminate can include a third sealable layer defining an exterior layer of the second laminate, and a second gas barrier layer. The at least one seal joins a portion of the third sealable layer to at least a portion of the second sealable layer. The at least one seal has a seal strength of about 20 N/m to about 10,000 N/m, the layers of the first laminate having a lamination strength between each adjacent layer of about 2 N/m to about 10,000 N/m, and the layers of the second laminate have lamination strength between each adjacent layer of about 2 N/m to about 10,000 N/m.

In accordance with another embodiment of the disclosure, a flexible material for a flexible container can include a first laminate and a second laminate joined to at least a portion of the first laminate by at least one seal. The first laminate can include a first gas barrier layer disposed between first and second sealable layers, wherein the first and second sealable layers define opposed exterior layers of the first laminate. The second laminate can include a third sealable layer defining an exterior layer of the second laminate, and a second gas barrier layer. The at least one seal joins a portion of the third sealable layer to at least a portion of the second sealable layer. The flexible material has a thermal conductivity of about 0.02 W/m-K to about 300 W/m-K measured at 300 K, and the first, second, and third sealable layers each have a melting temperature of about 65°C to about 350 °C.

In accordance with yet another embodiment of the disclosure, a flexible material for a flexible container can include a first laminate and a second laminate joined to at least a portion of the first laminate by at least one seal. The first laminate can include a first gas barrier layer disposed between first and second sealable layers, wherein the first and second sealable layers define opposed exterior layer of the first laminate. The second laminate can include a third sealable layer defining an exterior layer of the second laminate, and a second gas barrier layer. The at least one seal joins a portion of the third sealable layer to at least a portion of the second sealable layer to define at least one boundary of the structural support volume, the structural support volume being disposed between the first and second laminates, and in at least a structural support volume forming region of the flexible material, the flexible material has a gas transmission rate of about 0.05 cc/m²·day·atm to about 7000 cc/m²·day·atm.

In accordance with another embodiment of the disclosure a flexible material for a flexible container can include a first laminate and a second laminate joined to at least a portion of the first laminate by at least one first seal. The first laminate can include a first gas barrier layer disposed between first and second sealable layers, wherein the first and second sealable layers define opposed exterior layers of the first laminate. The second laminate can include a third sealable layer defining an exterior layer of the second laminate, and a second gas barrier layer. The at least one first seal joins a portion of the third sealable layer to at least a portion of the second sealable layer. The second laminate has a construction different than the first laminate, and the at least one first seal joins a portion of the third sealable layer to at least a portion of the second sealable layer to define at least one boundary of the structural support volume, the structural support volume being disposed between the first and second laminates. The second laminate can include, for example, only one sealable layer as an exterior layer.

In accordance with another embodiment, a single layer or multilayer coextruded film can be used. The single layer material may be used by itself and may be heat sealable and have some gas barrier properties. The single layer material may further be coated with a gas barrier coating such as an acrylic, a nanomaterial coating (e.g. dispersion of nanoclays), or metallization. Instead or in addition, a single or multilayer material may have fillers (e.g. montmorillonite nanoclays or other mineral or inorganic material) that boost the gas barrier properties of the film material. Another example of a single layer film would be a heat sealable PET film (i.e. a PET substrate coated with a heat sealable material). A third example would be a HDPE film. A fourth example would be a Nylon coextrusion with LDPE skin layers on both sides.

In accordance with another embodiment, a container can include a flexible material. The flexible material can include a first laminate and a second laminate. The first laminate can include a first gas barrier layer disposed between first and second sealable layers, wherein the first and second sealable layers define opposed exterior layers of the first laminate. The second laminate can include a third sealable layer defining an exterior layer of the second laminate, and a second gas barrier layer. The container further includes at least one first seal joining a portion of the third sealable layer to at least a portion of the second sealable layer and defining at least one boundary of the structural support volume. The structural support volume is disposed between the first and second laminates. The container can further include at least one second seal joining a portion of the first sealable layer in a first region of the flexible material to a portion of the first sealable layer in a second region of the flexible material, the at least one second seal defining at least one additional boundary of the structure support volume and at least partially bounding a product volume. The product volume is provided between the first sealable layer in the first region and the first sealable layer in the second region.

### BRIEF DESCRIPTION OF THE DRAWINGS

Figure 1A illustrates a front view of an embodiment of a stand up flexible container.
Figure 1B illustrates a side view of the stand up flexible container of Figure 1A.
Figure 1C illustrates a top view of the stand up flexible container of Figure 1A.
Figure 1D illustrates a bottom view of the stand up flexible container of Figure 1A.
Figure 1E illustrates a perspective view of an alternative embodiment of the stand up flexible container of Figure 1A, including an asymmetric structural support frame.
Figure 1F illustrates a perspective view of an alternative embodiment of the stand up flexible container of Figure 1A, including an internal structural support frame.
Figure 1G illustrates a perspective view of an alternative embodiment of the stand up flexible container of Figure 1A, including an external structural support frame.
Figure 2A illustrates a top view of a stand up flexible container having a structural support frame that has an overall shape like a frustum.
Figure 2B illustrates a front view of the container of Figure 2A.
Figure 2C illustrates a side view of the container of Figure 2A.
Figure 2D illustrates an isometric view of the container of Figure 2A.
Figure 2E illustrates a perspective view of an alternative embodiment of the stand up flexible container of Figure 2A, including an asymmetric structural support frame.
Figure 2F illustrates a perspective view of an alternative embodiment of the stand up flexible container of Figure 1A, including an internal structural support frame.
Figure 2G illustrates a perspective view of an alternative embodiment of the stand up flexible container of Figure 2A, including an external structural support frame.
Figure 3A illustrates a top view of a stand up flexible container having a structural support frame that has an overall shape like a pyramid.
Figure 3B illustrates a front view of the container of Figure 3A.
Figure 3C illustrates a side view of the container of Figure 3A.
Figure 3D illustrates an isometric view of the container of Figure 3A.
Figure 3E illustrates a perspective view of an alternative embodiment of the stand up flexible container of Figure 3A, including an asymmetric structural support frame.
Figure 3F illustrates a perspective view of an alternative embodiment of the stand up flexible container of Figure 3A, including an internal structural support frame.
Figure 3G illustrates a perspective view of an alternative embodiment of the stand up flexible container of Figure 3A, including an external structural support frame.
Figure 4A illustrates a top view of a stand up flexible container having a structural support frame that has an overall shape like a trigonal prism.
Figure 4B illustrates a front view of the container of Figure 4A.
Figure 4C illustrates a side view of the container of Figure 4A.
Figure 4D illustrates an isometric view of the container of Figure 4A.
Figure 4E illustrates a perspective view of an alternative embodiment of the stand up flexible container of Figure 4A, including an asymmetric structural support frame.
Figure 4F illustrates a perspective view of an alternative embodiment of the stand up flexible container of Figure 4A, including an internal structural support frame.
Figure 4G illustrates a perspective view of an alternative embodiment of the stand up flexible container of Figure 4A, including an external structural support frame.
Figure 5A illustrates a top view of a stand up flexible container having a structural support frame that has an overall shape like a tetragonal prism.
Figure 5B illustrates a front view of the container of Figure 5A.
Figure 5C illustrates a side view of the container of Figure 5A.
Figure 5D illustrates an isometric view of the container of Figure 5A.
Figure 5E illustrates a perspective view of an alternative embodiment of the stand up flexible container of Figure 5A, including an asymmetric structural support frame.
Figure 5F illustrates a perspective view of an alternative embodiment of the stand up flexible container of Figure 5A, including an internal structural support frame.
Figure 5G illustrates a perspective view of an alternative embodiment of the stand up flexible container of Figure 5A, including an external structural support frame.
Figure 6A illustrates a top view of a stand up flexible container having a structural support frame that has an overall shape like a pentagonal prism.
Figure 6B illustrates a front view of the container of Figure 6A.
Figure 6C illustrates a side view of the container of Figure 6A.
Figure 6D illustrates an isometric view of the container of Figure 6A.
Figure 6E illustrates a perspective view of an alternative embodiment of the stand up flexible container of Figure 6A, including an asymmetric structural support frame.
Figure 6F illustrates a perspective view of an alternative embodiment of the stand up flexible container of Figure 6A, including an internal structural support frame.
Figure 6G illustrates a perspective view of an alternative embodiment of the stand up flexible container of Figure 6A, including an external structural support frame.
Figure 7A illustrates a top view of a stand up flexible container having a structural support frame that has an overall shape like a cone.
Figure 7B illustrates a front view of the container of Figure 7A.
Figure 7C illustrates a side view of the container of Figure 7A.
Figure 7D illustrates an isometric view of the container of Figure 7A.
Figure 7E illustrates a perspective view of an alternative embodiment of the stand up flexible container of Figure 7A, including an asymmetric structural support frame.
Figure 7F illustrates a perspective view of an alternative embodiment of the stand up flexible container of Figure 7A, including an internal structural support frame.
Figure 7G illustrates a perspective view of an alternative embodiment of the stand up flexible container of Figure 7A, including an external structural support frame.
Figure 8A illustrates a top view of a stand up flexible container having a structural support frame that has an overall shape like a cylinder.
Figure 8B illustrates a front view of the container of Figure 8A.
Figure 8C illustrates a side view of the container of Figure 8A.
Figure 8D illustrates an isometric view of the container of Figure 8A.
Figure 8E illustrates a perspective view of an alternative embodiment of the stand up flexible container of Figure 8A, including an asymmetric structural support frame.
Figure 8F illustrates a perspective view of an alternative embodiment of the stand up flexible container of Figure 8A, including an internal structural support frame.
Figure 8G illustrates a perspective view of an alternative embodiment of the stand up flexible container of Figure 8A, including an external structural support frame.
Figure 9A illustrates a top view of an embodiment of a self-supporting flexible container, having an overall shape like a square.
Figure 9B illustrates an end view of the flexible container of Figure 9A.
Figure 9C illustrates a perspective view of an alternative embodiment of the self-supporting flexible container of Figure 9A, including an asymmetric structural support frame.
Figure 9D illustrates a perspective view of an alternative embodiment of the self-supporting flexible container of Figure 9A, including an internal structural support frame.
Figure 9E illustrates a perspective view of an alternative embodiment of the self-supporting flexible container of Figure 9A, including an external structural support frame.
Figure 10A illustrates a top view of an embodiment of a self-supporting flexible container, having an overall shape like a triangle.
Figure 10B illustrates an end view of the flexible container of Figure 10A.
Figure 10C illustrates a perspective view of an alternative embodiment of the self-supporting flexible container of Figure 10A, including an asymmetric structural support frame.
Figure 10D illustrates a perspective view of an alternative embodiment of the self-supporting flexible container of Figure 10A, including an internal structural support frame.
Figure 10E illustrates a perspective view of an alternative embodiment of the self-supporting flexible container of Figure 10A, including an external structural support frame.
Figure 11A illustrates a top view of an embodiment of a self-supporting flexible container, having an overall shape like a circle.
Figure 11B illustrates an end view of the flexible container of Figure 11A.
Figure 11C illustrates a perspective view of an alternative embodiment of the self-supporting flexible container of Figure 11A, including an asymmetric structural support frame.
Figure 11D illustrates a perspective view of an alternative embodiment of the self-supporting flexible container of Figure 11A, including an internal structural support frame.
Figure 11E illustrates a perspective view of an alternative embodiment of the self-supporting flexible container of Figure 11A, including an external structural support frame.
Figure 12A illustrates an isometric view of push-pull type dispenser.
Figure 12B illustrates an isometric view of dispenser with a flip-top cap.
Figure 12C illustrates an isometric view of dispenser with a screw-on cap.
Figure 12D illustrates an isometric view of rotatable type dispenser.
Figure 12E illustrates an isometric view of nozzle type dispenser with a cap.
Figure 13A illustrates an isometric view of straw dispenser.
Figure 13B illustrates an isometric view of straw dispenser with a lid.
Figure 13C illustrates an isometric view of flip up straw dispenser.
Figure 13D illustrates an isometric view of straw dispenser with bite valve.
Figure 14A illustrates an isometric view of pump type dispenser.
Figure 14B illustrates an isometric view of pump spray type dispenser.
Figure 14C illustrates an isometric view of trigger spray type dispenser.
Figure 15A illustrates a schematic of a flexible material having first and second laminates.
Figure 15B illustrates a schematic of first and second laminates of a flexible material.
Figure 16 illustrates a schematic of a flexible material having first and second regions each with first seals.
Figure 17 illustrates a schematic of a flexible material having first and second regions with a second seal extending between the first and second regions.
Figure 18 illustrates a schematic of a flexible material having first and second regions, each with first and second seals.
Figure 19 illustrates a schematic of two flexible material sheets, each sheet having first and second laminates and first and second seals.
Figure 20 illustrates a perspective view of a flexible material folded to form a container blank.
Figure 21 illustrates a perspective view of two flexible materials joined to form a container blank.
Figure 22 illustrates a front view of a flexible container having a sacrificial outer layer of flexible material as part of one of the panels of the product volume.
Figure 23 illustrates an exaggerated cross-section taken along lines 23-23 of Figure 22.

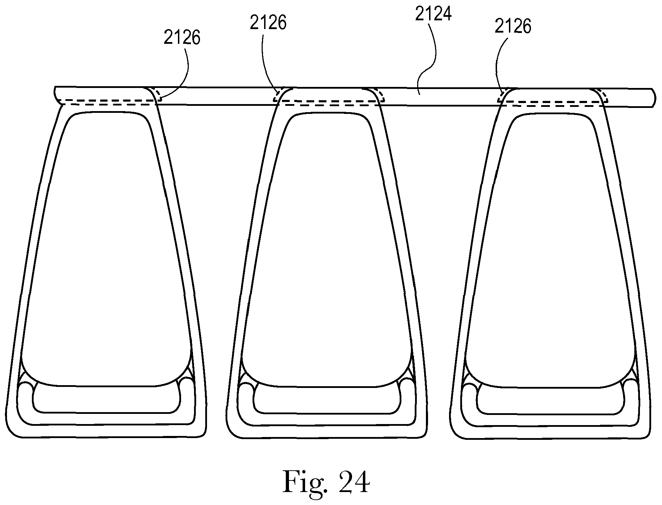

Figure 24 illustrates a plurality of flexible containers interconnected by a strip.

### DETAILED DESCRIPTION

The present disclosure describes various embodiments of containers made from flexible material. Because these containers are made from flexible material, these containers can be less expensive to make, can use less material, and can be easier to decorate, when compared with conventional rigid containers. First, these containers can be less expensive to make, because the conversion of flexible materials (from sheet form to finished goods) generally requires less energy and complexity, than formation of rigid materials (from bulk form to finished goods). Second, these containers can use less material, because they are configured with novel support structures that do not require the use of the thick solid walls used in conventional rigid containers. Third, these flexible containers can be easier to decorate, because their flexible materials can be easily printed before they are formed into containers. Fourth, these flexible containers can be less prone to scuffing, denting, and rupture, because flexible materials allow their outer surfaces to deform when contacting surfaces and objects, and then to bounce back. Fifth, fluent products in these flexible containers can be more readily and carefully dispensed, because the sides of flexible containers can be more easily and controllably squeezed by human hands. Alternatively, any embodiment of flexible containers, as described herein, can be configured to dispense fluent products by pouring the fluent products out of its product volume.

Even though the containers of the present disclosure are made from flexible material, they can be configured with sufficient structural integrity, such that they can receive, contain, and dispense fluent product(s), as intended, without failure. Also, these containers can be configured with sufficient structural integrity, such that they can withstand external forces and environmental conditions from handling, without failure. Further, these containers can be configured with structures that allow them to be displayed for sale and put into use, as intended, without failure.

As used herein, the term "about" modifies a particular value, by referring to a range equal to the particular value, plus or minus twenty percent (+/- 20%). For any of the embodiments of flexible containers, disclosed herein, any disclosure of a particular value, can, in various alternate embodiments, also be understood as a disclosure of a range equal to about that particular value (i.e. +/- 20%).

As used herein, the term "ambient conditions" refers to a temperature within the range of 15-35 degrees Celsius and a relative humidity within the range of 35-75%.

As used herein, the term "approximately" modifies a particular value, by referring to a range equal to the particular value, plus or minus fifteen percent (+/- 15%). For any of the embodiments of flexible containers, disclosed herein, any disclosure of a particular value, can, in various alternate embodiments, also be understood as a disclosure of a range equal to approximately that particular value (i.e. +/- 15%).

As used herein, when referring to a sheet of material, the term "basis weight" refers to a measure of mass per area, in units of grams per square meter (gsm). For any of the embodiments of flexible containers, disclosed herein, in various embodiments, any of the flexible materials can be configured to have a basis weight of 10-1000 gsm, or any integer value for gsm from 10-1000, or within any range formed by any of these values, such as 20-800 gsm, 30-600 gsm, 40-400 gsm, or 50-200, etc.

As used herein, when referring to a flexible container, the term "bottom" refers to the portion of the container that is located in the lowermost 30% of the overall height of the container, that is, from 0-30% of the overall height of the container. As used herein, the term bottom can be further limited by modifying the term bottom with a particular percentage value, which is less than 30%. For any of the embodiments of flexible containers, disclosed herein, a reference to the bottom of the container can, in various alternate embodiments, refer to the bottom 25% (i.e. from 0-25% of the overall height), the bottom 20% (i.e. from 0-20% of the overall height), the bottom 15% (i.e. from 0-15% of the overall height), the bottom 10% (i.e. from 0-10% of the overall height), or the bottom 5% (i.e. from 0-5% of the overall height), or any integer value for percentage between 0% and 30%.

As used herein, the term "branding" refers to a visual element intended to distinguish a product from other products. Examples of branding include one of more of any of the following: trademarks, trade dress, logos, icons, and the like. For any of the embodiments of flexible containers, disclosed herein, in various embodiments, any surface of the flexible container can include one or more brandings of any size, shape, or configuration, disclosed herein or known in the art, in any combination.

As used herein, the term "character" refers to a visual element intended to convey information. Examples of characters include one or more of any of the following: letters, numbers, symbols, and the like. For any of the embodiments of flexible containers, disclosed herein, in various embodiments, any surface of the flexible container can include one or more characters of any size, shape, or configuration, disclosed herein or known in the art, in any combination.

As used herein, the term "closed" refers to a state of a product volume, wherein fluent products within the product volume are prevented from escaping the product volume (e.g. by one or more materials that form a barrier, and by a cap), but the product volume is not necessarily hermetically sealed. For example, a closed container can include a vent, which allows a head space in the container to be in fluid communication with air in the environment outside of the container.

As used herein, the term "deflation feature" refers to one or more structural features provided with a flexible container and configured for use in deflating some or all of the expanded structural support volume(s) of the flexible container, by allowing expansion material(s) inside of the structural support volume to escape into the environment, so that the structural support volume is no longer expanded. A deflation feature can be used when the flexible container is ready to be disposed of (i.e. as waste, compost, and/or recyclable material). Any of the flexible containers disclosed herein can be configured with any number of any kind of deflation feature, configured in any way disclosed herein or known in the art.

One kind of deflation feature is a cutting device, which is a rigid element that includes a point or edge configured to cut and/or pierce through flexible material(s) that form at least part of a structural support volume. As an example, a cutting device can be included with a flexible container by attaching the device to any portion of the outside (e.g. top, middle, side, bottom, etc.) of the container with adhesive, or under a label, or any other way known in the art, for externally attaching rigid elements to a container. As another example, a cutting device can be included with a flexible container by including the device with other packaging material, such as attached to an outer carton, inside of an overwrap layer, in between containers provided together, etc. As still another example, a cutting device can be included with a flexible container by including the device inside of any portion of the container, such as in a product volume, in a structural support volume, in a mixing chamber, in a dedicated space for the device, in a base structure, or any other way known in the art, for internally including rigid elements within a container. As yet another example, a cutting device can be included with a flexible container, by making the cutting device integral with or detachable from another rigid element that is part of the container, such as a rigid base structure, cap, dispenser, fitment, connecting element, reinforcing element, or any other rigid element for containers disclosed herein or known in the art. A cutting device can be configured to be any convenient size and any workable shape and can be used manually or through use of a tool. In addition to rigid elements, flexible materials that can be turned into a rigid cutting device through rolling up or folding flexible materials are also envisioned.

Another kind of deflation feature is an exit channel, which can be configured to be opened in material(s) that border or define at least a portion of the fillable space of a structural support volume. An exit channel can be an existing connection (e.g. seam, seal, or joint) in the container, which is configured to fail (e.g. separate and at least partially open) when exposed to opening forces. An exit channel can also be formed with one or more points, lines, and/or areas of weakness (e.g. thinned, scored, perforated, frangible seal, etc.), which are configured to fail or to otherwise be breached, when exposed to opening forces. An exit channel can be protected by another material, such as an adhesive label, to ensure the exit channel remains closed until the user wishes to deflate. An exit channel can further be formed by configuring the container with one or more tear initiation sites (such as a notch in an edge, a pull-tab, etc.) such that a tear propagating from the site(s) can open the flexible material. An exit channel can be configured to be any convenient size and any workable shape and can be opened manually (by grasping and pulling, by poking with a finger or fingernail, or any other way) or through use of a tool or by overpressurizing a structural support volume (through application of compressive force or controlled environmental conditions) such that the structural support volume fails when its expansion material(s) burst out.

Still another kind of deflation feature is a valve, connected to the fillable space of a structural support volume, wherein the valve can be opened to the container's environment. Embodiments of the present disclosure can use as a deflation feature, any and all embodiments of valves (including materials, structures, and/or features for valves, as well as any and all methods of making and/or using such valves), as disclosed in the following patent documents: US nonprovisional patent application 13/379,655 filed June 21, 2010, entitled "Collapsible Bottle, Method Of Manufacturing a Blank For Such Bottle and Beverage-Filled Bottle Dispensing System" in the name of Reidl, published as US2012/0097634; US nonprovisional patent application 10/246893 filed September 19, 2002, entitled "Bubble-Seal Apparatus for Easily Opening a Sealed Package" in the name of Perell, et al., published as 20040057638; and US patent 7,585,528 filed December 16, 2002, entitled "Package having an inflated frame" in the name of Ferri, et al., granted on September 8, 2009. As used herein, the term "destination indicia" refers to indications imparted to or otherwise associated with a substrate or surface, such as a layer of a flexible container or a label to be applied to a layer of a flexible container. Destination indicia may include a physical address to which a postal service, courier service, or delivery service is to deliver the flexible container. Alternately, the destination indicia may include or be defined by, for example, a code, such as a bar code, a QR-code, a color scheme, a nick-name, an e-mail address, a social media handle, a telephone number, a retail pick-up facility locker number, a partial address (such as the name of a college dormitory, hospital, or other building, sporting event, private or publicized gathering, shopping mall, commissary, office building, stadium, distribution center, warehouse, or other facility), the name of a retail chain, an identifier of a batch of products or an identifier associated with a distributor to which the flexible container is to be forwarded for further processing or distribution. Destination indicia may further include a return-shipping label or address, and may include a location to receive postage, as well as actual printable postage. Destination indicia may additionally or alternately include expiration date information, such as recommended "sell by" and/or "use by" dates, and product verification information, such as information about the contained product. Instead of or in addition to an intended intermediate or ultimate delivery destination, destination indicia may include a coupon, a rebate offer, advertising for products or services other than that contained in the product volume, seasonal-specific artwork, or text and/or graphics that are in furtherance of promotional tie-ins. Additionally, destination indicia may include any type of user customization, such as photographs, images, written messages, designs, or colors or other type of printing.

As used herein, the term "directly connected" refers to a configuration wherein elements are attached to each other without any intermediate elements therebetween, except for any means of attachment (e.g. adhesive).

As used herein, when referring to a flexible container, the term "dispenser" refers to a structure configured to dispense fluent product(s) from a product volume and/or from a mixing volume to the environment outside of the container. For any of the flexible containers disclosed herein, any dispenser can be configured in any way disclosed herein or known in the art, including any suitable size, shape, and flow rate. For example, a dispenser can be a push-pull type dispenser, a dispenser with a flip-top cap, a dispenser with a screw-on cap, a rotatable type dispenser, dispenser with a cap, a pump type dispenser, a pump spray type dispenser, a trigger spray type dispenser, a straw dispenser, a flip up straw dispenser, a straw dispenser with bite valve, a dosing dispenser, etc. A dispenser can be a parallel dispenser, providing multiple flow channels in fluid communication with multiple product volumes, wherein those flow channels remain separate until the point of dispensing, thus allowing fluent products from multiple product volumes to be dispensed as separate fluent products, dispensed together at the same time. A dispenser can be a mixing dispenser, providing one or more flow channels in fluid communication with multiple product volumes, with multiple flow channels combined before the point of dispensing, thus allowing fluent products from multiple product volumes to be dispensed as the fluent products mixed together. As another example, a dispenser can be formed by a frangible opening. As further examples, a dispenser can utilize one or more valves and/or dispensing mechanisms disclosed in the art, such as those disclosed in: published US patent application 2003/0096068, entitled "One-way valve for inflatable package"; US patent 4,988,016 entitled "Self-sealing container"; and US 7,207,717, entitled "Package having a fluid actuated closure". Still further, any of the dispensers disclosed herein, may be incorporated into a flexible container either directly, or in combination with one or more other materials or structures (such as a fitment), or in any way known in the art. In some alternate embodiments, dispensers disclosed herein can be configured for both dispensing and filling, to allow filling of product volume(s) through one or more dispensers. In other alternate embodiments, a product volume can include one or more filling structure(s) (e.g. for adding water to a mixing volume) in addition to or instead of one or more dispenser(s). Any location for a dispenser, disclosed herein can alternatively be used as a location for a filling structure. In some embodiments, a product volume can include one or more filling structures in addition to any dispenser(s). And, any location for a dispenser, disclosed herein can alternatively be used as a location for an opening, through which product can be filled and/or dispensed, wherein the opening may be reclosable or non-reclosable, and can be configured in any way known in the art of packaging. For example, an opening can be: a line of weakness, which can be torn open; a zipper seal, which can be pulled open and pressed closed (e.g. a press seal), or opened and closed with a slider; openings with adhesive-based closures; openings with cohesive-based closures; openings with closures having fasteners (e.g. snaps, tin tie, etc.), openings with closures having micro-sized fasteners (e.g. with opposing arrays of interlocking fastening elements, such as hook, loops, and/or other mating elements, etc.), and any other kind of opening for packages or containers, with or without a closure, known in the art.

As used herein, when referring to a flexible container, the term "disposable" refers to a container which, after dispensing a product to an end user, is not configured to be refilled with an additional amount of the product, but is configured to be disposed of (i.e. as waste, compost, and/or recyclable material). Part, parts, or all of any of the embodiments of flexible containers, disclosed herein, can be configured to be disposable.

As used herein, when referring to a flexible container, the term "durable" refers to a container that is reusable more than non-durable containers.

As used herein, when referring to a flexible container, the term "effective base contact area" refers to a particular area defined by a portion of the bottom of the container, when the container (with all of its product volume(s) filled 100% with water) is standing upright and its bottom is resting on a horizontal support surface. The effective base contact area lies in a plane defined by the horizontal support surface. The effective base contact area is a continuous area bounded on all sides by an outer periphery.

The outer periphery is formed from an actual contact area and from a series of projected areas from defined cross-sections taken at the bottom of the container. The actual contact area is the one or more portions of the bottom of the container that contact the horizontal support surface, when the effective base contact area is defined. The effective base contact area includes all of the actual contact area. However, in some embodiments, the effective base contact area may extend beyond the actual contact area.

The series of projected area are formed from five horizontal cross-sections, taken at the bottom of the flexible container. These cross-sections are taken at 1%, 2%, 3%, 4%, and 5% of the overall height. The outer extent of each of these cross-sections is projected vertically downward onto the horizontal support surface to form five (overlapping) projected areas, which, together with the actual contact area, form a single combined area. This is not a summing up of the values for these areas, but is the formation of a single combined area that includes all of these (projected and actual) areas, overlapping each other, wherein any overlapping portion makes only one contribution to the single combined area.

The outer periphery of the effective base contact area is formed as described below. In the following description, the terms convex, protruding, concave, and recessed are understood from the perspective of points outside of the combined area. The outer periphery is formed by a combination of the outer extent of the combined area and any chords, which are straight line segments constructed as described below.

For each continuous portion of the combined area that has an outer perimeter with a shape that is concave or recessed, a chord is constructed across that portion. This chord is the shortest straight line segment that can be drawn tangent to the combined area on both sides of the concave/recessed portion.

For a combined area that is discontinuous (formed by two or more separate portions), one or more chords are constructed around the outer perimeter of the combined area, across the one or more discontinuities (open spaces disposed between the portions). These chords are straight lines segments drawn tangent to the outermost separate portions of the combined area. These chords are drawn to create the largest possible effective base contact area.

Thus, the outer periphery is formed by a combination of the outer extent of the combined area and any chords, constructed as described above, which all together enclose the effective base area. Any chords that are bounded by the combined area and/or one or more other chords, are not part of the outer periphery and should be ignored.

Any of the embodiments of flexible containers, disclosed herein, can be configured to have an effective base contact area from 1 to 50,000 square centimeters (cm²), or any integer value for cm² between 1 and 50,000 cm², or within any range formed by any of the preceding values, such as: from 2 to 25,000 cm², 3 to 10,000 cm², 4 to 5,000 cm², 5 to 2,500 cm², from 10 to 1,000 cm², from 20 to 500 cm², from 30 to 300 cm², from 40 to 200 cm², or from 50 to 100 cm², etc.

As used herein, when referring to a flexible container, the term "expanded" refers to the state of one or more flexible materials that are configured to be formed into a structural support volume, after the structural support volume is made rigid by one or more expansion materials. An expanded structural support volume has an overall width that is significantly greater than the combined thickness of its one or more flexible materials, before the structural support volume is filled with the one or more expansion materials. Examples of expansion materials include liquids (e.g. water), gases (e.g. compressed air), fluent products, foams (that can expand after being added into a structural support volume), co-reactive materials (that produce gas), or phase change materials (that can be added in solid or liquid form, but which turn into a gas; for example, liquid nitrogen or dry ice), or other suitable materials known in the art, or combinations of any of these (e.g. fluent product and liquid nitrogen). In various embodiments, expansion materials can be added at atmospheric pressure, or added under pressure greater than atmospheric pressure, or added to provide a material change that will increase pressure to something above atmospheric pressure. For any of the embodiments of flexible containers, disclosed herein, its one or more flexible materials can be expanded at various points in time, with respect to its manufacture, sale, and use, including, for example: before or after its product volume(s) are filled with fluent product(s), before or after the flexible container is shipped to a seller, and before or after the flexible container is purchased by an end user.

As used herein, when referring to a product volume of a flexible container, the term "filling" refers to the introduction of a product into the product volume, and the terms "fill" or "filled" refers to a condition of the product volume wherein product has been introduced thereto. The product volume need not be fully occupied by product in order for the product volume to be considered "filled", as there may, for example, be head space within the product volume in addition to product. As used herein, the term filled can be modified by using the term filled with a particular percentage value, wherein 100% filled represents the maximum capacity of the product volume. Alternately, the term "filled" can be modified by using the term filled with a qualitative or less-precise quantitative term that indicates an approximate degree of fill of the product volume, such as partially filled, fractionally filled, or mostly filled.

As used herein, the term "flat" refers to a surface that is without significant projections or depressions.

As used herein, the term "flexible container" refers to a container configured to have a product volume, wherein one or more flexible materials form 50-100% of the overall surface area of the one or more materials that define the three-dimensional space of the product volume. For any of the embodiments of flexible containers, disclosed herein, in various embodiments, the flexible container can be configured to have a product volume, wherein one or more flexible materials form a particular percentage of the overall area of the one or more materials that define the three-dimensional space, and the particular percentage is any integer value for percentage between 50% and 100%, or within any range formed by any of these values, such as: 60-100%, or 70-100%, or 80-100%, or 90-100%, etc. One kind of flexible container is a film-based container, which is a flexible container made from one or more flexible materials, which include a film.

For any of the embodiments of flexible containers, disclosed herein, in various embodiments, the middle of the flexible container (apart from any fluent product) can be configured to have an overall middle mass, wherein one or more flexible materials form a particular percentage of the overall middle mass, and the particular percentage is any integer value for percentage between 50% and 100%, or within any range formed by any of the preceding values, such as: 60-100%, or 70-100%, or 80-100%, or 90-100%, etc.

For any of the embodiments of flexible containers, disclosed herein, in various embodiments, the entire flexible container (apart from any fluent product) can be configured to have an overall mass, wherein one or more flexible materials form a particular percentage of the overall mass, and the particular percentage is any integer value for percentage between 50% and 100%, or within any range formed by any of the preceding values, such as: 60-100%, or 70-100%, or 80-100%, or 90-100%, etc.

As used herein, when referring to a flexible container, the term "flexible material" refers to a thin, easily deformable, sheet-like material, having a flexibility factor within the range of 1,000-2,500,000 N/m. For any of the embodiments of flexible containers, disclosed herein, in various embodiments, any of the flexible materials can be configured to have a flexibility factor of 1,000-2,500,000 N/m, or any integer value for flexibility factor from 1,000-2,500,000 N/m, or within any range formed by any of these values, such as 1,000-1,500,000 N/m, 1,500-1,000,000 N/m, 2,500-800,000 N/m, 5,000-700,000 N/m, 10,000-600,000 N/m, 15,000-500,000 N/m, 20,000-400,000 N/m, 25,000-300,000 N/m, 30,000-200,000 N/m, 35,000-100,000 N/m, 40,000-90,000 N/m, or 45,000-85,000 N/m, etc. Throughout the present disclosure the terms "flexible material", "flexible sheet", "sheet", and "sheet-like material" are used interchangeably and are intended to have the same meaning. Examples of materials that can be flexible materials include one or more of any of the following: films (such as plastic films), elastomers, foamed sheets, foils, fabrics (including wovens and nonwovens), biosourced materials, and papers, in any configuration, as separate material(s), or as layer(s) of a laminate, or as part(s) of a composite material, in a microlayered or nanolayered structure, and in any combination, as described herein or as known in the art.

As examples, flexible materials such as films and nonwovens, can be made from one or more thermoplastic polymers, as described herein and/or as known in the art. Thermoplastic polymers can include polyolefins such as polyethylene and/or copolymers thereof, including low density, high density, linear low density, or ultra low density polyethylenes. Polypropylene and/or polypropylene copolymers, including atactic polypropylene; isotactic polypropylene, syndiotactic polypropylene, and/or combinations thereof can also be used. Polybutylene is also a useful polyolefin.

Other suitable polymers include polyamides or copolymers thereof, such as Nylon 6, Nylon 11, Nylon 12, Nylon 46, Nylon 66; polyesters and/or copolymers thereof, such as maleic anhydride polypropylene copolymer, polyethylene terephthalate; olefin carboxylic acid copolymers such as ethylene/acrylic acid copolymer, ethylene/maleic acid copolymer, ethylene/methacrylic acid copolymer, ethylene/vinyl acetate copolymers or combinations thereof; polyacrylates, polymethacrylates, and/or their copolymers such as poly(methyl methacrylates).

Other nonlimiting examples of polymers include polyesters, polycarbonates, polyvinyl acetates, poly(oxymethylene), styrene copolymers, polyacrylates, polymethacrylates, poly(methyl methacrylates), polystyrene/methyl methacrylate copolymers, polyetherimides, polysulfones, and/or combinations thereof. In some embodiments, thermoplastic polymers can include polypropylene, polyethylene, polyamides, polyvinyl alcohol, ethylene acrylic acid, polyolefin carboxylic acid copolymers, polyesters, and/or combinations thereof.

Biodegradable thermoplastic polymers also are contemplated for use herein. Biodegradable materials are susceptible to being assimilated by microorganisms, such as molds, fungi, and bacteria when the biodegradable material is buried in the ground or otherwise contacts the microorganisms Suitable biodegradable polymers also include those biodegradable materials which are environmentally-degradable using aerobic or anaerobic digestion procedures, or by virtue of being exposed to environmental elements such as sunlight, rain, moisture, wind, temperature, and the like. The biodegradable thermoplastic polymers can be used individually or as a combination of biodegradable or non-biodegradable polymers. Biodegradable polymers include polyesters containing aliphatic components. Among the polyesters are ester polycondensates containing aliphatic constituents and poly(hydroxycarboxylic) acid. The ester polycondensates include diacids/diol aliphatic polyesters such as polybutylene succinate, polybutylene succinate co-adipate, aliphatic/aromatic polyesters such as terpolymers made of butylenes diol, adipic acid and terephthalic acid. The poly(hydroxycarboxylic) acids include lactic acid based homopolymers and copolymers, polyhydroxybutyrate (PHB), or other polyhydroxyalkanoate homopolymers and copolymers. Such polyhydroxyalkanoates include copolymers of PHB with higher chain length monomers, such as C6-C12, and higher, polyhydroxyalkanaotes, such as those disclosed in U.S. Patent Numbers RE 36,548 and 5,990,271, polyglycolic acid, and polycaprolactone.

Non-limiting examples of suitable commercially available polymers include Basell Profax PH-835 (a 35 melt flow rate Ziegler-Natta isotactic polypropylene from Lyondell-Basell), Basell Metocene MF-650W (a 500 melt flow rate metallocene isotactic polypropylene from Lyondell-Basell), Polybond 3200 (a 250 melt flow rate maleic anhydride polypropylene copolymer from Crompton), Exxon Achieve 3854 (a 25 melt flow rate metallocene isotactic polypropylene from Exxon-Mobil Chemical), Mosten NB425 (a 25 melt flow rate Ziegler-Natta isotactic polypropylene from Unipetrol), Danimer 27510 (a polyhydroxyalkanoate polypropylene from Danimer Scientific LLC), Dow Aspun 6811A (a 27 melt index polyethylene polypropylene copolymer from Dow Chemical), and Eastman 9921 (a polyester terephthalic homopolymer with a nominally 0.81 intrinsic viscosity from Eastman Chemical), any biosourced materials for example, from Braskem, and acrylonitrile-methyl acrylate polymers, such as Barex..

A thermoplastic polymer component of a flexible material can be a single polymer species as described above or a blend of two or more thermoplastic polymers as described above.

Also as examples, flexible materials can further include one or more additives, as described herein and/or as known in the art. Non-limiting examples of classes of such additives include perfumes, dyes, pigments, nanoparticles, antistatic agents, fillers, photoactives, and other classes of additives known in the art, and combinations. The films disclosed herein can contain a single additive or a mixture of any number of additives.

Contemplated fillers include, but are not limited to inorganic fillers such as, for example, the oxides of magnesium, aluminum, silicon, and titanium. These materials can be added as inexpensive fillers or processing aides. Other inorganic materials that can function as fillers include hydrous magnesium silicate, titanium dioxide, calcium carbonate, clay, chalk, boron nitride, limestone, diatomaceous earth, mica glass quartz, and ceramics. Additionally, inorganic salts, including alkali metal salts, alkaline earth metal salts, phosphate salts, can be used. Additionally, alkyd resins can also be added as fillers. Alkyd resins can comprise a polyol, a polyacid or anhydride, and/or a fatty acid.

Additional contemplated additives include nucleating and clarifying agents for the thermoplastic polymer. Specific examples, suitable for polypropylene, for example, are benzoic acid and derivatives (e.g. sodium benzoate and lithium benzoate), as well as kaolin, talc and zinc glycerolate. Dibenzlidene sorbitol (DBS) is an example of a clarifying agent that can be used. Other nucleating agents that can be used are organocarboxylic acid salts, sodium phosphate and metal salts (for example aluminum dibenzoate).

Contemplated nanoparticles include metals, metal oxides, allotropes of carbon, clays, organically modified clays, sulfates, nitrides, hydroxides, oxy/hydroxides, particulate water-insoluble polymers, silicates, phosphates, and carbonates. Examples include silicon dioxide, carbon black, graphite, graphene, fullerenes, expanded graphite, carbon nanotubes, talc, calcium carbonate, bentonite, montmorillonite, kaolin, zinc glycerolate, silica, aluminosilicates, boron nitride, aluminum nitride, barium sulfate, calcium sulfate, antimony oxide, feldspar, mica, nickel, copper, iron, cobalt, steel, gold, silver, platinum, aluminum, wollastonite, aluminum oxide, zirconium oxide, titanium dioxide, cerium oxide, zinc oxide, magnesium oxide, tin oxide, iron oxides (Fe2O3, Fe3O4) and mixtures thereof.

Thermoplastic polymers, and their variations, as disclosed herein can be formed into a film and can comprise many different configurations, depending on the film properties desired. The properties of the film can be manipulated by varying, for example, the thickness, or in the case of multilayered films, the number of layers, the chemistry of the layers, i.e., hydrophobic or hydrophilic, and the types of polymers used to form the polymeric layers. The films disclosed herein can be multi-layer films. The film can have at least two layers (e.g., a first film layer and a second film layer). The first film layer and the second film layer can be layered adjacent to each other to form the multi-layer film. A multi-layer film can have at least three layers (e.g., a first film layer, a second film layer and a third film layer). The second film layer can at least partially overlie at least one of an upper surface or a lower surface of the first film layer. The third film layer can at least partially overlie the second film layer such that the second film layer forms a core layer. It is contemplated that multi-layer films can include additional layers (e.g., binding layers, non-permeable layers, etc.). It will be appreciated that multi-layer films can comprise from about 2 layers to about 1000 layers; in certain embodiments from about 3 layers to about 200 layers; and in certain embodiments from about 5 layers to about 100 layers, or any integer value for number of layers, in any of these ranges. For multi-layer films, each respective layer can be made from any material disclosed herein or known in the art, in any manner disclosed herein or known in the art.

A multi-layer film can include a 3-layer arrangement wherein a first film layer and a third film layer form the skin layers and a second film layer is formed between the first film layer and the third film layer to form a core layer. The third film layer can be the same or different from the first film layer, such that the third film layer can comprise a composition as described herein. It will be appreciated that similar film layers could be used to form multi-layer films having more than 3 layers. One embodiment for using multi-layer films is to control the location of the oil. For example, in a 3 layer film, the core layer may contain the oil while the outer layer do not. Alternatively, the inner layer may not contain oil and the outer layers do contain oil.

If incompatible layers are to be adjacent in a multi-layer film, a tie layer can be positioned between them. The purpose of the tie layer is to provide a transition and adequate adhesion between incompatible materials. An adhesive or tie layer is typically used between layers of layers that exhibit delamination when stretched, distorted, or deformed. The delamination can be either microscopic separation or macroscopic separation. In either event, the performance of the film may be compromised by this delamination. Consequently, a tie layer that exhibits adequate adhesion between the layers is used to limit or eliminate this delamination.

A tie layer is generally useful between incompatible materials. For instance, when a polyolefin and a copoly(ester-ether) are the adjacent layers, a tie layer is generally useful.

The tie layer is chosen according to the nature of the adjacent materials, and is compatible with and/or identical to one material (e.g. nonpolar and hydrophobic layer) and a reactive group which is compatible or interacts with the second material (e.g. polar and hydrophilic layer).

Suitable backbones for the tie layer include polyethylene (low density - LDPE, linear low density - LLDPE, high density - HDPE, and very low density - VLDPE) and polypropylene.

The reactive group may be a grafting monomer that is grafted to this backbone, and is or contains at least one alpha- or beta- ethylenically unsaturated carboxylic acid or anhydrides, or a derivative thereof. Examples of such carboxylic acids and anhydrides, which maybe mono-, di-, or polycarboxylic acids, are acrylic acid, methacrylic acid, maleic acid, fumaric acid, itaconic acid, crotonic acid, itaconic anhydride, maleic anhydride, and substituted malic anhydride, e.g. dimethyl maleic anhydride. Examples of derivatives of the unsaturated acids are salts, amides, imides and esters e.g. mono- and disodium maleate, acrylamide, maleimide, and diethyl fumarate.

A particularly tie layer is a low molecular weight polymer of ethylene with about 0.1 to about 30 weight percent of one or more unsaturated monomers which can be copolymerized with ethylene, e.g., maleic acid, fumaric acid, acrylic acid, methacrylic acid, vinyl acetate, acrylonitrile, methacrylonitrile, butadiene, carbon monoxide, etc. Exemplary embodiments are acrylic esters, maleic anhydride, vinyl acetate, and methyacrylic acid. Anhydrides can be used as grafting monomers, for example maleic anhydride can be used.

An exemplary class of materials suitable for use as a tie layer is a class of materials known as anhydride modified ethylene vinyl acetate sold by DuPont under the tradename Bynel®, e.g., Bynel® 3860. Another material suitable for use as a tie layer is an anhydride modified ethylene methyl acrylate also sold by DuPont under the tradename Bynel®, e.g., Bynel® 2169. Maleic anhydride graft polyolefin polymers suitable for use as tie layers are also available from Elf Atochem North America, Functional Polymers Division, of Philadelphia, PA as OrevacTM.

Alternatively, a polymer suitable for use as a tie layer material can be incorporated into the composition of one or more of the layers of the films as disclosed herein. By such incorporation, the properties of the various layers are modified so as to improve their compatibility and reduce the risk of delamination.

Other intermediate layers besides tie layers can be used in the multi-layer film disclosed herein. For example, a layer of a polyolefin composition can be used between two outer layers of a hydrophilic resin to provide additional mechanical strength to the extruded web. Any number of intermediate layers may be used.

Examples of suitable thermoplastic materials for use in forming intermediate layers include polyethylene resins such as low density polyethylene (LDPE), linear low density polyethylene (LLDPE), ethylene vinyl acetate (EVA), ethylene methyl acrylate (EMA), polypropylene, and poly(vinyl chloride). Polymeric layers of this type can have mechanical properties that are substantially equivalent to those described above for the hydrophobic layer.

In addition to being formed from the compositions described herein, the films can further include additional additives. For example, opacifying agents can be added to one or more of the film layers. Such opacifying agents can include iron oxides, carbon black, aluminum, aluminum oxide, titanium dioxide, talc and combinations thereof. These opacifying agents can comprise about 0.1% to about 5% by weight of the film; and in certain embodiments, the opacifying agents can comprise about 0.3% to about 3% of the film. It will be appreciated that other suitable opacifying agents can be employed and in various concentrations. Examples of opacifying agents are described in US Patent Number 6,653,523.

Furthermore, the films can comprise other additives, such as other polymers materials (e.g., a polypropylene, a polyethylene, a ethylene vinyl acetate, a polymethylpentene any combination thereof, or the like), a filler (e.g., glass, talc, calcium carbonate, or the like), a mold release agent, a flame retardant, an electrically conductive agent, an anti-static agent, a pigment, an antioxidant, an impact modifier, a stabilizer (e.g., a UV absorber), wetting agents, dyes, a film anti-static agent or any combination thereof. Film antistatic agents include cationic, anionic, and/or, nonionic agents. Cationic agents include ammonium, phosphonium and sulphonium cations, with alkyl group substitutions and an associated anion such as chloride, methosulphate, or nitrate. Anionic agents contemplated include alkylsulphonates. Nonionic agents include polyethylene glycols, organic stearates, organic amides, glycerol monostearate (GMS), alkyl di-ethanolamides, and ethoxylated amines. Other filler materials can comprise fibers, structural reinforcing agents, and all types of biosourced materials such as oils (hydrogenated soy bean oil), fats, starch, etc.

For any of the flexible materials, materials that are safe/approved for food contact may be selected. Additionally, materials that are approved for medical usage, or materials that can be sterilized through retort, autoclave, or radiation treatment, or other sterilization processes known in the art, may be used.

In various embodiments, part, parts, or all of a flexible material can be coated or uncoated, treated or untreated, processed or unprocessed, in any manner known in the art. In various embodiments, parts, parts, or about all, or approximately all, or substantially all, or nearly all, or all of a flexible material can made of sustainable, bio-sourced, recycled, recyclable, and/or biodegradable material. Part, parts, or about all, or approximately all, or substantially all, or nearly all, or all of any of the flexible materials described herein can be partially or completely translucent, partially or completely transparent, or partially or completely opaque.

With regard to films and elastomers for use as flexible materials, these can be formed in any manner known in the art, such as casting, extruding (blown or flat; singly or with coextrusion), calendering, depositing solution(s), skiving, etc. then slitting, cutting, and/or converting the films and/or elastomers into the desired sizes or shapes, as sheets or webs, as will be understood by one skilled in the art. With regard to blown films, multiple processes can be used including: collapsed bubble to create a blocked film, and double and or triple bubble processes. Flexible materials may further be subjected to any number or orienting, tenter frame, tenter hook, stretching, or activation processes. With regard to foamed sheets for use as flexible materials, these can be formed in any manner known in the art, by mixing base ingredients, adding the foaming mixture to a mold or shaping apparatus, then curing, cutting, and/or converting the foam into the desired sizes or shapes, as sheets or webs. With regard to nonwoven fabrics, these can be formed in any manner known in the art using spunbonded fibers and/or meltblown fibers, staple-length and/or continuous fibers, with any layering, mixing, or other combination known in the art. Other materials listed herein for use as flexible materials can be made in any manner known in the art.

The flexible materials used to make the containers disclosed herein can be formed in any manner known in the art, and can be joined together using any kind of joining or sealing method known in the art, including, for example, heat sealing (e.g. conductive sealing, impulse sealing, ultrasonic sealing, etc.), welding, crimping, bonding, adhering, and the like, and combinations of any of these.

As used herein, when referring to a flexible container, the term "flexibility factor" refers to a material parameter for a thin, easily deformable, sheet-like material, wherein the parameter is measured in Newtons per meter, and the flexibility factor is equal to the product of the value for the Young's modulus of the material (measured in Pascals) and the value for the overall thickness of the material (measured in meters).

As used herein, when referring to a flexible container, the term "fluent product" refers to one or more liquids and/or pourable solids, and combinations thereof. Examples of fluent products include one or more of any of the following: bites, bits, creams, chips, chunks, crumbs, crystals, emulsions, flakes, gels, grains, granules, jellies, kibbles, liquid solutions, liquid suspensions, lotions, nuggets, ointments, particles, particulates, pastes, pieces, pills, powders, salves, shreds, sprinkles, and the like, either individually or in any combination. Throughout the present disclosure the terms "fluent product" and "flowable product" are used interchangeably and are intended to have the same meaning. Any of the product volumes disclosed herein can be configured to include one or more of any fluent product disclosed herein, or known in the art, in any combination.

As used herein, when referring to a flexible container, the term "formed" refers to the state of one or more materials that are configured to be formed into a product volume, after the product volume is provided with its defined three-dimensional space.

As used herein, the term "gas barrier layer" refers to a layer of a laminate of a flexible material, the gas barrier layer being a material or coated material that resists the permeation of gas through the layer. The gas barrier layer imparts at least partial resistance to the permeation of gas through the flexible material. The flexible material can include one or more gas barrier layers. The gas barrier layer can have a gas transmission rate, for example, of about 0.01 cc/m²·day·atm to about 10,000 cc/m²·day·atm, about 0.01 cc/m²·day·atm to about 3000 cc/m²·day·atm, about 0.01 cc/m²·day·atm to about 20 cc/m²·day·atm, about 0.05 cc/m²·day·atm to about 18 cc/m²·day·atm, about 0.05 cc/m²·day·atm to about 3 cc/m²·day·atm, about 0.05 cc/m²·day·atm to about 1 cc/m²·day·atm, about 25 cc/m²·day·atm to about 100 cc/m²·day·atm, about 50 cc/m²·day·atm to about 500 cc/m²·day·atm, about 1000 cc/m²·day·atm to about 5000 cc/m²·day·atm, about 5000 cc/m²·day·atm to about 10,000 cc/m²·day·atm. Other suitable gas transmission rates include, for example, about 0.01, 0.05, 0.1, 0.5, 1, 5, 10, 15, 20, 25, 30, 35, 40, 45, 50, 75, 100, 150, 200, 250, 300, 350, 400, 450, 500, 600, 700, 800, 900, 1000, 2000, 3000, 4000, 5000, 6000, 7000, 8000, 9000, and 10000 cc/m²·day·atm, and any range formed by a combination of these values.. For example, the gas barrier layer can have the foregoing gas transmission rates for Nitrogen. Unless otherwise specified, the gas transmission rate is measured by ASTM D 1434-82 at 50% relative humidity and 25°C using Procedure V with partial pressures of 1 atm of high purity test gas on the high pressure side and 1 atm of clean atmospheric air on the low pressure side.

An exemplary gas barrier layer is ethylene vinyl alcohol. The gas transmission rate of EVOH can be tailored by varying the thickness and mol% of ethylene content in the layer. The EVOH gas barrier layer can include from about 24 mol% to about 48 mol% ethylene, with the lower content of ethylene resulting in a gas barrier layer having a lower gas transmission rate. Additionally, the gas transmission rate of the gas barrier layer can be reduced by providing a thicker layer. For example, the gas transmission rate of a gas barrier layer of EVOH can be tailored by changing the mol% of ethylene in the barrier material and/or thickness of the gas barrier layer. In general, an increase in the mol% of EVOH will increase the gas transmission rate, with increase thickness of the gas barrier layer will decrease the gas transmission rate., For example, a flexible material having a gas transmission rate for Nitrogen of about 0.05 cc/m²·day·atm, can include a gas barrier layer formed of EVOH having 32 mol% ethylene and/or the gas barrier can have a thickness of about 9 microns or greater. For example, a flexible material having an increased gas transmission rate for Nitrogen, such as a rate of about 18 cc/m²·day·atm, the ethylene content can be increased to greater than 32 mol% and/or a thickness of less than about 9 microns. Other suitable gas barrier layer materials can include, for example, nylons, polyamides, Nylon 6, polyamide 6, Nylon MXD6, PVOH, PVC, PVDC, PCTFE, sol-gel materials, liquid crystal polymers, coated substrates, PAN3,oriented PA 6, PGA, PHA, PLA, cellulosic esters, TPS, PBS, vacuum metal or metal oxide coated flexible materials (e.g. Al, SiOx, AlOx), nanoclay coated flexible materials, foil, and blends, combinations, laminates, microlayered, nanolayered, and coextrusions thereof. These materials can be bio-based, petro-based, and/or recycled or reground materials.

As used herein, the term "graphic" refers to a visual element intended to provide a decoration or to communicate information. Examples of graphics include one or more of any of the following: colors, patterns, designs, images, and the like. For any of the embodiments of flexible containers, disclosed herein, in various embodiments, any surface of the flexible container can include one or more graphics of any size, shape, or configuration, disclosed herein or known in the art, in any combination.

As used herein, when referring to a flexible container, the term "height area ratio" refers to a ratio for the container, with units of per centimeter (cm⁻¹), which is equal to the value for the overall height of the container (with all of its product volume(s) filled 100% with water, and with overall height measured in centimeters) divided by the value for the effective base contact area of the container (with all of its product volume(s) filled 100% with water, and with effective base contact area measured in square centimeters). For any of the embodiments of flexible containers, disclosed herein, in various embodiments, any of the flexible containers, can be configured to have a height area ratio from 0.3 to 3.0 per centimeter, or any value in increments of 0.05 cm⁻¹ between 0.3 and 3.0 per centimeter, or within any range formed by any of the preceding values, such as: from 0.35 to 2.0 cm⁻¹, from 0.4 to 1.5 cm⁻¹, from 0.4 to 1.2 cm⁻¹, or from 0.45 to 0.9 cm⁻¹, etc.

As used herein, the term "indicia" refers to one or more of characters, graphics, branding, or other visual elements, in any combination. For any of the embodiments of flexible containers, disclosed herein, in various embodiments, any surface of the flexible container can include one or more indicia of any size, shape, or configuration, disclosed herein or known in the art, in any combination.

As used herein, the term "indirectly connected" refers to a configuration wherein elements are attached to each other with one or more intermediate elements therebetween.

As used herein, the term "joined" refers to a configuration wherein elements are either directly connected or indirectly connected.

As used herein, the term "lamination strength" refers to the strength of the joining connection between adjacent layers of a laminate. The laminates in accordance with the disclosure can have a lamination strength between each of the layers of the laminate of about 2 N/m to about 10,000 N/m, about 4 N/m to about 9000 N/m, about 17 N/m to about 3150 N/m, and about 34 N/m to about 2450 N/m. Other suitable lamination strengths include about 2, 3, 4, 5, 6, 7, 8, 9, 10, 11, 12, 13, 14, 15, 16, 17, 18, 19, 20, 25, 30, 35, 40, 45, 50, 55, 60, 65, 70, 75, 80, 85, 90, 95, 100, 125, 150, 175, 200, 225, 250, 275, 300, 350, 400, 450, 500, 550, 600, 650, 700, 750, 800, 850, 900, 1000, 1250, 1500, 2000, 2500, 3000, 3500, 4000, 4500, 5000, 5500, 6000, 6500, 7000, 7500, 8000, 8500, 9000, and 10000 N/m, and any range formed by a combination of these values. Unless otherwise specified, lamination strengths disclosed herein are measured by ASTM F904-98 using a draw rate of 280 mm/min and with an unseparated portion of the sample left lose to move freely. The lamination strength can be tailored by selecting the layers in direct contact including use of tie layers and adhesives. For example, where a laminate having a lower lamination strength in the above-described range is suitable for a given application, the laminate can be formed without tie layers and/or with tie layers between some or all of the layers of the laminate and/or with very thin tie layers of about 1 micron or less. High lamination strengths can be achieved by directly connecting layers that are chemically similar or have co-reactivity. For example, Nylon and EVOH have strong reactivity and can generally be coextruded to produce a high lamination strength without the need for added tie or adhesive layers. Polyethylene layers have chemical similarity with other polyethylene containing layers and in some embodiments can be directly connected without the need of a tie or adhesive layer to provide sufficient laminate strength (i.e., in a range of 2 N/m to 10,000 N/m).

The lamination strength of the laminate can be increased by using a tie or adhesive layer. The lamination strength can be tailored by selection of the type of tie layer as well as the thickness of the tie layer. For example, a tie layer consisting of an adhesive with a water-based adhesive chemistry and/or thickness of less than 2 microns can be used where lamination strengths at a low end of the above-described range is desired. Where higher lamination strengths are desired, the tie layer can have an increased thickness, for example, about 2 microns to about 5 microns, with solvent based two part adhesives can be used. Additionally, the tie layer can include polymer ties layers. Tie layers having higher anhydride content, for example, above 150 ppm, in the polymeric layer can also be used to increase lamination strength between two layers of a laminate. Flexible containers having larger-sized structural support volumes may require a flexible material having laminates with higher laminate strength to avoid delamination of the flexible material when formed into a flexible container with expanded structural support volumes.

Exemplary tie layers include, but are not limited to, ethylene acrylates with either acid or maleic anhydride modification, EVA with or without maleic anhydride (MAH) modification, LDPE with maleic anhydride modification, LLDPE with maleic anhydride modification, HDPE with maleic anhydride modification, polypropylene with maleic anhydride modification, ethylene acrylic acid, ionomers, terpolymers, adhesives including solvent, solvent-less, water-based, and two part adhesives, and blends, combinations, laminates, microlayered, nanolayered, and coextrusions thereof. These materials can be bio-based, petro-based, and/or recycled or reground materials.

As used herein, the term "lateral" refers to a direction, orientation, or measurement that is parallel to a lateral centerline of a container, when the container is standing upright on a horizontal support surface, as described herein. A lateral orientation may also be referred to a "horizontal" orientation, and a lateral measurement may also be referred to as a "width."

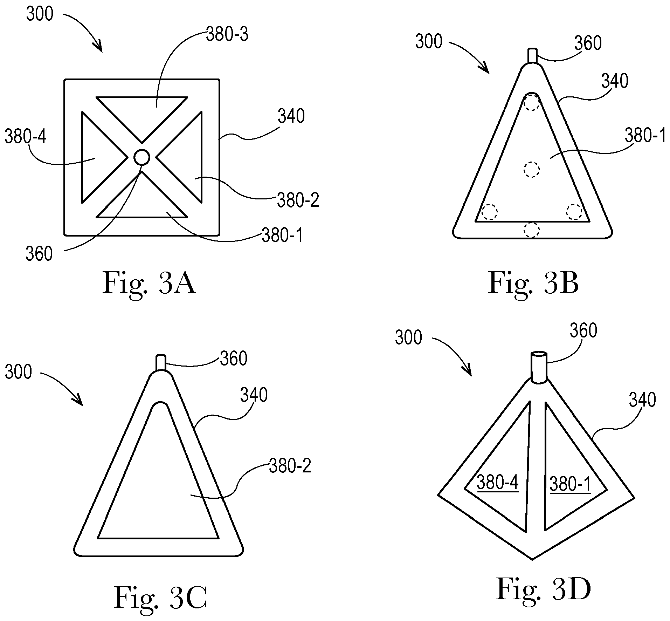

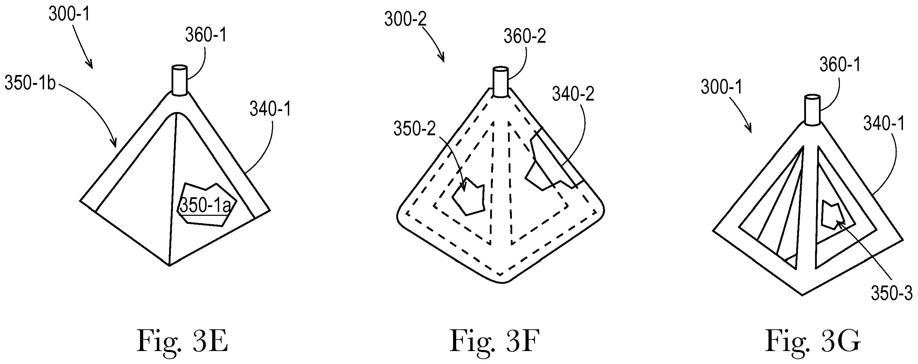

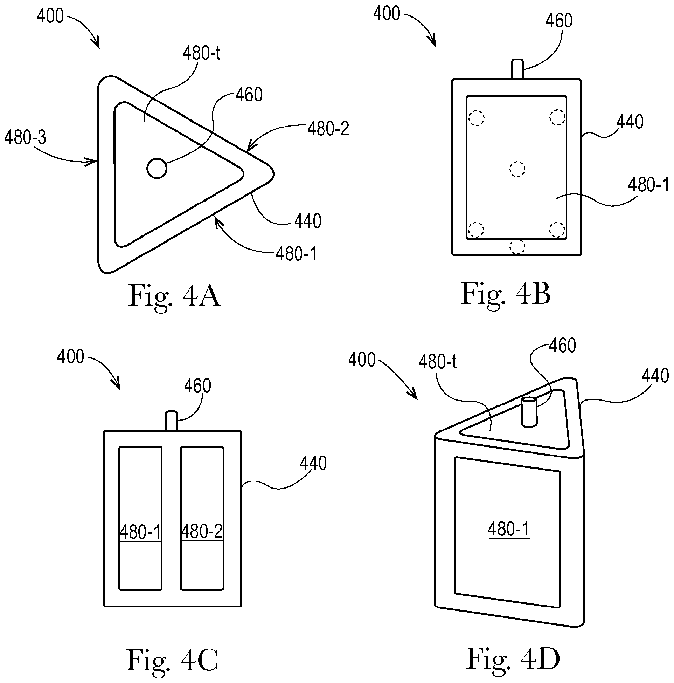

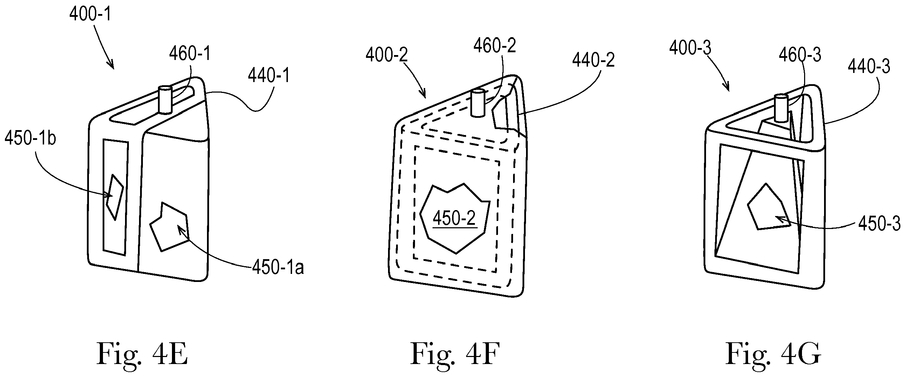

As used herein, the term "like-numbered" refers to similar alphanumeric labels for corresponding elements, as described below. Like-numbered elements have labels with the same last two digits; for example, one element with a label ending in the digits 20 and another element with a label ending in the digits 20 are like-numbered. Like-numbered elements can have labels with a differing first digit, wherein that first digit matches the number for its figure; as an example, an element of Figure 3 labeled 320 and an element of Figure 4 labeled 420 are like-numbered. Like-numbered elements can have labels with a suffix (i.e. the portion of the label following the dash symbol) that is the same or possibly different (e.g. corresponding with a particular embodiment); for example, a first embodiment of an element in Figure 3A labeled 320-a and a second embodiment of an element in Figure 3B labeled 320-b, are like numbered.

As used herein, the term "liquid barrier layer" refers to a layer of a laminate of a flexible material, wherein the liquid barrier layer is a (coated or uncoated) material that is configured to provide reduced permeation of moisture and/or moisture vapor, and when present in the laminate provides the primary contribution for reduced permeation of moisture and/or moisture vapor to the laminate. In some embodiments, the liquid barrier layer can be substantially impermeable to liquids. The liquid barrier layer can have a moisture vapor transmission rate of about 0.1 g/m²·day to about 200 g/m²·day, about 0.05 g/m²·day to about 12 g/m²·day, about 0.07 g/m²·day to about 6 g/m²·day, or about 0.1 g/m²·day to about 4 g/m²·day. Other suitable moisture vapor transmission rates include, for example, about 0.05, 0.06, 0.07, 0.08, 0.09, 0.1, 0.2, 0.3, 0.4, 0.5, 0.6, 0.7, 0.8, 0.9, 1, 2, 3, 4, 5, or 6 g/m²·day, any range formed by a combination of these values. The liquid barrier layer can include a material or coating selected from the group consisting of metal foils, vacuum metal or metal oxide coated substrates, (e.g. Al, SiOx, AlOx) Biaxially oriented polypropylene (BOPP), HDPE, cyclic copolymers olefins, PP, LDPE, LLDPE, ionomer, PET and blends, combinations, laminates, microlayered, nanolayered, and coextrusions thereof. These materials can be bio-based, petro-based, and/or recycled or reground materials. The material can also have no appreciable water barrier at all for products that are not aqueous based. The material may be water soluble (e.g., cellulose-based or polyvinyl alcohol) or transmit water readily for some embodiments of this invention.

As used herein, the term "longitudinal" refers to a direction, orientation, or measurement that is parallel to a longitudinal centerline of a container, when the container is standing upright on a horizontal support surface, as described herein. A longitudinal orientation may also be referred to a "vertical" orientation. When expressed in relation to a horizontal support surface for a container, a longitudinal measurement may also be referred to as a "height", measured above the horizontal support surface.

As used herein, when referring to a flexible container, the term "middle" refers to the portion of the container that is located in between the top of the container and the bottom of the container. As used herein, the term middle can be modified by describing the term middle with reference to a particular percentage value for the top and/or a particular percentage value for the bottom. For any of the embodiments of flexible containers, disclosed herein, a reference to the middle of the container can, in various alternate embodiments, refer to the portion of the container that is located between any particular percentage value for the top, disclosed herein, and/or any particular percentage value for the bottom, disclosed herein, in any combination.

As used herein, the term "mixing volume" refers to a type product volume that is configured to receive one or more fluent product(s) from one or more product volumes and/or from the environment outside of the container.

As used herein, when referring to a product volume, the term "multiple dose" refers to a product volume that is sized to contain a particular amount of product that is about equal to two or more units of typical consumption, application, or use by an end user. Any of the embodiments of flexible containers, disclosed herein, can be configured to have one or more multiple dose product volumes. A container with only one product volume, which is a multiple dose product volume, is referred to herein as a "multiple dose container."

As used herein, the term "nearly" modifies a particular value, by referring to a range equal to the particular value, plus or minus five percent (+/- 5%). For any of the embodiments of flexible containers, disclosed herein, any disclosure of a particular value, can, in various alternate embodiments, also be understood as a disclosure of a range equal to approximately that particular value (i.e. +/- 5%).

As used herein, when referring to a flexible container, the term "non-durable" refers to a container that is temporarily reusable, or disposable, or single use.

As used herein, when referring to a flexible container, the term "non-fluent product" refers to materials, products, and/or articles that are not liquids, pourable solids, or combinations or liquids and pourable solids. Any of the flexible containers disclosed herein can be configured for packaging one or more of any non-fluent product disclosed herein, or known in the art, in any combination. When used for non-fluent products, flexible containers, as disclosed herein, can provide benefits associated with partly or fully supporting and/or enclosing the non-fluent product with primary and/or secondary packaging that includes one or more structural support volumes, one or more structural support members, and/or one or more structural support frames; for example, so the non-fluent product can be supported and/or enclosed by packaging that is self-supporting and/or standing upright, as will be understood by one skilled in the art.

As used herein, when referring to a flexible container, the term "nonstructural panel" refers to a layer of one or more adjacent sheets of flexible material, the layer having an outermost major surface that faces outward, toward the environment outside of the flexible container, and an innermost major surface that faces inward, toward product volume(s) disposed within the flexible container; a nonstructural panel is configured such that, the layer, does not independently provide substantial support in making the container self-supporting and/or standing upright.

As used herein, when referring to a flexible container, the term "overall height" refers to a distance that is measured while the container is standing upright on a horizontal support surface, the distance measured vertically from the upper side of the support surface to a point on the top of the container, which is farthest away from the upper side of the support surface. Any of the embodiments of flexible containers, disclosed herein, can be configured to have an overall height from 2.0 cm to 100.0 cm, or any value in increments of 0.1 cm between 2.0 and 100.0 cm, or within any range formed by any of the preceding values, such as: from 4.0 to 90.0 cm, from 5.0 to 80.0 cm, from 6.0 to 70.0 cm, from 7.0 to 60.0 cm, from 8.0 to 50.0 cm, from 9.0 to 40.0 cm, or from 10.0 to 30.0, etc.

As used herein, when referring to a sheet of flexible material, the term "overall thickness" refers to a linear dimension measured perpendicular to the outer major surfaces of the sheet, when the sheet is lying flat. For any of the embodiments of flexible containers, disclosed herein, in various embodiments, any of the flexible materials can be configured to have an overall thickness 5-500 micrometers (µm), or any integer value for micrometers from 5-500, or within any range formed by any of these values, such as 10-500 µm, 20-400 µm, 30-300 µm, 40-200 µm, 50-100 µm, or 50-150 µm, etc.

As used herein, "perforated" refers to perforations, score lines, weakened lines, parting lines, and frangible connections.

As used herein, the term "printing" refers to any method of depositing or otherwise providing indicia, text, graphics, repeating or non-repeating patterns, random shapes, gradients, or textures, including dot matrix printing, inkjet printing, laser printing, painting, gravure, screen, direct object printing, lithographic, flexographic, stamping, ablation, coating, drawing, spraying, dipping, writing, typing, etching, waxing, glazing, frosting, burning, or DATALASE™ ink materials laser printed or otherwise deposited onto a portion of the indicia-receiving surface (which ink materials may subsequently be activated by light and/or heat, such as by laser, to impart destination indicia at high speeds), and "printed" refers to having performed any of the methods listed in this paragraph.

As used herein, the term "print layer" refers to a layer of a laminate of a flexible material, wherein the print layer is a material having at least one major surface that is configured to receive and retain an ink, including a material that is treated in at least a portion in order to have a sufficient surface energy to receive and retain an ink. For example, a material can be treated by corona treatment, plasma treatment, and/or oxidation via flame. Exemplary print layer materials include, but are not limited to, papers, oriented and un-oriented polyesters, PET, co-polyesters, PETG, PEF, PBT, PLA, Nylons or Polyamides, cellulosic or cellulosic esters, PHA, PVC, ionomers, such as sodium ionomer or a zinc ionomer, thermoplastic starch, polyolefins including , cyclic polyolefins, LLDPE and PP, LDPE, HDPE, MDPE, manufactured using Ziegler-Natta catalysts, Chromium catalysts, metallocene based catalysts, single site catalysts and other types of catalysts as homopolymers or copolymers. The materials listed above can be bio-based, petro-based and recycled/reground. These materials could also be combinations, blends, coextrusions, microlayer/nanolayer systems and laminates of the above-materials.

As used herein, the term "product volume" refers to an enclosable three-dimensional space that is configured to receive and directly contain one or more fluent product(s), wherein that space is defined by one or more materials that form a barrier that prevents the fluent product(s) from escaping the product volume. By directly containing the one or more fluent products, the fluent products come into contact with the materials that form the enclosable three-dimensional space; there is no intermediate material or container, which prevents such contact. Throughout the present disclosure the terms "product volume" and "product receiving volume" are used interchangeably and are intended to have the same meaning. Any of the embodiments of flexible containers, disclosed herein, can be configured to have any number of product volumes including one product volume, two product volumes, three product volumes, four product volumes, five product volumes, six product volumes, or even more product volumes. In some embodiments, one or more product volumes can be enclosed within another product volume. Any of the product volumes disclosed herein can have a product volume of any size, including from 0.001 liters to 100.0 liters, or any value in increments of 0.001 liters between 0.001 liters and 3.0 liters, or any value in increments of 0.01 liters between 3.0 liters and 10.0 liters, or any value in increments of 1.0 liters between 10.0 liters and 100.0 liters, or within any range formed by any of the preceding values, such as: from 0.001 to 2.2 liters, 0.01 to 2.0 liters, 0.05 to 1.8 liters, 0.1 to 1.6 liters, 0.15 to 1.4 liters, 0.2 to 1.2 liters, 0.25 to 1.0 liters, etc. A product volume can have any shape in any orientation. A product volume can be included in a container that has a structural support frame, and a product volume can be included in a container that does not have a structural support frame.

As used herein, when referring to a flexible container, the term "resting on a horizontal support surface" refers to the container resting directly on the horizontal support surface, without other support.

As used herein, the term "reinforcing layer" refers to a layer of a laminate of a flexible material, wherein the reinforcing layer is a material is configured to provide creep resistance, and when present in the laminate is the primary contributor providing creep resistance to the laminate. The reinforcing layer can further provide puncture resistance and ruggedness, and when present in the laminate is the primary contributor providing puncture resistance and ruggedness to the laminate . Examples of reinforcing layer materials include nylons, polyesters, polyethylene terephthalate (PET), polyethylene, oriented polyethylene, polypropylene, oriented polypropylene, polyamides, , co-polyesters, PEF, PETG, cyclic polyolefins, PBT, PLA, , ionomer, such as a sodium ionomer or zinc ionomer, cellulosic or cellulosic esters, PHA, PVC, thermoplastic starch, polyolefins such as HDPE, POM, PPS, liquid crystalline layers, PEK, PEEK, and homopolymer, copolymer, blends, combinations, laminates, microlayered, nanolayered, and coextrusions thereof.. The reinforcing layer can be bio-based, petro-based, and/or recycled or reground materials.

As used herein, the term "seal strength" refers to the strength of the seal between adjacent laminates, between adjacent major surfaces of a flexible material, or between two or more adjacent flexible materials formed using any kind of sealing method known in the art, including, for example, heat sealing (e.g. conductive sealing, impulse sealing, ultrasonic sealing, etc.), welding, crimping, bonding, and the like, and combinations of any of these. The seal strength between first and second laminates of a flexible material and/or a seal joining a sealable layer to itself in accordance with embodiments of the disclosure can be about 20 N/m to about 10,000 N/m, about 85 N/m to about 3500 N/m, and about 300 N/m to about 1250 N/m. Other suitable seal strengths include about 20, 25, 35, 45, 55, 65, 75, 85, 95, 100, 125, 150, 175, 200, 225, 250, 275, 300, 350, 400, 450, 500, 550, 600, 650, 700, 750, 800, 850, 900, 1000, 1250, 1500, 2000, 2500, 3000, 3500, 4000, 4500, 5000, 5500, 6000, 6500, 7000, 7500, 8000, 8500, 9000, and 10000 N/m, and any range formed by a combination of these values. Unless otherwise specified seal strengths disclosed herein are measured by ASTM F 88/F 88M - 09 with technique B (supported at 90 degrees) run at 200 mm/min in a tensile testing machine with specimens cut to 25.4 mm width. Samples may be joined together in a configuration as indicated as a fin seal or hot wire seal and sized accordingly. The seal strength should be taken from the initial plateau of force measured as the seal peel initiation begins. Seal widths are 10 mm and seals are produced at the conditions of temperature, pressure, and dwell time that provide maximum peel force for a particular method of sealing the two materials together as is known in the art. In one example, a pressure of about 2.5 bar, a dwell time of about 0.5 seconds and a temperature of 85-135 °C can be used to maximize a seal created by heat sealing two sealable materials together Sealable layers having high content of LLDPE (Zeigler-Natta), for example, at least 90 wt%, can form seals having high seal strengths, for example, at the upper end of the above-described range for seal strength. Other possible sealant layers include metallocene LLDPE (mLLDPE), Barex, Ionomers, HDPE, which generally have lower seal strengths as compared to LLDPE. The seal strength can be tailored by selection of the sealable layers and/or a content of LLDPE in the sealable layers.

As used herein, the term "sealable layer" refers to a layer of a laminate of a flexible material, wherein the sealable layer is a material that is configured to be sealed to itself or another sealable layer using any kind of sealing method known in the art, including, for example, heat sealing (e.g. conductive sealing, impulse sealing, ultrasonic sealing, etc.), welding, crimping, bonding, and the like, and combinations of any of these. Exemplary sealable layers include, but are not limited, low density polyethylene (LDPE), linear low density polyethylene (LLDPE), LLDPE copolymers with any one or more of butene, hexene and octene, metallocene LLDPE (mPE) or metallocene plastomers, metallocene elastomers, high density polyethylene (HDPE), rubber modified LDPE, rubber modified LLDPE, acid copolymers, polysytyrene, cyclic polyolefins, ethylene vinyl acetate (EVA), ethylene acrylic acid (EAA), ionomers, terpolymers, Barex, polypropylene, bimodal resins, any of which may be from either homopolymers or copolymers, and blends, combinations, laminates, microlayered, nanolayered, and coextrusions thereof.. Polyolefins could be manufactured using Ziegler-Natta catalysts, Chromium catalysts, metallocene based catalysts, single site catalysts and other types of catalysts. The materials listed could be bio-based, petro-based and recycled/reground. Resins could be foamed.

As used herein, the term "sealed," when referring to a product volume, refers to a state of the product volume wherein fluent products within the product volume are prevented from escaping the product volume (e.g. by one or more materials that form a barrier, and by a seal), and the product volume is hermetically sealed.

As used herein, when referring to a flexible container, the term "self-supporting" refers to a container that includes a product volume and a structural support frame, wherein, when the container is resting on a horizontal support surface, in at least one orientation, the structural support frame is configured to prevent the container from collapsing and to give the container an overall height that is significantly greater than the combined thickness of the materials that form the container, even when the product volume is unfilled. Any of the embodiments of flexible containers, disclosed herein, can be configured to be self-supporting. As examples, self-supporting flexible containers of the present disclosure can be used to form pillow packs, pouches, doy packs, sachets, tubes, boxes, tubs, cartons, flow wraps, gusseted packs, jugs, bottles, jars, bags in boxes, trays, hanging packs, blister packs, or any other forms known in the art.

As used herein, when referring to a flexible container, the term "short shelf life" refers to a flexible container made of materials suitable for use as packaging for products that are intended to have a duration from filling (i.e., from introduction of product into the product volume)-to-commencement of consumption of less than six months. Other suitable durations from filling to commencement of consumption for flexible containers considered within the scope of the intended meaning of "short shelf life" include less than five months, less than four months, less than three months, less than two months, less than one month, less than three weeks, less than two weeks, less than one week, less than five days, and less than three days.

As used herein, when referring to a flexible container, the term "single use" refers to a closed container which, after being opened by an end user, is not configured to be reclosed. Any of the embodiments of flexible containers, disclosed herein, can be configured to be single use.

As used herein, when referring to a product volume, the term "single dose" refers to a product volume that is sized to contain a particular amount of product that is about equal to one unit of typical consumption, application, or use by an end user. Any of the embodiments of flexible containers, disclosed herein, can be configured to have one or more single dose product volumes. A container with only one product volume, which is a single dose product volume, is referred to herein as a "single dose container."

As used herein, when referring to a flexible container, the terms "stand up," "stands up," "standing up", "stand upright", "stands upright", and "standing upright" refer to a particular orientation of a self-supporting flexible container, when the container is resting on a horizontal support surface. This standing upright orientation can be determined from the structural features of the container and/or indicia on the container. In a first determining test, if the flexible container has a clearly defined base structure that is configured to be used on the bottom of the container, then the container is determined to be standing upright when this base structure is resting on the horizontal support surface. If the first test cannot determine the standing upright orientation, then, in a second determining test, the container is determined to be standing upright when the container is oriented to rest on the horizontal support surface such that the indicia on the flexible container are best positioned in an upright orientation. If the second test cannot determine the standing upright orientation, then, in a third determining test, the container is determined to be standing upright when the container is oriented to rest on the horizontal support surface such that the container has the largest overall height. If the third test cannot determine the standing upright orientation, then, in a fourth determining test, the container is determined to be standing upright when the container is oriented to rest on the horizontal support surface such that the container has the largest height area ratio. If the fourth test cannot determine the standing upright orientation, then, any orientation used in the fourth determining test can be considered to be a standing upright orientation.

As used herein, when referring to a flexible container, the term "stand up container" refers to a self-supporting container, wherein, when the container (with all of its product volume(s) filled 100% with water) is standing up, the container has a height area ratio from 0.4 to 1.5 cm⁻¹. Any of the embodiments of flexible containers, disclosed herein, can be configured to be stand up containers.

As used herein, when referring to a flexible container, the term "structural support frame" refers to a rigid structure formed of one or more structural support members, joined together, around one or more sizable empty spaces and/or one or more nonstructural panels, and generally used as a major support for the product volume(s) in the flexible container and in making the container self-supporting and/or standing upright. In each of the embodiments disclosed herein, when a flexible container includes a structural support frame and one or more product volumes, the structural support frame is considered to be supporting the product volumes of the container, unless otherwise indicated.

As used herein, when referring to a flexible container, the term "structural support member" refers to a rigid, physical structure, which includes one or more expanded structural support volumes, and which is configured to be used in a structural support frame, to carry one or more loads (from the flexible container) across a span. A structure that does not include at least one expanded structural support volume, is not considered to be a structural support member, as used herein.

A structural support member has two defined ends, a middle between the two ends, and an overall length from its one end to its other end. A structural support member can have one or more cross-sectional areas, each of which has an overall width that is less than its overall length.

A structural support member can be configured in various forms. A structural support member can include one, two, three, four, five, six or more structural support volumes, arranged in various ways. For example, a structural support member can be formed by a single structural support volume. As another example, a structural support member can be formed by a plurality of structural support volumes, disposed end to end, in series, wherein, in various embodiments, part, parts, or about all, or approximately all, or substantially all, or nearly all, or all of some or all of the structural support volumes can be partly or fully in contact with each other, partly or fully directly connected to each other, and/or partly or fully joined to each other. As a further example, a structural support member can be formed by a plurality of support volumes disposed side by side, in parallel, wherein, in various embodiments, part, parts, or about all, or approximately all, or substantially all, or nearly all, or all of some or all of the structural support volumes can be partly or fully in contact with each other, partly or fully directly connected to each other, and/or partly or fully joined to each other.

In some embodiments, a structural support member can include a number of different kinds of elements. For example, a structural support member can include one or more structural support volumes along with one or more mechanical reinforcing elements (e.g. braces, collars, connectors, joints, ribs, etc.), which can be made from one or more rigid (e.g. solid) materials.

Structural support members can have various shapes and sizes. Part, parts, or about all, or approximately all, or substantially all, or nearly all, or all of a structural support member can be straight, curved, angled, segmented, or other shapes, or combinations of any of these shapes. Part, parts, or about all, or approximately all, or substantially all, or nearly all, or all of a structural support member can have any suitable cross-sectional shape, such as circular, oval, square, triangular, star-shaped, or modified versions of these shapes, or other shapes, or combinations of any of these shapes. A structural support member can have an overall shape that is tubular, or convex, or concave, along part, parts, or about all, or approximately all, or substantially all, or nearly all, or all of a length. A structural support member can have any suitable cross-sectional area, any suitable overall width, and any suitable overall length. A structural support member can be substantially uniform along part, parts, or about all, or approximately all, or substantially all, or nearly all, or all of its length, or can vary, in any way described herein, along part, parts, or about all, or approximately all, or substantially all, or nearly all, or all of its length. For example, a cross-sectional area of a structural support member can increase or decrease along part, parts, or all of its length. Part, parts, or all of any of the embodiments of structural support members of the present disclosure, can be configured according to any embodiment disclosed herein, including any workable combination of structures, features, materials, and/or connections from any number of any of the embodiments disclosed herein.

As used herein, when referring to a flexible container, the term "structural support volume" refers to a fillable space made from one or more flexible materials, wherein the space is configured to be at least partially filled with one or more expansion materials, which create tension in the one or more flexible materials, and form an expanded structural support volume. One or more expanded structural support volumes can be configured to be included in a structural support member. A structural support volume is distinct from structures configured in other ways, such as: structures without a fillable space (e.g. an open space), structures made from inflexible (e.g. solid) materials, structures with spaces that are not configured to be filled with an expansion material (e.g. an unattached area between adjacent layers in a multi-layer panel), and structures with flexible materials that are not configured to be expanded by an expansion material (e.g. a space in a structure that is configured to be a non-structural panel). Notably, in various embodiments, any spaces defined by the unattached area between adjacent layers in a multi-layer panel may contain any gas or vapor composition of single or multiple chemistries including air, nitrogen or a gas composition comprising, as examples, greater than 80% nitrogen, greater than 20% carbon dioxide, greater than 10% of a noble gas, less than 15% oxygen; the gas or vapor contained in such spaces may include water vapor at a relative humidity of 0-100%, or any integer percentage value in this range. Throughout the present disclosure the terms "structural support volume" and "expandable chamber" are used interchangeably and are intended to have the same meaning.

In some embodiments, a structural support frame can include a plurality of structural support volumes, wherein some of or all of the structural support volumes are in fluid communication with each other. In other embodiments, a structural support frame can include a plurality of structural support volumes, wherein some of or none of the structural support volumes are in fluid communication with each other. Any of the structural support frames of the present disclosure can be configured to have any kind of fluid communication disclosed herein.

As used herein, the term "substantially" modifies a particular value, by referring to a range equal to the particular value, plus or minus ten percent (+/- 10%). For any of the embodiments of flexible containers, disclosed herein, any disclosure of a particular value, can, in various alternate embodiments, also be understood as a disclosure of a range equal to approximately that particular value (i.e. +/- 10%).

As used herein, when referring to a flexible container, the term "temporarily reusable" refers to a container which, after dispensing a product to an end user, is configured to be refilled with an additional amount of a product, up to ten times, before the container experiences a failure that renders it unsuitable for receiving, containing, or dispensing the product. As used herein, the term temporarily reusable can be further limited by modifying the number of times that the container can be refilled before the container experiences such a failure. For any of the embodiments of flexible containers, disclosed herein, a reference to temporarily reusable can, in various alternate embodiments, refer to temporarily reusable by refilling up to eight times before failure, by refilling up to six times before failure, by refilling up to four times before failure, or by refilling up to two times before failure, or any integer value for refills between one and ten times before failure. Any of the embodiments of flexible containers, disclosed herein, can be configured to be temporarily reusable, for the number of refills disclosed herein.

As used herein, the term "thickness" refers to a measurement that is parallel to a third centerline of a container, when the container is standing upright on a horizontal support surface, as described herein. A thickness may also be referred to as a "depth."

As used herein, when referring to a flexible container, the term "top" refers to the portion of the container that is located in the uppermost 20% of the overall height of the container, that is, from 80-100% of the overall height of the container. As used herein, the term top can be further limited by modifying the term top with a particular percentage value, which is less than 20%. For any of the embodiments of flexible containers, disclosed herein, a reference to the top of the container can, in various alternate embodiments, refer to the top 15% (i.e. from 85-100% of the overall height), the top 10% (i.e. from 90-100% of the overall height), or the top 5% (i.e. from 95-100% of the overall height), or any integer value for percentage between 0% and 20%.

As used herein, when referring to a flexible container, the term "unexpanded" refers to the state of one or more materials that are configured to be formed into a structural support volume, before the structural support volume is made rigid by an expansion material.

As used herein, when referring to a product volume of a flexible container, the term "unfilled" refers to the state of the product volume when it does not contain a fluent product.

As used herein, when referring to a flexible container, the term "unformed" refers to the state of one or more materials that are configured to be formed into a product volume, before the product volume is provided with its defined three-dimensional space. For example, an article of manufacture could be a container blank with an unformed product volume, wherein sheets of flexible material, with portions joined together, are laying flat against each other.

Flexible containers, as described herein, may be used across a variety of industries for a variety of products. For example, any embodiment of flexible containers, as described herein, may be used across the consumer products industry, including any of the following products, any of which can take any workable fluent product form described herein or known in the art: baby care products (e.g. soaps, shampoos, and lotions); beauty care products for cleaning, treating, beautifying, and/or decorating human or animal hair (e.g. hair shampoos, hair conditioners, hair dyes, hair colorants, hair repair products, hair growth products, hair removal products, hair minimization products, etc.); beauty care products for cleaning, treating, beautifying, and/or decorating human or animal skin (e.g. soaps, body washes, body scrubs, facial cleansers, astringents, sunscreens, sun block lotions, lip balms, cosmetics, skin conditioners, cold creams, skin moisturizers, antiperspirants, deodorants, etc.); beauty care products for cleaning, treating, beautifying, and/or decorating human or animal nails (e.g. nail polishes, nail polish removers, etc.); grooming products for cleaning, treating, beautifying, and/or decorating human facial hair (e.g. shaving products, pre-shaving products, after shaving products, etc.); health care products for cleaning, treating, beautifying, and/or decorating human or animal oral cavities (e.g. toothpaste, mouthwash, breath freshening products, anti-plaque products, tooth whitening products, etc.); health care products for treating human and/or animal health conditions (e.g. medicines, medicaments, pharmaceuticals, vitamins, nutraceuticals, nutrient supplements (for calcium, fiber, etc.), cough treatment products, cold remedies, lozenges, treatments for respiratory and/or allergy conditions, pain relievers, sleep aids, gastrointestinal treatment products (for heartburn, upset stomach, diarrhea, irritable bowel syndrome, etc.), purified water, treated water, etc.); pet care products for feeding and/or caring for animals (e.g. pet food, pet vitamins, pet medicines, pet chews, pet treats, etc.); fabric care products for cleaning, conditioning, refreshing and/or treating fabrics, clothes and/or laundry (e.g. laundry detergents, fabric conditioners, fabric dyes, fabric bleaches, etc.); dish care products for home, commercial, and/or industrial use (e.g. dish soaps and rinse aids for hand-washing and/or machine washing); cleaning and/or deodorizing products for home, commercial, and/or industrial use (e.g. soft surface cleaners, hard surface cleaners, glass cleaners, ceramic tile cleaners, carpet cleaner, wood cleaners, multi-surface cleaners, surface disinfectants, kitchen cleaners, bath cleaners (e.g. sink, toilet, tub, and/or shower cleaners), appliance cleaning products, appliance treatment products, car cleaning products, car deodorizing products, air cleaners, air deodorizers, air disinfectants, etc.), and the like.

As further examples, any embodiment of flexible containers, as described herein, may be used across additional areas of home, commercial, and/or industrial, building and/or grounds, construction and/or maintenance, including any of the following products, any of which can take any workable fluent product form (e.g. liquid, granular, powdered, etc.) described herein or known in the art: products for establishing, maintaining, modifying, treating, and/or improving lawns, gardens, and/or grounds (e.g. grass seeds, vegetable seeds, plant seeds, birdseed, other kinds of seeds, plant food, fertilizer, soil nutrients and/or soil conditions (e.g. nitrogen, phosphate, potash, lime, etc.), soil sterilants, herbicides, weed preventers, pesticides, pest repellents, insecticides, insect repellents, etc.); products for landscaping use (e.g. topsoils, potting soils, general use soils, mulches, wood chips, tree bark nuggets, sands, natural stones and/or rocks (e.g. decorative stones, pea gravel, gravel, etc.) of all kinds, man-made compositions based on stones and rocks (e.g. paver bases, etc.)); products for starting and/or fueling fires in grills, fire pits, fireplaces, etc. (e.g. fire logs, fire starting nuggets, charcoal, lighter fluid, matches, etc.); lighting products (e.g. light bulbs and light tubes or all kinds including: incandescents, compact fluorescents, fluorescents, halogens, light emitting diodes, of all sizes, shapes, and uses); chemical products for construction, maintenance, remodeling, and/or decorating (e.g. concretes, cements, mortars, mix colorants, concrete curers/sealants, concrete protectants, grouts, blacktop sealants, crack filler/repair products, spackles, joint compounds, primers, paints, stains, topcoats, sealants, caulks, adhesives, epoxies, drain cleaning/declogging products, septic treatment products, etc.); chemical products (e.g. thinners, solvents, and strippers/removers including alcohols, mineral spirits, turpentines, linseed oils, etc.); water treatment products (e.g. water softening products such as salts, bacteriostats, fungicides, etc.); fasteners of all kinds (e.g. screws, bolts, nuts, washers, nails, staples, tacks, hangers, pins, pegs, rivets, clips, rings, and the like, for use with/in/on wood, metal, plastic, concrete, concrete, etc.); and the like.

As further examples, any embodiment of flexible containers, as described herein, may be used across the food and beverage industry, including any of the following products, any of which can take any workable fluent product form described herein or known in the art: foods such as basic ingredients (e.g. grains such as rice, wheat, corn, beans, and derivative ingredients made from any of these, as well as nuts, seeds, and legumes, etc.), cooking ingredients (e.g. sugar, spices such as salt and pepper, cooking oils, vinegars, tomato pastes, natural and artificial sweeteners, flavorings, seasonings, etc.), baking ingredients (e.g. baking powders, starches, shortenings, syrups, food colorings, fillings, gelatins, chocolate chips and other kinds of chips, frostings, sprinkles, toppings, etc.), dairy foods (e.g. creams, yogurts, sour creams, wheys, caseins, etc.), spreads (e.g. jams, jellies, etc.), sauces (e.g. barbecue sauces, salad dressings, tomato sauces, etc.), condiments (e.g. ketchups, mustards, relishes, mayonnaises, etc.), processed foods (noodles and pastas, dry cereals, cereal mixes, premade mixes, snack chips and snacks and snack mixes of all kinds, pretzels, crackers, cookies, candies, chocolates of all kinds, marshmallows, puddings, etc.); beverages such as water, milks, juices, flavored and/or carbonated beverages (e.g. soda), sports drinks, coffees, teas, spirits, alcoholic beverages (e.g. beer, wine, etc.), etc.; and ingredients for making or mixing into beverages (e.g. coffee beans, ground coffees, cocoas, tea leaves, dehydrated beverages, powders for making beverages, natural and artificial sweeteners, flavorings, etc.). Further, prepared foods, fruits, vegetables, soups, meats, pastas, microwavable and or frozen foods as well as produce, eggs, milk, and other fresh foods. Any of the embodiments of flexible containers disclosed herein can also be sterilized (e.g. by treatment with ultraviolet light or peroxide-based compositions), to make the containers safe for use in storing food and/or beverage. In any embodiment, the containers can be configured to be suitable for retort processes.

As still further examples, any embodiment of flexible containers, as described herein, may be used across the medical industry, in the areas of medicines, medical devices, and medical treatment, including uses for receiving, containing, storing and/or dispensing, any of the following fluent products, in any form known in the art: bodily fluids from humans and/or animals (e.g. amniotic fluid, aqueous humour, vitreous humour, bile, blood, blood plasma, blood serum, breast milk, cerebrospinal fluid, cerumen (earwax), chyle, chime, endolymph (and perilymph), ejaculate, runny feces, gastric acid, gastric juice, lymph, mucus (including nasal drainage and phlegm), pericardial fluid, peritoneal fluid, pleural fluid, pus, rheum, saliva, sebum (skin oil), semen, sputum, synovial fluid, tears, sweat, vaginal secretion, vomit, urine, etc.); fluids for intravenous therapy to human or animal bodies (e.g. volume expanders (e.g. crystalloids and colloids), blood-based products including blood substitutes, buffer solutions, liquid-based medications (which can include pharmaceuticals), parenteral nutritional formulas (e.g. for intravenous feeding, wherein such formulas can include salts, glucose, amino acids, lipids, supplements, nutrients, and/or vitamins); other medicinal fluids for administering to human or animal bodies (e.g. medicines, medicaments, nutrients, nutraceuticals, pharmaceuticals, etc.) by any suitable method of administration (e.g. orally (in solid, liquid, or pill form), topically, intranasally, by inhalation, or rectally. Any of the embodiments of flexible containers disclosed herein can also be sterilized (e.g. by treatment with ultraviolet light or peroxide-based compositions or through an autoclave or retort process), to make the containers safe for use in sterile medical environments.

As even further examples, any embodiment of flexible containers, as described herein, may be used across any and all industries that use internal combustion engines (such as the transportation industry, the power equipment industry, the power generation industry, etc.), including products for vehicles such as cars, trucks, automobiles, boats, aircraft, etc., with such containers useful for receiving, containing, storing, and/or dispensing, any of the following fluent products, in any form known in the art: engine oil, engine oil additives, fuel additives, brake fluids, transmission fluids, engine coolants, power steering fluids, windshield wiper fluids, products for vehicle care (e.g. for body, tires, wheels, windows, trims, upholsteries, etc.), as well as other fluids configured to clean, penetrate, degrease, lubricate, and/or protect one or more parts of any and all kinds of engines, power equipment, and/or transportation vehicles.

Any embodiment of flexible containers, as described herein, can also be used for receiving, containing, storing, and/or dispensing, non-fluent products, in any of the following categories: Baby Care products, including disposable wearable absorbent articles, diapers, training pants, infant and toddler care wipes, etc. and the like; Beauty Care products including applicators for applying compositions to human or animal hair, skin, and/or nails, etc. and the like; Home Care products including wipes and scrubbers for all kinds of cleaning applications and the like; Family Care products including wet or dry bath tissue, facial tissue, disposable handkerchiefs, disposable towels, wipes, etc. and the like; Feminine Care products including catamenial pads, incontinence pads, interlabial pads, panty liners, pessaries, sanitary napkins, tampons, tampon applicators, wipes, etc. and the like; Health Care products including oral care products such as oral cleaning devices, dental floss, flossing devices, toothbrushes, etc. and the like; Pet Care products including grooming aids, pet training aids, pet devices, pet toys, etc. and the like; Portable Power products including electrochemical cells, batteries, battery current interrupters, battery testers, battery chargers, battery charge monitoring equipment, battery charge/discharge rate controlling equipment, "smart" battery electronics, flashlights, etc. and the like; Small Appliance Products including hair removal appliances (including, e.g. electric foil shavers for men and women, charging and/or cleaning stations, electric hair trimmers, electric beard trimmers, electric epilator devices, cleaning fluid cartridges, shaving conditioner cartridges, shaving foils, and cutter blocks); oral care appliances (including, e.g., electric toothbrushes with accumulator or battery, refill brushheads, interdental cleaners, tongue cleaners, charging stations, electric oral irrigators, and irrigator clip on jets); small electric household appliances (including, e.g., coffee makers, water kettles, handblenders, handmixers, food processors, steam cookers, juicers, citrus presses, toasters, coffee or meat grinders, vacuum pumps, irons, steam pressure stations for irons and in general non electric attachments therefore, hair care appliances (including, e.g., electric hair driers, hairstylers, hair curlers, hair straighteners, cordless gas heated styler/irons and gas cartridges therefore, and air filter attachments); personal diagnostic appliances (including, e.g., blood pressure monitors, ear thermometers, and lensfilters therefore); clock appliances and watch appliances (including, e.g., alarm clocks, travel alarm clocks combined with radios, wall clocks, wristwatches, and pocket calculators), etc. and the like.

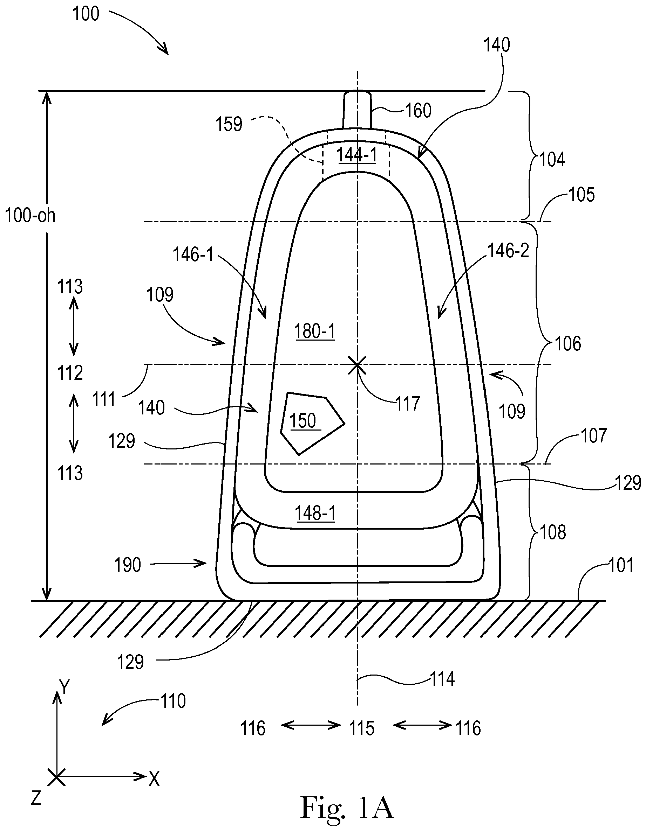

Figures 1A-1D illustrates various views of an embodiment of a stand up flexible container 100. Figure 1A illustrates a front view of the container 100. The container 100 is standing upright on a horizontal support surface 101.

In Figure 1A, a coordinate system 110, provides lines of reference for referring to directions in the figure. The coordinate system 110 is a three-dimensional Cartesian coordinate system with an X-axis, a Y-axis, and a Z-axis, wherein each axis is perpendicular to the other axes, and any two of the axes define a plane. The X-axis and the Z-axis are parallel with the horizontal support surface 101 and the Y-axis is perpendicular to the horizontal support surface 101.

Figure 1A also includes other lines of reference, for referring to directions and locations with respect to the container 100. A lateral centerline 111 runs parallel to the X-axis. An XY plane at the lateral centerline 111 separates the container 100 into a front half and a back half. An XZ plane at the lateral centerline 111 separates the container 100 into an upper half and a lower half. A longitudinal centerline 114 runs parallel to the Y-axis. A YZ plane at the longitudinal centerline 114 separates the container 100 into a left half and a right half. A third centerline 117 runs parallel to the Z-axis. The lateral centerline 111, the longitudinal centerline 114, and the third centerline 117 all intersect at a center of the container 100.

A disposition with respect to the lateral centerline 111 defines what is longitudinally inboard 112 and longitudinally outboard 113. When a first location is nearer to the lateral centerline 111 than a second location, the first location is considered to be disposed longitudinally inboard 112 to the second location. And, the second location is considered to be disposed longitudinally outboard 113 from the first location. The term lateral refers to a direction, orientation, or measurement that is parallel to the lateral centerline 111. A lateral orientation may also be referred to a horizontal orientation, and a lateral measurement may also be referred to as a width.

A disposition with respect to the longitudinal centerline 114 defines what is laterally inboard 115 and laterally outboard 116. When a first location is nearer to the longitudinal centerline 114 than a second location, the first location is considered to be disposed laterally inboard 115 to the second location. And, the second location is considered to be disposed laterally outboard 116 from the first location. The term longitudinal refers to a direction, orientation, or measurement that is parallel to the longitudinal centerline 114. A longitudinal orientation may also be referred to a vertical orientation.

A longitudinal direction, orientation, or measurement may also be expressed in relation to a horizontal support surface for the container 100. When a first location is nearer to the support surface than a second location, the first location can be considered to be disposed lower than, below, beneath, or under the second location. And, the second location can be considered to be disposed higher than, above, or upward from the first location. A longitudinal measurement may also be referred to as a height, measured above the horizontal support surface 100.

A measurement that is made parallel to the third centerline 117 is referred to a thickness or depth. A disposition in the direction of the third centerline 117 and toward a front 102-1 of the container is referred to as forward 118 or in front of. A disposition in the direction of the third centerline 117 and toward a back 102-2 of the container is referred to as backward 119 or behind.

These terms for direction, orientation, measurement, and disposition, as described above, are used for all of the embodiments of the present disclosure, whether or not a support surface, reference line, or coordinate system is shown in a figure.

The container 100 includes a top 104, a middle 106, and a bottom 108, the front 102-1, the back 102-2, and left and right sides 109. The top 104 is separated from the middle 106 by a reference plane 105, which is parallel to the XZ plane. The middle 106 is separated from the bottom 108 by a reference plane 107, which is also parallel to the XZ plane. The container 100 has an overall height of 100-oh. In the embodiment of Figure 1A, the front 102-1 and the back 102-2 of the container are joined together at a seal 129, which extends around the outer periphery of the container 100, across the top 104, down the side 109, and then, at the bottom of each side 109, splits outward to follow the front and back portions of the base 190, around their outer extents.

The container 100 includes a structural support frame 140, a product volume 150, a dispenser 160, panels 180-1 and 180-2, and a base structure 190. A portion of panel 180-1 is illustrated as broken away, in order to show the product volume 150. The product volume 150 is configured to contain one or more fluent products. The dispenser 160 allows the container 100 to dispense these fluent product(s) from the product volume 150 through a flow channel 159 then through the dispenser 160, to the environment outside of the container 100. In the embodiment of Figures 1A-1D, the dispenser 160 is disposed in the center of the uppermost part of the top 104, however, in various alternate embodiments, the dispenser 160 can be disposed anywhere else on the top 140, middle 106, or bottom 108, including anywhere on either of the sides 109, on either of the panels 180-1 and 180-2, and on any part of the base 190 of the container 100. The structural support frame 140 supports the mass of fluent product(s) in the product volume 150, and makes the container 100 stand upright. The panels 180-1 and 180-2 are relatively flat surfaces, overlaying the product volume 150, and are suitable for displaying any kind of indicia. However, in various embodiments, part, parts, or about all, or approximately all, or substantially all, or nearly all, or all of either or both of the panels 180-1 and 180-2 can include one or more curved surfaces. The base structure 190 supports the structural support frame 140 and provides stability to the container 100 as it stands upright.

The structural support frame 140 is formed by a plurality of structural support members. The structural support frame 140 includes top structural support members 144-1 and 144-2, middle structural support members 146-1, 146-2, 146-3, and 146-4, as well as bottom structural support members 148-1 and 148-2.

The top structural support members 144-1 and 144-2 are disposed on the upper part of the top 104 of the container 100, with the top structural support member 144-1 disposed in the front 102-1 and the top structural support member 144-2 disposed in the back 102-2, behind the top structural support member 144-1. The top structural support members 144-1 and 144-2 are adjacent to each other and can be in contact with each other along the laterally outboard portions of their lengths. In various embodiments, the top structural support members 144-1 and 144-2 can be in contact with each other at one or more relatively smaller locations and/or at one or more relatively larger locations, along part, or parts, or about all, or approximately all, or substantially all, or nearly all, or all of their overall lengths, so long as there is a flow channel 159 between the top structural support members 144-1 and 144-2, which allows the container 100 to dispense fluent product(s) from the product volume 150 through the flow channel 159 then through the dispenser 160. The top structural support members 144-1 and 144-2 are not directly connected to each other. However, in various alternate embodiments, the top structural support members 144-1 and 144-2 can be directly connected and/or joined together along part, or parts, or about all, or approximately all, or substantially all, or nearly all, or all of their overall lengths.

The top structural support members 144-1 and 144-2 are disposed substantially above the product volume 150. Overall, each of the top structural support members 144-1 and 144-2 is oriented about horizontally, but with its ends curved slightly downward. And, overall each of the top structural support members 144-1 and 144-2 has a cross-sectional area that is substantially uniform along its length; however the cross-sectional area at their ends are slightly larger than the cross-sectional area in their middles.

The middle structural support members 146-1, 146-2, 146-3, and 146-4 are disposed on the left and right sides 109, from the top 104, through the middle 106, to the bottom 108. The middle structural support member 146-1 is disposed in the front 102-1, on the left side 109; the middle structural support member 146-4 is disposed in the back 102-2, on the left side 109, behind the middle structural support member 146-1. The middle structural support members 146-1 and 146-4 are adjacent to each other and can be in contact with each other along substantially all of their lengths. In various embodiments, the middle structural support members 146-1 and 146-4 can be in contact with each other at one or more relatively smaller locations and/or at one or more relatively larger locations, along part, or parts, or about all, or approximately all, or substantially all, or nearly all, or all of their overall lengths. The middle structural support members 146-1 and 146-4 are not directly connected to each other. However, in various alternate embodiments, the middle structural support members 146-1 and 146-4 can be directly connected and/or joined together along part, or parts, or about all, or approximately all, or substantially all, or nearly all, or all of their overall lengths.

The middle structural support member 146-2 is disposed in the front 102-1, on the right side 109; the middle structural support member 146-3 is disposed in the back 102-2, on the right side 109, behind the middle structural support member 146-2. The middle structural support members 146-2 and 146-3 are adjacent to each other and can be in contact with each other along substantially all of their lengths. In various embodiments, the middle structural support members 146-2 and 146-3 can be in contact with each other at one or more relatively smaller locations and/or at one or more relatively larger locations, along part, or parts, or about all, or approximately all, or substantially all, or nearly all, or all of their overall lengths. The middle structural support members 146-2 and 146-3 are not directly connected to each other. However, in various alternate embodiments, the middle structural support members 146-2 and 146-3 can be directly connected and/or joined together along part, or parts, or about all, or approximately all, or substantially all, or nearly all, or all of their overall lengths.

The middle structural support members 146-1, 146-2, 146-3, and 146-4 are disposed substantially laterally outboard from the product volume 150. Overall, each of the middle structural support members 146-1, 146-2, 146-3, and 146-4 is oriented about vertically, but angled slightly, with its upper end laterally inboard to its lower end. And, overall each of the middle structural support members 146-1, 146-2, 146-3, and 146-4 has a cross-sectional area that changes along its length, increasing in size from its upper end to its lower end.

The bottom structural support members 148-1 and 148-2 are disposed on the bottom 108 of the container 100, with the bottom structural support member 148-1 disposed in the front 102-1 and the bottom structural support member 148-2 disposed in the back 102-2, behind the top structural support member 148-1. The bottom structural support members 148-1 and 148-2 are adjacent to each other and can be in contact with each other along substantially all of their lengths. In various embodiments, the bottom structural support members 148-1 and 148-2 can be in contact with each other at one or more relatively smaller locations and/or at one or more relatively larger locations, along part, or parts, or about all, or approximately all, or substantially all, or nearly all, or all of their overall lengths. The bottom structural support members 148-1 and 148-2 are not directly connected to each other. However, in various alternate embodiments, the bottom structural support members 148-1 and 148-2 can be directly connected and/or joined together along part, or parts, or about all, or approximately all, or substantially all, or nearly all, or all of their overall lengths.

The bottom structural support members 148-1 and 148-2 are disposed substantially below the product volume 150, but substantially above the base structure 190. Overall, each of the bottom structural support members 148-1 and 148-2 is oriented about horizontally, but with its ends curved slightly upward. And, overall each of the bottom structural support members 148-1 and 148-2 has a cross-sectional area that is substantially uniform along its length.

In the front portion of the structural support frame 140, the left end of the top structural support member 144-1 is joined to the upper end of the middle structural support member 146-1; the lower end of the middle structural support member 146-1 is joined to the left end of the bottom structural support member 148-1; the right end of the bottom structural support member 148-1 is joined to the lower end of the middle structural support member 146-2; and the upper end of the middle structural support member 146-2 is joined to the right end of the top structural support member 144-1. Similarly, in the back portion of the structural support frame 140, the left end of the top structural support member 144-2 is joined to the upper end of the middle structural support member 146-4; the lower end of the middle structural support member 146-4 is joined to the left end of the bottom structural support member 148-2; the right end of the bottom structural support member 148-2 is joined to the lower end of the middle structural support member 146-3; and the upper end of the middle structural support member 146-3 is joined to the right end of the top structural support member 144-2. In the structural support frame 140, the ends of the structural support members, which are joined together, are directly connected, all around the periphery of their walls. However, in various alternative embodiments, any of the structural support members 144-1, 144-2, 146-1, 146-2, 146-3, 146-4, 148-1, and 148-2 can be joined together in any way described herein or known in the art.

In alternative embodiments of the structural support frame 140, adjacent structural support members can be combined into a single structural support member, wherein the combined structural support member can effectively substitute for the adjacent structural support members, as their functions and connections are described herein. In other alternative embodiments of the structural support frame 140, one or more additional structural support members can be added to the structural support members in the structural support frame 140, wherein the expanded structural support frame can effectively substitute for the structural support frame 140, as its functions and connections are described herein. Also, in some alternative embodiments, a flexible container may not include a base structure.

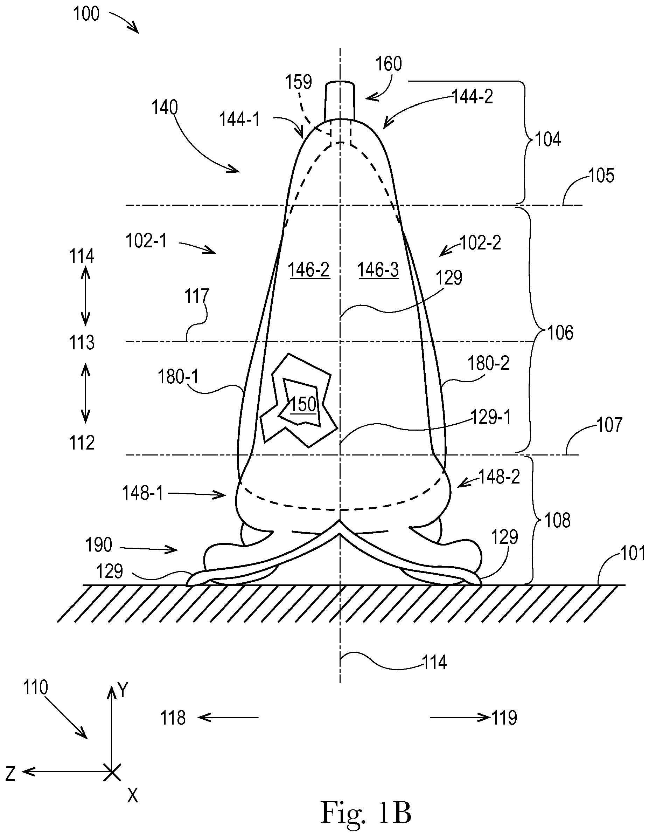

Figure 1B illustrates a side view of the stand up flexible container 100 of Figure 1A.

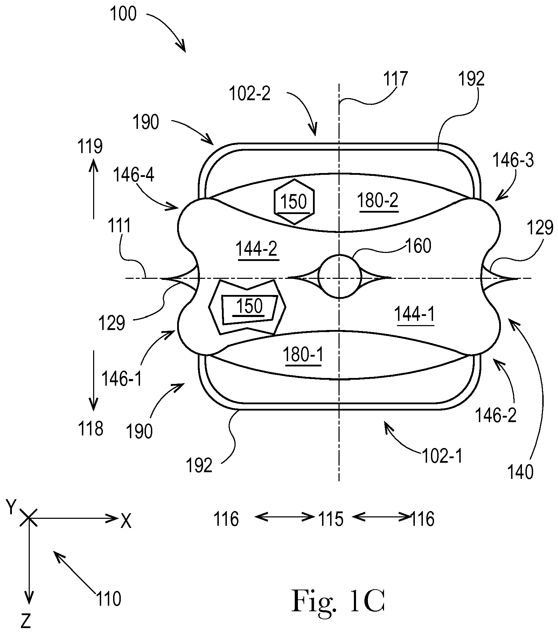

Figure 1C illustrates a top view of the stand up flexible container 100 of Figure 1A.

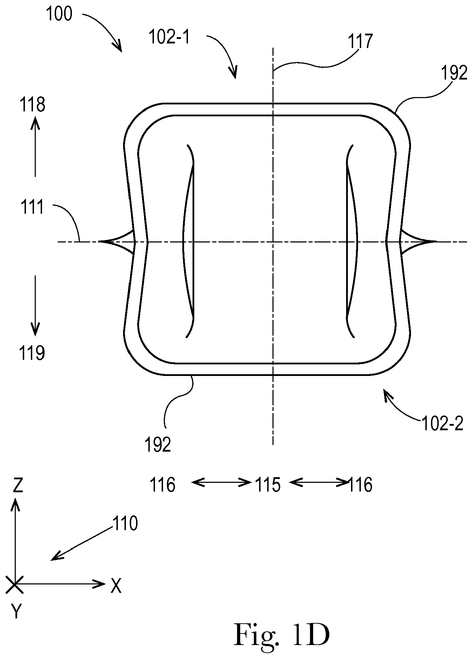

Figure 1D illustrates a bottom view of the stand up flexible container 100 of Figure 1A.

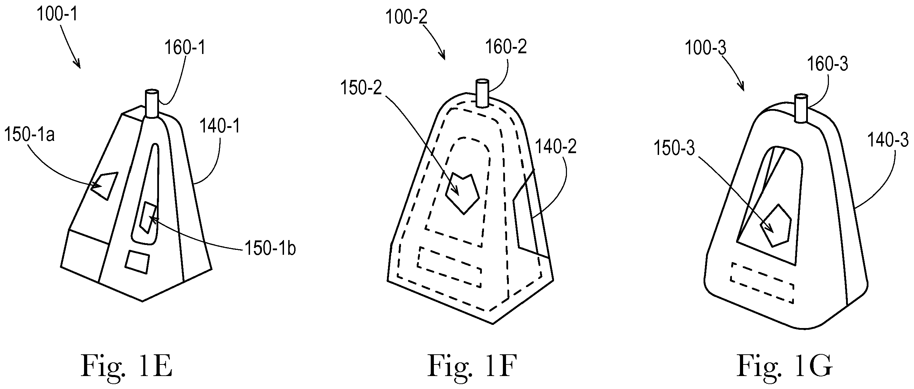

Figure 1E illustrates a perspective view of a container 100-1, which is an alternative embodiment of the stand up flexible container 100 of Figure 1A, including an asymmetric structural support frame 140-1, a first portion of the product volume 150-1b, a second portion of the product volume 150-1a, and a dispenser 160-1. The embodiment of Figure 1E is similar to the embodiment of Figure 1A with like-numbered terms configured in the same way, except that the frame 140-1 extends around about half of the container 100-1, directly supporting a first portion of the product volume 150-1b, which is disposed inside of the frame 140-1, and indirectly supporting a second portion of the product volume 150-1a, which is disposed outside of the frame 140-1. In various embodiments, any stand-up flexible container of the present disclosure can be modified in a similar way, such that: the frame extends around only part or parts of the container, and/or the frame is asymmetric with respect to one or more centerlines of the container, and/or part or parts of one or more product volumes of the container are disposed outside of the frame, and/or part or parts of one or more product volumes of the container are indirectly supported by the frame.

Figure 1F illustrates a perspective view of a container 100-2, which is an alternative embodiment of the stand up flexible container 100 of Figure 1A, including an internal structural support frame 140-2, a product volume 150-2, and a dispenser 160-2. The embodiment of Figure 1F is similar to the embodiment of Figure 1A with like-numbered terms configured in the same way, except that the frame 140-2 is internal to the product volume 150-2. In various embodiments, any stand-up flexible container of the present disclosure can be modified in a similar way, such that: part, parts, or all of the frame (including part, parts, or all of one or more of any structural support members that form the frame) are about, approximately, substantially, nearly, or completely enclosed by one or more product volumes.

Figure 1G illustrates a perspective view of a container 100-3, which is an alternative embodiment of the stand up flexible container 100 of Figure 1A, including an external structural support frame 140-3, a product volume 150-3, and a dispenser 160-3. The embodiment of Figure 1G is similar to the embodiment of Figure 1A with like-numbered terms configured in the same way, except that the product volume 150-3 is not integrally connected to the frame 140-3 (that is, not simultaneously made from the same web of flexible materials), but rather the product volume 150-3 is separately made and then joined to the frame 140-3. The product volume 150-3 can be joined to the frame in any convenient manner disclosed herein or known in the art. In the embodiment of Figure 1G, the product volume 150-3 is disposed within the frame 140-3, but the product volume 150-3 has a reduced size and a somewhat different shape, when compared with the product volume 150 of Figure 1A; however, these differences are made to illustrate the relationship between the product volume 150-3 and the frame 140-3, and are not required. In various embodiments, any stand-up flexible container of the present disclosure can be modified in a similar way, such that one or more the product volumes are not integrally connected to the frame.

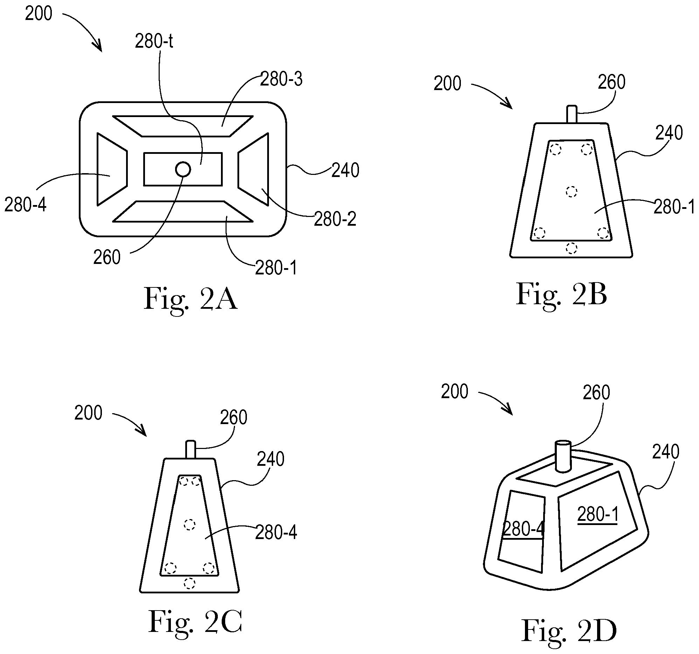

Figures 2A-8G illustrate embodiments of stand up flexible containers having various overall shapes. Any of the embodiments of Figures 2A-8G can be configured according to any of the embodiments disclosed herein, including the embodiments of Figures 1A-1G. Any of the elements (e.g. structural support frames, structural support members, panels, dispensers, etc.) of the embodiments of Figures 2A-8G, can be configured according to any of the embodiments disclosed herein. While each of the embodiments of Figures 2A-8G illustrates a container with one dispenser, in various embodiments, each container can include multiple dispensers, according to any embodiment described herein. Figures 2A-8G illustrate exemplary additional/alternate locations for dispenser with phantom line outlines. Part, parts, or about all, or approximately all, or substantially all, or nearly all, or all of each of the panels in the embodiments of Figures 2A-8G is suitable to display any kind of indicia. Each of the side panels in the embodiments of Figures 2A-8G is configured to be a nonstructural panel, overlaying product volume(s) disposed within the flexible container, however, in various embodiments, one or more of any kind of decorative or structural element (such as a rib, protruding from an outer surface) can be joined to part, parts, or about all, or approximately all, or substantially all, or nearly all, or all of any of these side panels. For clarity, not all structural details of these flexible containers are shown in Figures 2A-8G, however any of the embodiments of Figures 2A-8G can be configured to include any structure or feature for flexible containers, disclosed herein. For example, any of the embodiments of Figures 2A-8G can be configured to include any kind of base structure disclosed herein.

Figure 2A illustrates a front view of a stand up flexible container 200 having a structural support frame 240 that has an overall shape like a frustum. In the embodiment of Figure 2A, the frustum shape is based on a four-sided pyramid, however, in various embodiments, the frustum shape can be based on a pyramid with a different number of sides, or the frustum shape can be based on a cone. The support frame 240 is formed by structural support members disposed along the edges of the frustum shape and joined together at their ends. The structural support members define a rectangular shaped top panel 280-t, trapezoidal shaped side panels 280-1, 280-2, 280-3, and 280-4, and a rectangular shaped bottom panel (not shown). Each of the side panels 280-1, 280-2, 280-3, and 280-4 is about flat, however in various embodiments, part, parts, or about all, or approximately all, or substantially all, or nearly all, or all of any of the side panels can be approximately flat, substantially flat, nearly flat, or completely flat. The container 200 includes a dispenser 260, which is configured to dispense one or more fluent products from one or more product volumes disposed within the container 200. In the embodiment of Figure 2A, the dispenser 260 is disposed in the center of the top panel 280-t, however, in various alternate embodiments, the dispenser 260 can be disposed anywhere else on the top, sides, or bottom, of the container 200, according to any embodiment described or illustrated herein. Figure 2B illustrates a front view of the container 200 of Figure 2A, including exemplary additional/alternate locations for a dispenser, any of which can also apply to the back of the container. Figure 2C illustrates a side view of the container 200 of Figure 2A, including exemplary additional/alternate locations for a dispenser (shown as phantom lines), any of which can apply to either side of the container. Figure 2D illustrates an isometric view of the container 200 of Figure 2A.

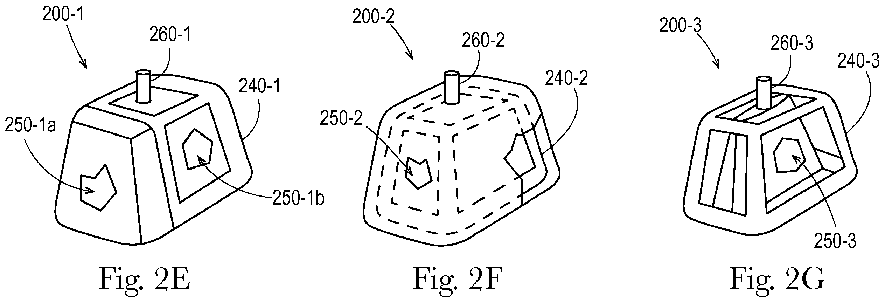

Figure 2E illustrates a perspective view of a container 200-1, which is an alternative embodiment of the stand up flexible container 200 of Figure 2A, including an asymmetric structural support frame 240-1, a first portion of the product volume 250-1b, a second portion of the product volume 250-1a, and a dispenser 260-1, configured in the same manner as the embodiment of Figure IE, except based on the container 200. Figure 2F illustrates a perspective view of a container 200-2, which is an alternative embodiment of the stand up flexible container 200 of Figure 2A, including an internal structural support frame 240-2, a product volume 250-2, and a dispenser 260-2, configured in the same manner as the embodiment of Figure IF, except based on the container 200. Figure 2G illustrates a perspective view of a container 200-3, which is an alternative embodiment of the stand up flexible container 200 of Figure 2A, including an external structural support frame 240-3, a non-integral product volume 250-3 joined to and disposed within the frame 240-3, and a dispenser 260-3, configured in the same manner as the embodiment of Figure 1G, except based on the container 200.

Figure 3A illustrates a front view of a stand up flexible container 300 having a structural support frame 340 that has an overall shape like a pyramid. In the embodiment of Figure 3A, the pyramid shape is based on a four-sided pyramid, however, in various embodiments, the pyramid shape can be based on a pyramid with a different number of sides. The support frame 340 is formed by structural support members disposed along the edges of the pyramid shape and joined together at their ends. The structural support members define triangular shaped side panels 380-1, 380-2, 380-3, and 380-4, and a square shaped bottom panel (not shown). Each of the side panels 380-1, 380-2, 380-3, and 380-4 is about flat, however in various embodiments, part, parts, or about all, or approximately all, or substantially all, or nearly all, or all of any of the side panels can be approximately flat, substantially flat, nearly flat, or completely flat. The container 300 includes a dispenser 360, which is configured to dispense one or more fluent products from one or more product volumes disposed within the container 300. In the embodiment of Figure 3A, the dispenser 360 is disposed at the apex of the pyramid shape, however, in various alternate embodiments, the dispenser 360 can be disposed anywhere else on the top, sides, or bottom, of the container 300. Figure 3B illustrates a front view of the container 300 of Figure 3A, including exemplary additional/alternate locations for a dispenser (shown as phantom lines), any of which can also apply to any side of the container. Figure 3C illustrates a side view of the container 300 of Figure 3A. Figure 3D illustrates an isometric view of the container 300 of Figure 3A.

Figure 3E illustrates a perspective view of a container 300-1, which is an alternative embodiment of the stand up flexible container 300 of Figure 3A, including an asymmetric structural support frame 340-1, a first portion of the product volume 350-1b, a second portion of the product volume 350-1a, and a dispenser 360-1, configured in the same manner as the embodiment of Figure IE, except based on the container 300. Figure 3F illustrates a perspective view of a container 300-2, which is an alternative embodiment of the stand up flexible container 300 of Figure 3A, including an internal structural support frame 340-2, a product volume 350-2, and a dispenser 360-2, configured in the same manner as the embodiment of Figure IF, except based on the container 300. Figure 3G illustrates a perspective view of a container 300-3, which is an alternative embodiment of the stand up flexible container 300 of Figure 3A, including an external structural support frame 340-3, a non-integral product volume 350-3 joined to and disposed within the frame 340-3, and a dispenser 360-3, configured in the same manner as the embodiment of Figure 1G, except based on the container 300.

Figure 4A illustrates a front view of a stand up flexible container 400 having a structural support frame 440 that has an overall shape like a trigonal prism. In the embodiment of Figure 4A, the prism shape is based on a triangle. The support frame 440 is formed by structural support members disposed along the edges of the prism shape and joined together at their ends. The structural support members define a triangular shaped top panel 480-t, rectangular shaped side panels 480-1, 480-2, and 480-3, and a triangular shaped bottom panel (not shown). Each of the side panels 480-1, 480-2, and 480-3 is about flat, however in various embodiments, part, parts, or about all, or approximately all, or substantially all, or nearly all, or all of the side panels can be approximately flat, substantially flat, nearly flat, or completely flat. The container 400 includes a dispenser 460, which is configured to dispense one or more fluent products from one or more product volumes disposed within the container 400. In the embodiment of Figure 4A, the dispenser 460 is disposed in the center of the top panel 480-t, however, in various alternate embodiments, the dispenser 460 can be disposed anywhere else on the top, sides, or bottom, of the container 400. Figure 4B illustrates a front view of the container 400 of Figure 4A, including exemplary additional/alternate locations for a dispenser (shown as phantom lines), any of which can also apply to any side of the container 400. Figure 4C illustrates a side view of the container 400 of Figure 4A. Figure 4D illustrates an isometric view of the container 400 of Figure 4A.

Figure 4E illustrates a perspective view of a container 400-1, which is an alternative embodiment of the stand up flexible container 400 of Figure 4A, including an asymmetric structural support frame 440-1, a first portion of the product volume 450-1b, a second portion of the product volume 450-1a, and a dispenser 460-1, configured in the same manner as the embodiment of Figure IE, except based on the container 400. Figure 4F illustrates a perspective view of a container 400-2, which is an alternative embodiment of the stand up flexible container 400 of Figure 4A, including an internal structural support frame 440-2, a product volume 450-2, and a dispenser 460-2, configured in the same manner as the embodiment of Figure IF, except based on the container 400. Figure 4G illustrates a perspective view of a container 400-3, which is an alternative embodiment of the stand up flexible container 400 of Figure 4A, including an external structural support frame 440-3, a non-integral product volume 450-3 joined to and disposed within the frame 440-3, and a dispenser 460-3, configured in the same manner as the embodiment of Figure 1G, except based on the container 400.

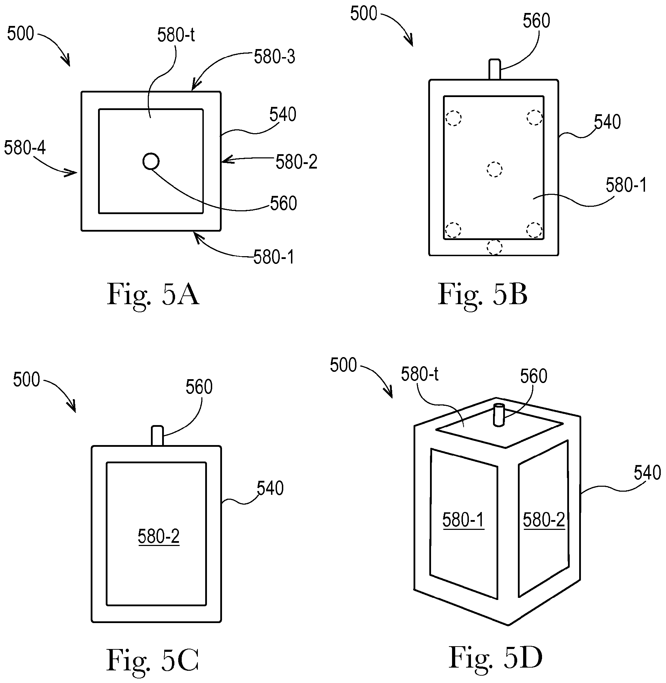

Figure 5A illustrates a front view of a stand up flexible container 500 having a structural support frame 540 that has an overall shape like a tetragonal prism. In the embodiment of Figure 5A, the prism shape is based on a square. The support frame 540 is formed by structural support members disposed along the edges of the prism shape and joined together at their ends. The structural support members define a square shaped top panel 580-t, rectangular shaped side panels 580-1, 580-2, 580-3, and 580-4, and a square shaped bottom panel (not shown). Each of the side panels 580-1, 580-2, 580-3, and 580-4 is about flat, however in various embodiments, part, parts, or about all, or approximately all, or substantially all, or nearly all, or all of any of the side panels can be approximately flat, substantially flat, nearly flat, or completely flat. The container 500 includes a dispenser 560, which is configured to dispense one or more fluent products from one or more product volumes disposed within the container 500. In the embodiment of Figure 5A, the dispenser 560 is disposed in the center of the top panel 580-t, however, in various alternate embodiments, the dispenser 560 can be disposed anywhere else on the top, sides, or bottom, of the container 500. Figure 5B illustrates a front view of the container 500 of Figure 5A, including exemplary additional/alternate locations for a dispenser (shown as phantom lines), any of which can also apply to any side of the container 500. Figure 5C illustrates a side view of the container 500 of Figure 5A. Figure 5D illustrates an isometric view of the container 500 of Figure 5A.

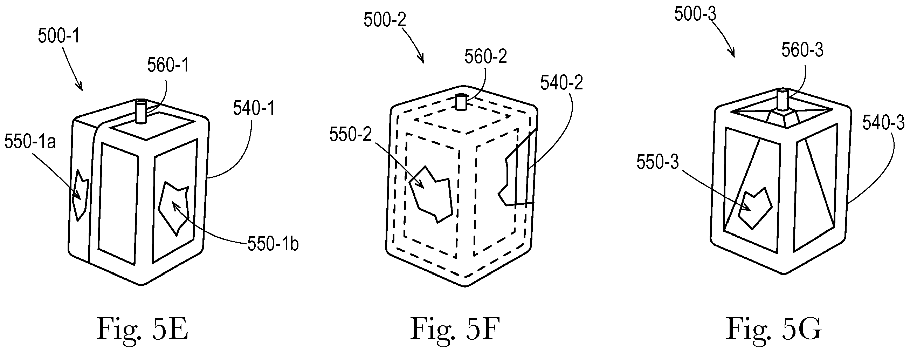

Figure 5E illustrates a perspective view of a container 500-1, which is an alternative embodiment of the stand up flexible container 500 of Figure 5A, including an asymmetric structural support frame 540-1, a first portion of the product volume 550-1b, a second portion of the product volume 550-1a, and a dispenser 560-1, configured in the same manner as the embodiment of Figure IE, except based on the container 500. Figure 5F illustrates a perspective view of a container 500-2, which is an alternative embodiment of the stand up flexible container 500 of Figure 5A, including an internal structural support frame 540-2, a product volume 550-2, and a dispenser 560-2, configured in the same manner as the embodiment of Figure IF, except based on the container 500. Figure 5G illustrates a perspective view of a container 500-3, which is an alternative embodiment of the stand up flexible container 500 of Figure 5A, including an external structural support frame 540-3, a non-integral product volume 550-3 joined to and disposed within the frame 540-3, and a dispenser 560-3, configured in the same manner as the embodiment of Figure 1G, except based on the container 500.

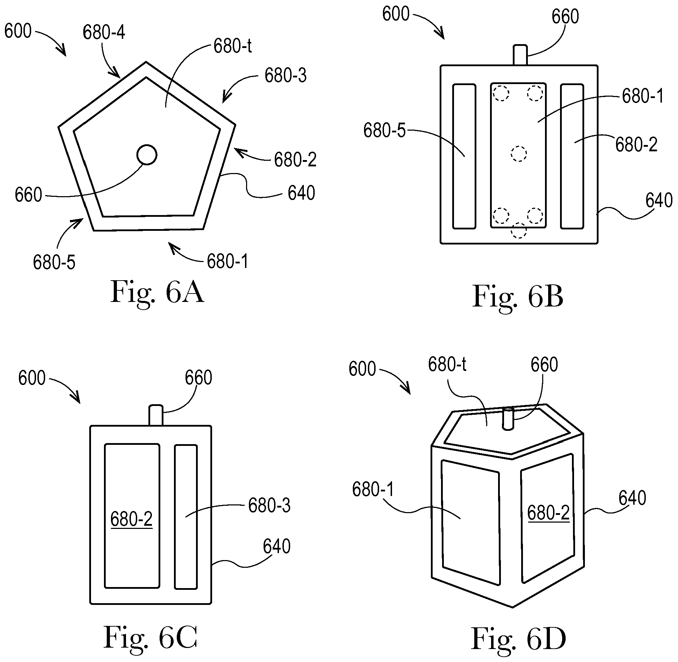

Figure 6A illustrates a front view of a stand up flexible container 600 having a structural support frame 640 that has an overall shape like a pentagonal prism. In the embodiment of Figure 6A, the prism shape is based on a pentagon. The support frame 640 is formed by structural support members disposed along the edges of the prism shape and joined together at their ends. The structural support members define a pentagon shaped top panel 680-t, rectangular shaped side panels 680-1, 680-2, 680-3, 680-4, and 680-5, and a pentagon shaped bottom panel (not shown). Each of the side panels 680-1, 680-2, 680-3, 680-4, and 680-5 is about flat, however in various embodiments, part, parts, or about all, or approximately all, or substantially all, or nearly all, or all of any of the side panels can be approximately flat, substantially flat, nearly flat, or completely flat. The container 600 includes a dispenser 660, which is configured to dispense one or more fluent products from one or more product volumes disposed within the container 600. In the embodiment of Figure 6A, the dispenser 660 is disposed in the center of the top panel 680-t, however, in various alternate embodiments, the dispenser 660 can be disposed anywhere else on the top, sides, or bottom, of the container 600. Figure 6B illustrates a front view of the container 600 of Figure 6A, including exemplary additional/alternate locations for a dispenser (shown as phantom lines), any of which can also apply to any side of the container 600. Figure 6C illustrates a side view of the container 600 of Figure 6A. Figure 6D illustrates an isometric view of the container 600 of Figure 6A.

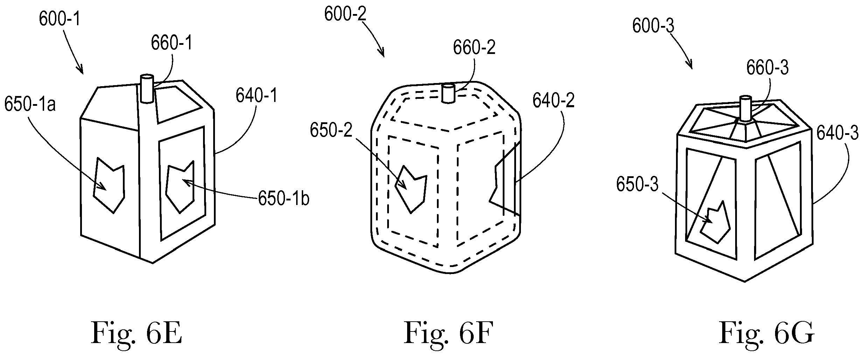

Figure 6E illustrates a perspective view of a container 600-1, which is an alternative embodiment of the stand up flexible container 600 of Figure 6A, including an asymmetric structural support frame 640-1, a first portion of the product volume 650-1b, a second portion of the product volume 650-1a, and a dispenser 660-1, configured in the same manner as the embodiment of Figure IE, except based on the container 600. Figure 6F illustrates a perspective view of a container 600-2, which is an alternative embodiment of the stand up flexible container 600 of Figure 6A, including an internal structural support frame 640-2, a product volume 650-2, and a dispenser 660-2, configured in the same manner as the embodiment of Figure IF, except based on the container 600. Figure 6G illustrates a perspective view of a container 600-3, which is an alternative embodiment of the stand up flexible container 600 of Figure 6A, including an external structural support frame 640-3, a non-integral product volume 650-3 joined to and disposed within the frame 640-3, and a dispenser 660-3, configured in the same manner as the embodiment of Figure 1G, except based on the container 600.

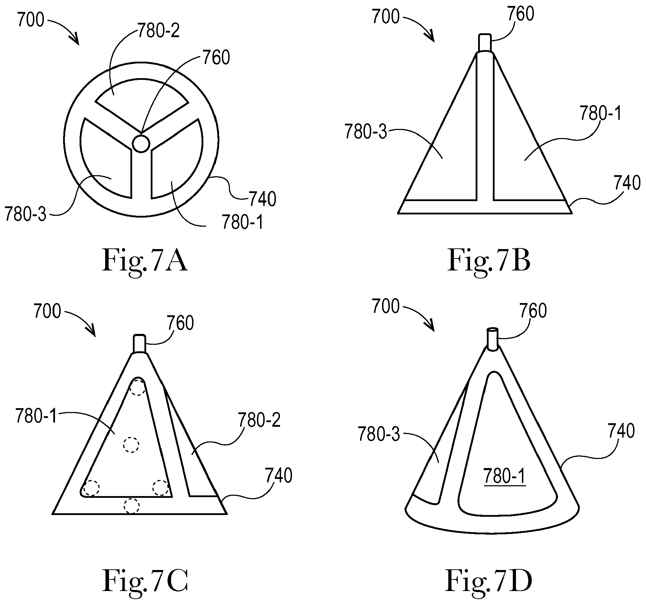

Figure 7A illustrates a front view of a stand up flexible container 700 having a structural support frame 740 that has an overall shape like a cone. The support frame 740 is formed by curved structural support members disposed around the base of the cone and by straight structural support members extending linearly from the base to the apex, wherein the structural support members are joined together at their ends. The structural support members define curved somewhat triangular shaped side panels 780-1, 780-2, and 780-3, and a circular shaped bottom panel (not shown). Each of the side panels 780-1, 780-2, and 780-3, is curved, however in various embodiments, part, parts, or about all, or approximately all, or substantially all, or nearly all, or all of any of the side panels can be approximately flat, substantially flat, nearly flat, or completely flat. The container 700 includes a dispenser 760, which is configured to dispense one or more fluent products from one or more product volumes disposed within the container 700. In the embodiment of Figure 7A, the dispenser 760 is disposed at the apex of the conical shape, however, in various alternate embodiments, the dispenser 760 can be disposed anywhere else on the top, sides, or bottom, of the container 700. Figure 7B illustrates a front view of the container 700 of Figure 7A. Figure 7C illustrates a side view of the container 700 of Figure 7A, including exemplary additional/alternate locations for a dispenser (shown as phantom lines), any of which can also apply to any side panel of the container 700. Figure 7D illustrates an isometric view of the container 700 of Figure 7A.

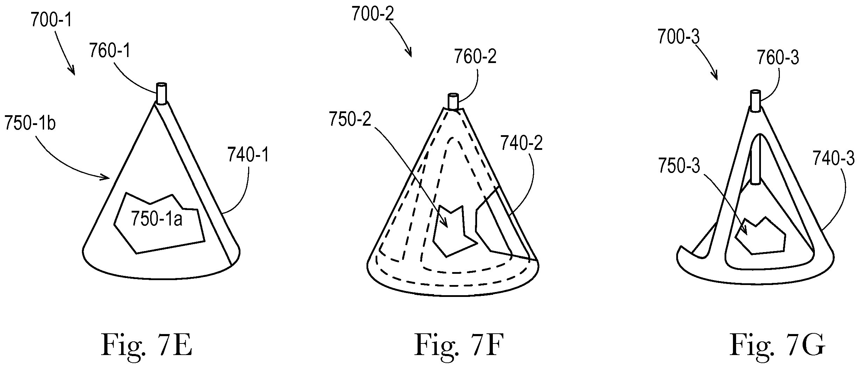

Figure 7E illustrates a perspective view of a container 700-1, which is an alternative embodiment of the stand up flexible container 700 of Figure 7A, including an asymmetric structural support frame 740-1, a first portion of the product volume 750-1b, a second portion of the product volume 750-1a, and a dispenser 760-1, configured in the same manner as the embodiment of Figure IE, except based on the container 700. Figure 7F illustrates a perspective view of a container 700-2, which is an alternative embodiment of the stand up flexible container 700 of Figure 7A, including an internal structural support frame 740-2, a product volume 750-2, and a dispenser 760-2, configured in the same manner as the embodiment of Figure IF, except based on the container 700. Figure 7G illustrates a perspective view of a container 700-3, which is an alternative embodiment of the stand up flexible container 700 of Figure 7A, including an external structural support frame 740-3, a non-integral product volume 750-3 joined to and disposed within the frame 740-3, and a dispenser 760-3, configured in the same manner as the embodiment of Figure 1G, except based on the container 700.

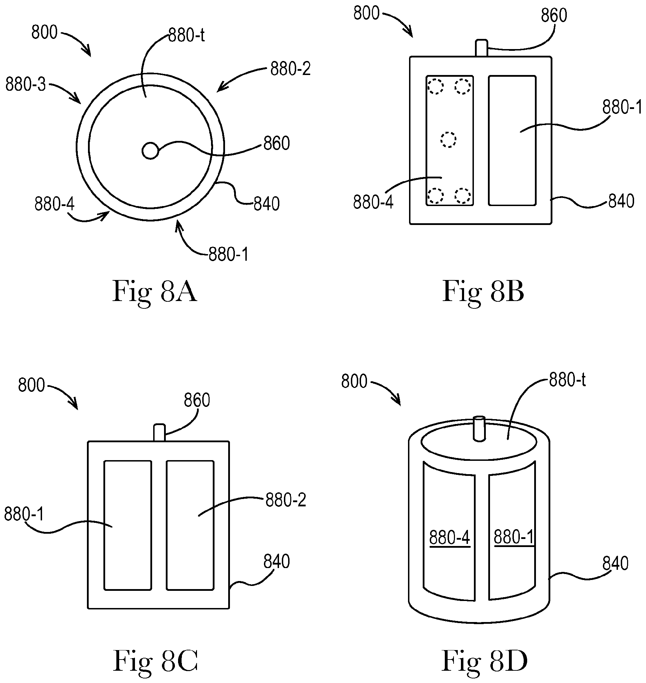

Figure 8A illustrates a front view of a stand up flexible container 800 having a structural support frame 840 that has an overall shape like a cylinder. The support frame 840 is formed by curved structural support members disposed around the top and bottom of the cylinder and by straight structural support members extending linearly from the top to the bottom, wherein the structural support members are joined together at their ends. The structural support members define a circular shaped top panel 880-t, curved somewhat rectangular shaped side panels 880-1, 880-2, 880-3, and 880-4, and a circular shaped bottom panel (not shown). Each of the side panels 880-1, 880-2, 880-3, and 880-4, is curved, however in various embodiments, part, parts, or about all, or approximately all, or substantially all, or nearly all, or all of any of the side panels can be approximately flat, substantially flat, nearly flat, or completely flat. The container 800 includes a dispenser 860, which is configured to dispense one or more fluent products from one or more product volumes disposed within the container 800. In the embodiment of Figure 8A, the dispenser 860 is disposed in the center of the top panel 880-t, however, in various alternate embodiments, the dispenser 860 can be disposed anywhere else on the top, sides, or bottom, of the container 800. Figure 8B illustrates a front view of the container 800 of Figure 8A, including exemplary additional/alternate locations for a dispenser (shown as phantom lines), any of which can also apply to any side panel of the container 800. Figure 8C illustrates a side view of the container 800 of Figure 8A. Figure 8D illustrates an isometric view of the container 800 of Figure 8A.

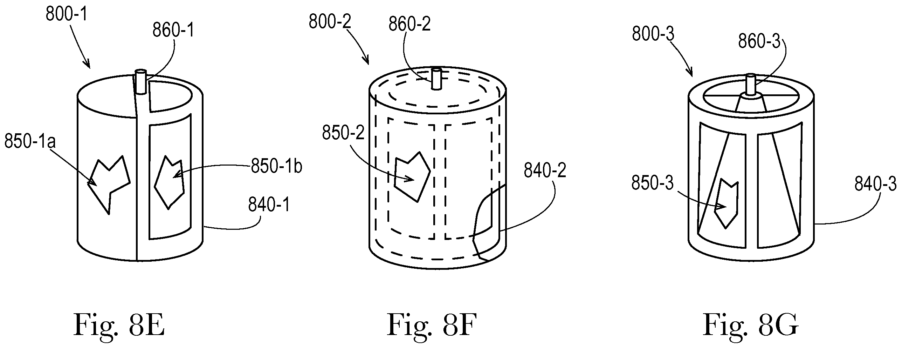

Figure 8E illustrates a perspective view of a container 800-1, which is an alternative embodiment of the stand up flexible container 800 of Figure 8A, including an asymmetric structural support frame 840-1, a first portion of the product volume 850-1b, a second portion of the product volume 850-1a, and a dispenser 860-1, configured in the same manner as the embodiment of Figure IE, except based on the container 800. Figure 8F illustrates a perspective view of a container 800-2, which is an alternative embodiment of the stand up flexible container 800 of Figure 8A, including an internal structural support frame 840-2, a product volume 850-2, and a dispenser 860-2, configured in the same manner as the embodiment of Figure IF, except based on the container 800. Figure 8G illustrates a perspective view of a container 800-3, which is an alternative embodiment of the stand up flexible container 800 of Figure 8A, including an external structural support frame 840-3, a non-integral product volume 850-3 joined to and disposed within the frame 840-3, and a dispenser 860-3, configured in the same manner as the embodiment of Figure 1G, except based on the container 800.

In additional embodiments, any stand up flexible container with a structural support frame, as disclosed herein, can be configured to have an overall shape that corresponds with any other known three-dimensional shape, including any kind of polyhedron, any kind of prismatoid, and any kind of prism (including right prisms and uniform prisms).

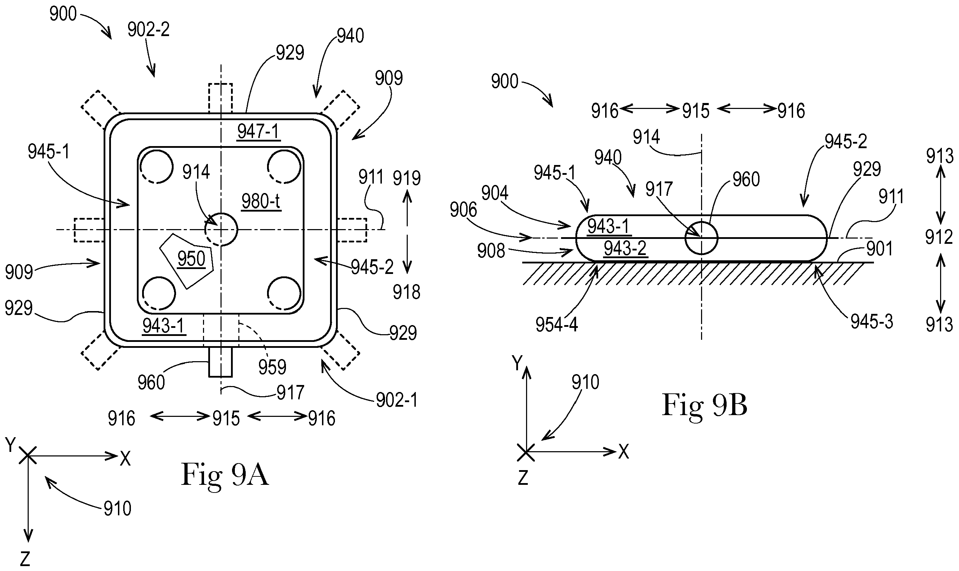

Figure 9A illustrates a top view of an embodiment of a self-supporting flexible container 900, having an overall shape like a square. Figure 9B illustrates an end view of the flexible container 900 of Figure 9A. The container 900 is resting on a horizontal support surface 901.

In Figure 9B, a coordinate system 910, provides lines of reference for referring to directions in the figure. The coordinate system 910 is a three-dimensional Cartesian coordinate system, with an X-axis, a Y-axis, and a Z-axis. The X-axis and the Z-axis are parallel with the horizontal support surface 901 and the Y-axis is perpendicular to the horizontal support surface 901.

Figure 9A also includes other lines of reference, for referring to directions and locations with respect to the container 100. A lateral centerline 911 runs parallel to the X-axis. An XY plane at the lateral centerline 911 separates the container 100 into a front half and a back half. An XZ plane at the lateral centerline 911 separates the container 100 into an upper half and a lower half. A longitudinal centerline 914 runs parallel to the Y-axis. A YZ plane at the longitudinal centerline 914 separates the container 900 into a left half and a right half. A third centerline 917 runs parallel to the Z-axis. The lateral centerline 911, the longitudinal centerline 914, and the third centerline 917 all intersect at a center of the container 900. These terms for direction, orientation, measurement, and disposition, in the embodiment of Figures 9A-9B are the same as the like-numbered terms in the embodiment of Figures 1A-1D.

The container 900 includes a top 904, a middle 906, and a bottom 908, the front 902-1, the back 902-2, and left and right sides 909. In the embodiment of Figures 9A-9B, the upper half and the lower half of the container are joined together at a seal 929, which extends around the outer periphery of the container 900. The bottom of the container 900 is configured in the same way as the top of the container 900.

The container 900 includes a structural support frame 940, a product volume 950, a dispenser 960, a top panel 980-t and a bottom panel (not shown). A portion of the top panel 980-t is illustrated as broken away, in order to show the product volume 950. The product volume 950 is configured to contain one or more fluent products. The dispenser 960 allows the container 900 to dispense these fluent product(s) from the product volume 950 through a flow channel 959 then through the dispenser 960, to the environment outside of the container 900. The structural support frame 940 supports the mass of fluent product(s) in the product volume 950. The top panel 980-t and the bottom panel are relatively flat surfaces, overlaying the product volume 950, and are suitable for displaying any kind of indicia.

The structural support frame 940 is formed by a plurality of structural support members. The structural support frame 940 includes front structural support members 943-1 and 943-2, intermediate structural support members 945-1, 945-2, 945-3, and 945-4, as well as back structural support members 947-1 and 947-2. Overall, each of the structural support members in the container 900 is oriented horizontally. And, each of the structural support members in the container 900 has a cross-sectional area that is substantially uniform along its length, although in various embodiments, this cross-sectional area can vary.

Upper structural support members 943-1, 945-1, 945-2, and 947-1 are disposed in an upper part of the middle 906 and in the top 904, while lower structural support members 943-2, 945-4, 945-3, and 947-2 are disposed in a lower part of the middle 906 and in the bottom 908. The upper structural support members 943-1, 945-1, 945-2, and 947-1 are disposed above and adjacent to the lower structural support members 943-2, 945-4, 945-3, and 947-2, respectively.

In various embodiments, adjacent upper and lower structural support members can be in contact with each other at one or more relatively smaller locations and/or at one or more relatively larger locations, along part, or parts, or about all, or approximately all, or substantially all, or nearly all, or all of their overall lengths, so long as there is a gap in the contact for the flow channel 959, between the structural support members 943-1 and 943-2. In the embodiment of Figures 9A-9B, the upper and lower structural support members are not directly connected to each other. However, in various alternate embodiments, adjacent upper and lower structural support members can be directly connected and/or joined together along part, or parts, or about all, or approximately all, or substantially all, or nearly all, or all of their overall lengths.

The ends of structural support members 943-1, 945-2, 947-1, and 945-1 are joined together to form a top square that is outward from and surrounding the product volume 950, and the ends of structural support members 943-2, 945-3, 947-2, and 945-4 are also joined together to form a bottom square that is outward from and surrounding the product volume 950. In the structural support frame 940, the ends of the structural support members, which are joined together, are directly connected, all around the periphery of their walls. However, in various alternative embodiments, any of the structural support members of the embodiment of Figures 9A-9B can be joined together in any way described herein or known in the art.

In alternative embodiments of the structural support frame 940, adjacent structural support members can be combined into a single structural support member, wherein the combined structural support member can effectively substitute for the adjacent structural support members, as their functions and connections are described herein. In other alternative embodiments of the structural support frame 940, one or more additional structural support members can be added to the structural support members in the structural support frame 940, wherein the expanded structural support frame can effectively substitute for the structural support frame 940, as its functions and connections are described herein.

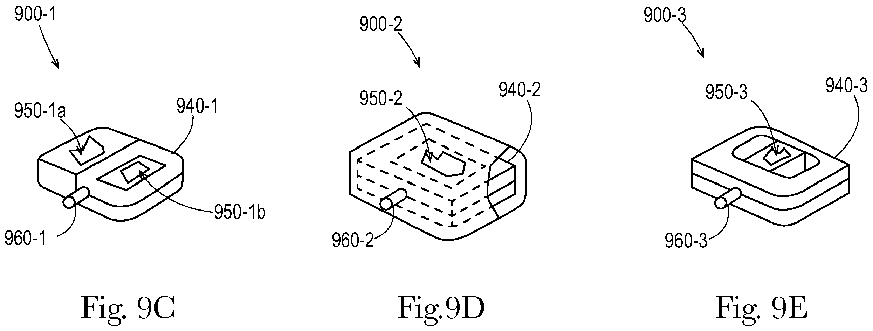

Figure 9C illustrates a perspective view of a container 900-1, which is an alternative embodiment of the self-supporting flexible container 900 of 9igure 1A, including an asymmetric structural support frame 940-1, a first portion of the product volume 950-1b, a second portion of the product volume 950-1a, and a dispenser 960-1. The embodiment of Figure 9C is similar to the embodiment of Figure 9A with like-numbered terms configured in the same way, except that the frame 940-1 extends around about half of the container 900-1, directly supporting a first portion of the product volume 950-1b, which is disposed inside of the frame 940-1, and indirectly supporting a second portion of the product volume 950-1a, which is disposed outside of the frame 940-1. In various embodiments, any self-supporting flexible container of the present disclosure can be modified in a similar way, such that: the frame extends around only part or parts of the container, and/or the frame is asymmetric with respect to one or more centerlines of the container, and/or part or parts of one or more product volumes of the container are disposed outside of the frame, and/or part or parts of one or more product volumes of the container are indirectly supported by the frame.

Figure 9D illustrates a perspective view of a container 900-2, which is an alternative embodiment of the self-supporting flexible container 900 of Figure 9A, including an internal structural support frame 940-2, a product volume 950-2, and a dispenser 960-2. The embodiment of Figure 9D is similar to the embodiment of Figure 9A with like-numbered terms configured in the same way, except that the frame 940-2 is internal to the product volume 950-2. In various embodiments, any self-supporting flexible container of the present disclosure can be modified in a similar way, such that: part, parts, or all of the frame (including part, parts, or all of one or more of any structural support members that form the frame) are about, approximately, substantially, nearly, or completely enclosed by one or more product volumes.

Figure 9E illustrates a perspective view of a container 900-3, which is an alternative embodiment of the stand up flexible container 900 of Figure 9A, including an external structural support frame 940-3, a product volume 950-3, and a dispenser 960-3. The embodiment of Figure 9E is similar to the embodiment of Figure 9A with like-numbered terms configured in the same way, except that the product volume 950-3 is not integrally connected to the frame 940-3 (that is, not simultaneously made from the same web of flexible materials), but rather the product volume 950-3 is separately made and then joined to the frame 940-3. The product volume 950-3 can be joined to the frame in any convenient manner disclosed herein or known in the art. In the embodiment of Figure 9E, the product volume 950-3 is disposed within the frame 940-3, but the product volume 950-3 has a reduced size and a somewhat different shape, when compared with the product volume 950 of Figure 9A; however, these differences are made to illustrate the relationship between the product volume 950-3 and the frame 940-3, and are not required. In various embodiments, any self-supporting flexible container of the present disclosure can be modified in a similar way, such that one or more the product volumes are not integrally connected to the frame.

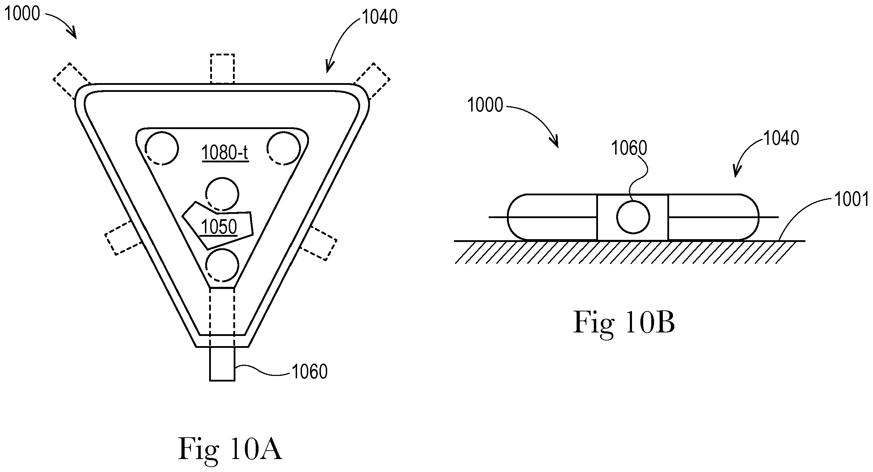

Figures 10A-11E illustrate embodiments of self-supporting flexible containers (that are not stand up containers) having various overall shapes. Any of the embodiments of Figures 10A-11E can be configured according to any of the embodiments disclosed herein, including the embodiments of Figures 9A-9E. Any of the elements (e.g. structural support frames, structural support members, panels, dispensers, etc.) of the embodiments of Figures 10A-11E, can be configured according to any of the embodiments disclosed herein. While each of the embodiments of Figures 10A-11E illustrates a container with one dispenser, in various embodiments, each container can include multiple dispensers, according to any embodiment described herein. Part, parts, or about all, or approximately all, or substantially all, or nearly all, or all of each of the panels in the embodiments of Figures 10A-11E is suitable to display any kind of indicia. Each of the top and bottom panels in the embodiments of Figures 10A-11E is configured to be a nonstructural panel, overlaying product volume(s) disposed within the flexible container, however, in various embodiments, one or more of any kind of decorative or structural element (such as a rib, protruding from an outer surface) can be joined to part, parts, or about all, or approximately all, or substantially all, or nearly all, or all of any of these panels. For clarity, not all structural details of these flexible containers are shown in Figures 10A-11E, however any of the embodiments of Figures 10A-11E can be configured to include any structure or feature for flexible containers, disclosed herein.

Figure 10A illustrates a top view of an embodiment of a self-supporting flexible container 1000 (that is not a stand up flexible container) having a product volume 1050 and an overall shape like a triangle. However, in various embodiments, a self-supporting flexible container can have an overall shape like a polygon having any number of sides. The support frame 1040 is formed by structural support members disposed along the edges of the triangular shape and joined together at their ends. The structural support members define a triangular shaped top panel 1080-t, and a triangular shaped bottom panel (not shown). The top panel 1080-t and the bottom panel are about flat, however in various embodiments, part, parts, or about all, or approximately all, or substantially all, or nearly all, or all of any of the side panels can be approximately flat, substantially flat, nearly flat, or completely flat. The container 1000 includes a dispenser 1060, which is configured to dispense one or more fluent products from one or more product volumes disposed within the container 1000. In the embodiment of Figure 10A, the dispenser 1060 is disposed in the center of the front, however, in various alternate embodiments, the dispenser 1060 can be disposed anywhere else on the top, sides, or bottom, of the container 1000. Figure 10A includes exemplary additional/alternate locations for a dispenser (shown as phantom lines). Figure 10B illustrates an end view of the flexible container 1000 of Figure 10B, resting on a horizontal support surface 1001.

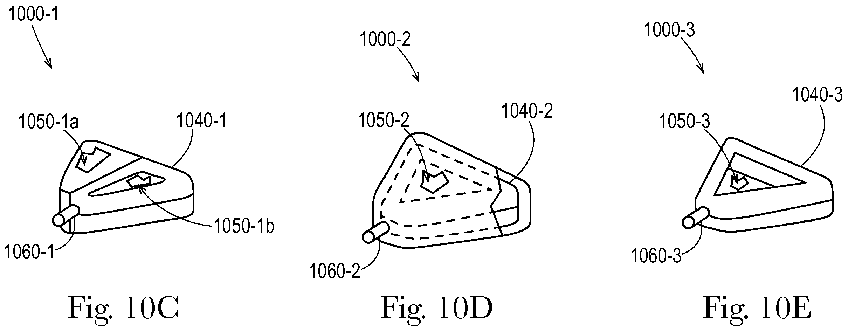

Figure 10C illustrates a perspective view of a container 1000-1, which is an alternative embodiment of the self-supporting flexible container 1000 of Figure 10A, including an asymmetric structural support frame 1040-1, a first portion of the product volume 1050-1b, a second portion of the product volume 1050-1a, and a dispenser 1060-1, configured in the same manner as the embodiment of Figure 9C, except based on the container 1000. Figure 10D illustrates a perspective view of a container 1000-2, which is an alternative embodiment of the self-supporting flexible container 1000 of Figure 10A, including an internal structural support frame 1040-2, a product volume 1050-2, and a dispenser 1060-2, configured in the same manner as the embodiment of Figure 9D, except based on the container 1000. Figure 10E illustrates a perspective view of a container 1000-3, which is an alternative embodiment of the self-supporting flexible container 1000 of Figure 10A, including an external structural support frame 1040-3, a non-integral product volume 1050-3 joined to and disposed within the frame 1040-3, and a dispenser 1060-3, configured in the same manner as the embodiment of Figure 9E, except based on the container 1000.

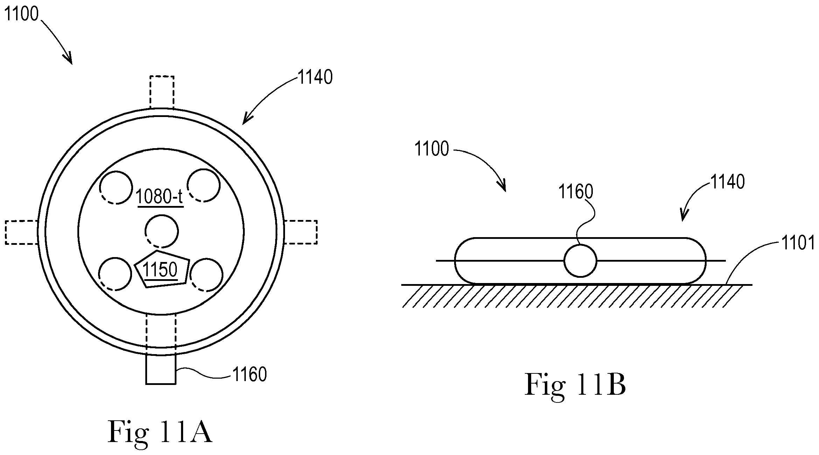

Figure 11A illustrates a top view of an embodiment of a self-supporting flexible container 1100 (that is not a stand up flexible container) having a product volume 1150 and an overall shape like a circle. The support frame 1140 is formed by structural support members disposed around the circumference of the circular shape and joined together at their ends. The structural support members define a circular shaped top panel 1180-t, and a circular shaped bottom panel (not shown). The top panel 1180-t and the bottom panel are about flat, however in various embodiments, part, parts, or about all, or approximately all, or substantially all, or nearly all, or all of any of the side panels can be approximately flat, substantially flat, nearly flat, or completely flat. The container 1100 includes a dispenser 1160, which is configured to dispense one or more fluent products from one or more product volumes disposed within the container 1100. In the embodiment of Figure 11A, the dispenser 1160 is disposed in the center of the front, however, in various alternate embodiments, the dispenser 1160 can be disposed anywhere else on the top, sides, or bottom, of the container 1100. Figure 11A includes exemplary additional/alternate locations for a dispenser (shown as phantom lines). Figure 11B illustrates an end view of the flexible container 1100 of Figure 10B, resting on a horizontal support surface 1101.

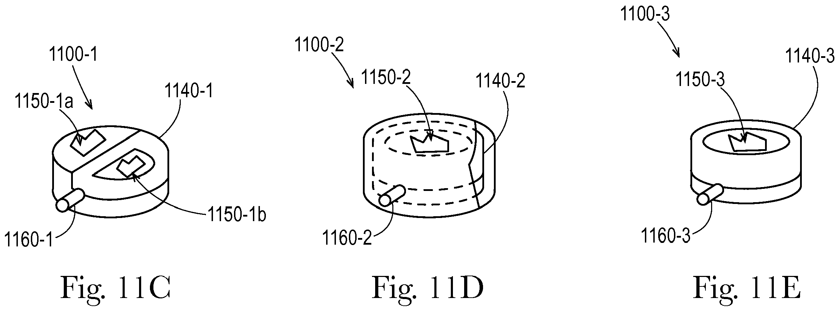

Figure 11C illustrates a perspective view of a container 1100-1, which is an alternative embodiment of the self-supporting flexible container 1100 of Figure 11A, including an asymmetric structural support frame 1140-1, a first portion of the product volume 1150-1b, a second portion of the product volume 1150-1a, and a dispenser 1160-1, configured in the same manner as the embodiment of Figure 9C, except based on the container 1100. Figure 11D illustrates a perspective view of a container 1100-2, which is an alternative embodiment of the self-supporting flexible container 1100 of Figure 11A, including an internal structural support frame 1140-2, a product volume 1150-2, and a dispenser 1160-2, configured in the same manner as the embodiment of Figure 9D, except based on the container 1100. Figure 11E illustrates a perspective view of a container 1100-3, which is an alternative embodiment of the self-supporting flexible container 1100 of Figure 11A, including an external structural support frame 1140-3, a non-integral product volume 1150-3 joined to and disposed within the frame 1140-3, and a dispenser 1160-3, configured in the same manner as the embodiment of Figure 9E, except based on the container 1100.

In additional embodiments, any self-supporting container with a structural support frame, as disclosed herein, can be configured to have an overall shape that corresponds with any other known three-dimensional shape. For example, any self-supporting container with a structural support frame, as disclosed herein, can be configured to have an overall shape (when observed from a top view) that corresponds with a rectangle, a polygon (having any number of sides), an oval, an ellipse, a star, or any other shape, or combinations of any of these.

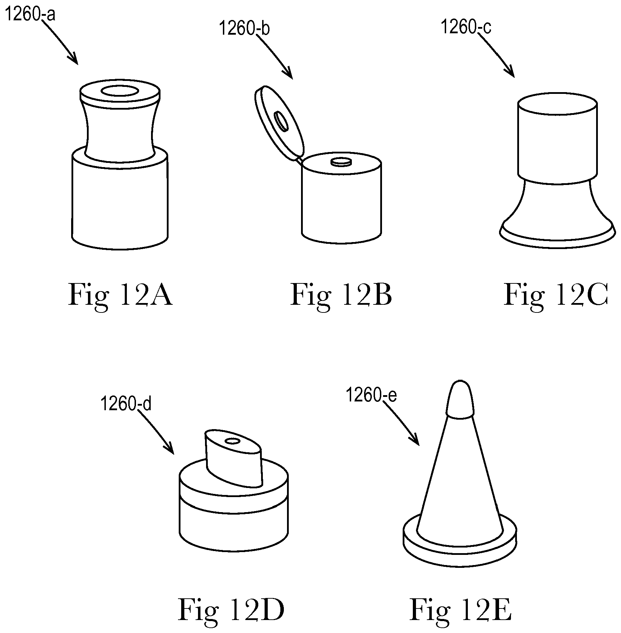

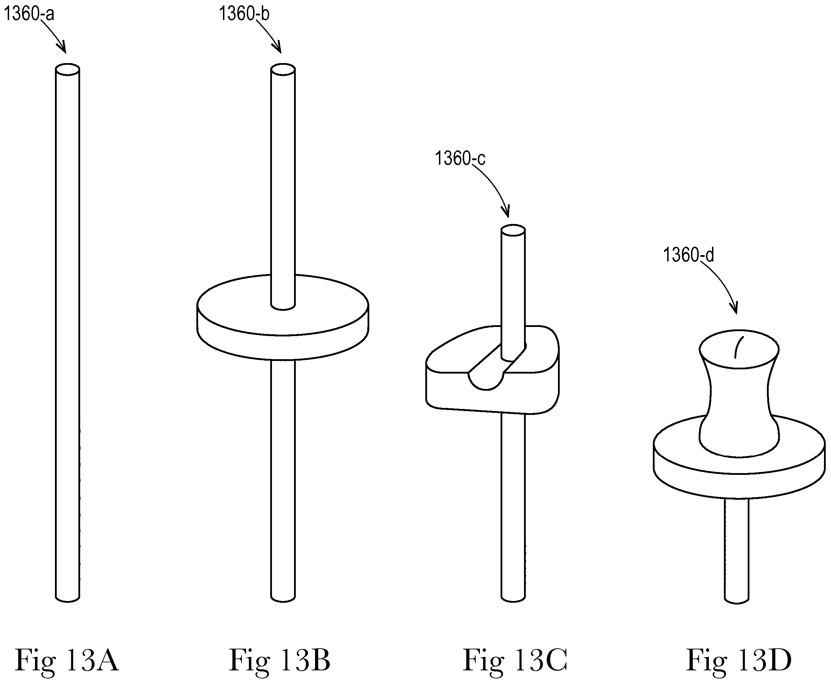

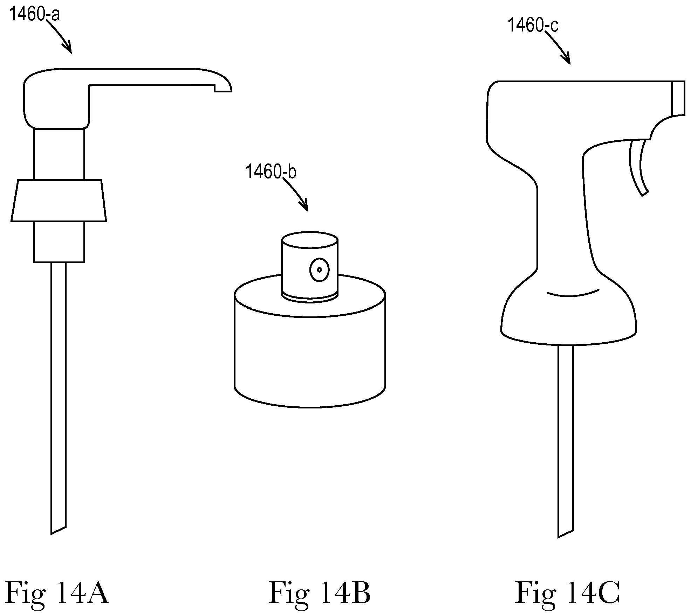

Figures 12A-14C illustrate various exemplary dispensers, which can be used with the flexible containers disclosed herein. Figure 12A illustrates an isometric view of push-pull type dispenser 1260-a. Figure 12B illustrates an isometric view of dispenser with a flip-top cap 1260-b. Figure 12C illustrates an isometric view of dispenser with a screw-on cap 1260-c. Figure 12D illustrates an isometric view of rotatable type dispenser 1260-d. Figure 12E illustrates an isometric view of nozzle type dispenser with a cap 1260-d. Figure 13A illustrates an isometric view of straw dispenser 1360-a. Figure 13B illustrates an isometric view of straw dispenser with a lid 1360-b. Figure 13C illustrates an isometric view of flip up straw dispenser 1360-c. Figure 13D illustrates an isometric view of straw dispenser with bite valve 1360-d. Figure 14A illustrates an isometric view of pump type dispenser 1460-a, which can, in various embodiments be a foaming pump type dispenser. Figure 14B illustrates an isometric view of pump spray type dispenser 1460-b. Figure 14C illustrates an isometric view of trigger spray type dispenser 1460-c.

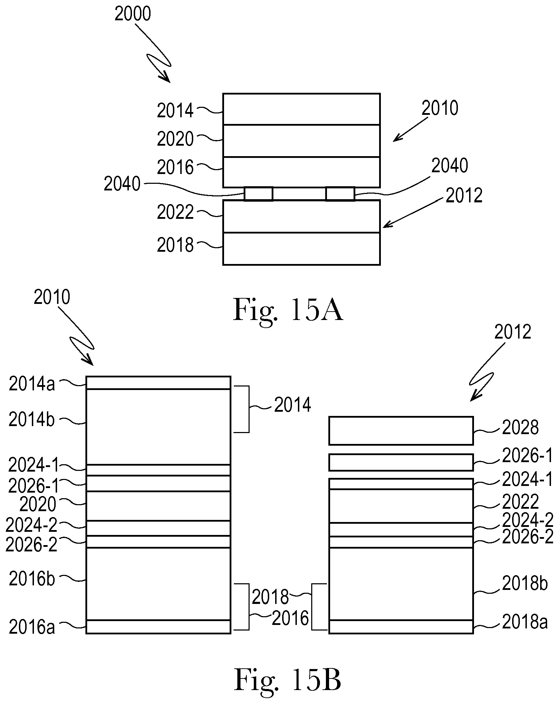

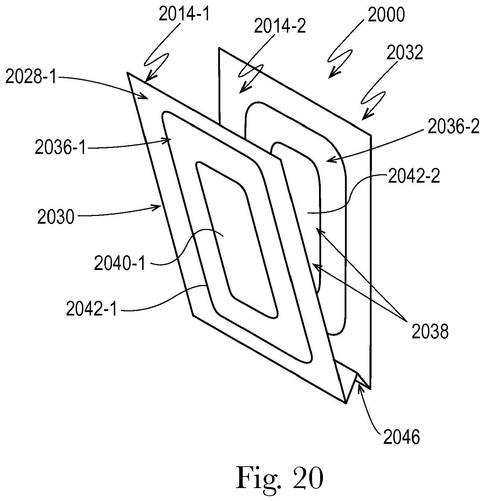

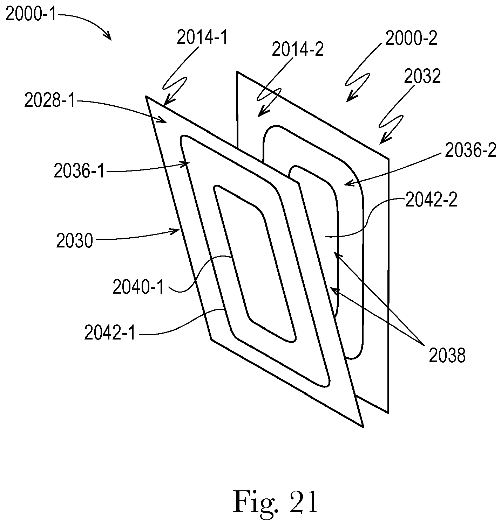

Referring to Figure 15A, a flexible material 2000 for a flexible container can include first and second laminates 2010, 2012, with at least a portion of the second laminate 2012 being joined to at least a portion of the first laminate 2010 by at least one seal 2040. As described above, a flexible container can include a structural support volume and a product volume. As illustrated in Figures 20 and 21, the flexible material 2000 for a flexible container includes a structural support volume forming region 2036 corresponding to the portion of the material for forming the structural support volume of the container and a product volume forming region 2038 corresponding to the portion of the material forming the product volume of the container. As described in detail below, the structural support volume is provided between the first and second laminate 2010, 2012, while the product volume is provided between faces of a sealable layer 2014-1, 2014-2 of the flexible material 2000 (as shown in Figure 20) or between sealable layers 2014-1, 2014-2 of two flexible material sheets 2000-1, 2000-2 each having first and second laminates (as shown in Figure 21). In an embodiment, the flexible material 2000 includes the first and second laminates 2010, 2012 only in the structural support volume forming region. In such embodiments, the flexible material 2000 can include a flexible sheet material, for example, a single layer, a single laminate, in the product volume forming region, which is different that the flexible material in the structural support volume region. For example, the flexible sheet material of the product volume forming region may include only non-sealable layers. In other embodiments, the flexible material 2000 includes the first and second laminates 2010, 2012 in both the structural support volume forming region and the product volume forming region.

Referring again to Figure 15A, the first laminate 2010 can include a first gas barrier layer 2020 disposed between and directly or indirectly connected to first and second sealant layers 2014 and 2016. The first and second sealant layers define opposed exterior layers of the first laminate 2010.

The second laminate 2012 can include a second gas barrier layer 2022 directly or indirectly connected to a third sealant layer 2018. The third sealant layer defines an exterior layer of the second laminate 2012. In various embodiments, the second laminate 2012 only includes a single sealable layer as an exterior layer. For example, as illustrated in Figure 15B, the second laminate 2012 can include the third sealable layer 2018 as one exterior layer and a print layer or other non-sealable layer as the opposed exterior layer. In such embodiments, the second laminate 2012 can include one or more additional sealant layers disposed in the interior of the second laminate 2012 such that the one or more additional sealant layers are not an exterior layer.

Referring again to Figure 15B, the first and second laminates 2010, 2012 can further include one or more additional layers such as additional sealant layers, additional gas barrier layers, reinforcing layers, tie layers, print layers, liquid barrier layers or coatings, and combinations thererof. For example, in one embodiment, the second laminate 2012 can include a print layer 2028 defining an exterior layer of the second laminate 2012, opposite the third sealant layer 2018. In another embodiment, one or both of the first and second laminates 2010, 2012 include one or more reinforcing layers 2024 and/or tie layers 2026 Any of the layers of the laminates can be provided either as a single layer or as a multi-structure layer having the same or different compositions in the individual layers of the multi-structure layer, including, for example, nano- and micro-layered structures. The multi-structure layer also need not have the layers performing the same function in direct contact, other layers can be interposed between layers of the multi-structure layer. For example, a reinforcing layer and a gas barrier layer can be provided as a multi-layer structure having the reinforcing layers interchangeable layered with the gas barrier layers.

In various embodiments, the first and/or second laminate 2010, 2012 can include a liquid barrier layer disposed within the laminate such that the liquid barrier layer is not an exterior layer of the laminate. The first and/or second laminate 2010, 2012 can additionally or alternatively include a liquid barrier coating disposed on one or more of the layers.

In various embodiments, the first and second laminates 2010, 2012 can be of a different construction. For example, the first and second laminates can have a different number of layers and/or different types of layers. For example, in one embodiment the first laminate 2010 includes sealable layers as the opposed exterior layers of the laminate, while the second laminate 2012 includes a sealable layer as only one exterior layer and a non-sealable layer, such as a print layer, as the opposed exterior layer. In another example, the first laminate can comprise a liquid barrier layer to retain moisture in a fluent product while the second laminate has no liquid barrier layer.

The flexible materials 2000 in accordance with embodiments of the disclosure have a seal strength and a lamination strength that allow the flexible material 2000 and seals to be maintained without separation or delamination when the structural support volume of the flexible container is expanded. As described above, for example, the layers of the first and second laminates 2010, 2012, can be arranged to have chemically similar or reactive layers in direct contact, and/or can include tie or adhesive layers, with selection of the composition of the tie or adhesive layer, such that the lamination strength between each of the layers of the laminate is about 2 N/m to about 10,000 N/m, Other suitable lamination strengths are disclosed above. For example, the sealable layers are selected such that the seal between the second sealable layer 2016 and the third sealable layer 2018 has a seal strength of about 20 N/m to about 10,000 N/m. Other suitable seal strengths are disclosed above.

In various embodiments, the flexible material 2000 has a thermal conductivity of about 0.02 W/m-K to about 300 W/m-K measured at 300 K and the first, second, and third sealable layers 2014, 2016, 2018 have a melting point of about 90 °C to about 350 °C, about 0.05 W/m-K to about 6 W/m-K measured at 300 K and the first, second, and third sealable layers 2014, 2016, 2018 have a melting point of about 100 °C to about 260 °C, or about 0.1 W/m·K to about 1 W/m·K measured at 300 K and the first, second, and third sealable layers 2014, 2016, 2018 have a melting point of about 110 °C to about 200 °C.

In various embodiments, the flexible material 2000 has a gas transmission rate in at least the structural support volume forming region of about 0.05 cc/m²·day·atm to about 7000 cc/m²·day·atm, about 0.05 cc/m²·day·atm to about 3 cc/m²·day·atm, or about 0.05 cc/m²·day·atm to about 1 cc/m²·day·atm. Other suitable gas transmission rates include about 0.05, 0.1, 0.5, 1, 2, 3, 4, 5, 6, 7, 8, 9, 10, 11, 12 ,13, 14, 15, 16, 17, 18, 19, 20, 30, 40, 50, 100, 150, 200, 300, 400, 500, 600, 700, 800, 900, 1000, 1100, 1200, 1300, 1400, 1500, 1600, or 1700, 2000, 3000, 4000, 5000, 6000, or 7000 cc/m²·day·atm, or any range formed by a combination of these values.

A gas transmission rate can be an instantaneous rate at a point in time or can be an average gas transmission rate. For example, if desired, the latter can be used when referring to the gas transmission over a multiple number of days, weeks, or months, such as for an over-pressurized structure that is transferring gas through a flexible material to the environment.

An acceptable transfer of gas from the interior of the structural support volume(s) of a flexible container to the environment can be in the vicinity of 20,000 (cc/ m² atm).

For example, for the structural support volume of a flexible container with an acceptable transfer, or loss, of gas to the environment of 18,900 (cc/ m² atm), i.e. 2700 x 7 days (equals about one week), at least one of the flexible materials can have a gas transmission rate or an average gas transmission rate of up to about 2700 (cc/m² dy atm) for the container containing product to be consumed within about 1 week.

In another example, for the structural support volume of a flexible container with an acceptable transfer, or loss, of gas to the environment of 20,400 (cc/ m² atm), i.e. 680 x 30 days (equals about one month), at least one of the flexible materials can have a gas transmission rate or an average gas transmission rate of up to about 680 (cc/m² dy atm) for the container containing product to be consumed within about 1 month.

In another example, for the structural support volume of a flexible container with an acceptable transfer, or loss, of gas to the environment of 20,400 (cc/ m² atm), i.e. 340 x 60 days (equals about two months), at least one of the flexible materials can have a gas transmission rate or an average gas transmission rate of up to about 340 (cc/m² dy atm) for the container containing product to be consumed within about 2 months.

In another example, for the structural support volume of a flexible container with an acceptable transfer, or loss, of gas to the environment of 20,700 (cc/ m² atm), i.e. 230 x 90 days (equals about three months), at least one of the flexible materials can have a gas transmission rate or an average gas transmission rate of up to about 230 (cc/m² dy atm) for the container containing product to be consumed within about 3 months.

In another example, for the structural support volume of a flexible container with an acceptable transfer, or loss, of gas to the environment of 21,000 (cc/ m² atm), i.e. 7000 x 3 days, at least one of the flexible materials can have a gas transmission rate or an average gas transmission rate of up to about 7000 (cc/m² dy atm) for the container containing product to be consumed within about 3 days.

The flexible materials 2000 of the disclosure when formed into a flexible container are stable and able to withstand various stresses during their distribution through the supply chain and into consumer's homes. The flexible materials 2000 of the disclosure are capable of withstanding variations in temperature from about 0 °C to about 35 °C. The flexible containers remain stable against pressure variations due to shipment through different altitudes. At sea level, atmospheric pressures are approximately 101325 Pa. At the highest shipment point in the US, atmospheric pressure is approximately 65000 Pa. The differential pressure experienced by the flexible containers during shipment can lead to stresses on the container and on the flexible material 2000. The flexible materials of the disclosure advantageously resist deformation under an applied load. For example, the flexible materials can exhibit a creep of 0.01% to 70% over a period of 1 month, or 0% to about 20% over a period of 1.5 years, or about 0% to about 8% over a period of 3 years, as measured using ASTM 2990-09 in which samples are cut into 25.4 mm width strips, about 200 mm long, and a 50.8 mm gate length, and a stress of 5 MPa is applied in about 1 sec and maintained at the stress at 23 °C for a specified time. The extension of the sample is monitored by grip displacement. In some embodiments of this invention, the material has no significant resistance to creep over time. Fast moving goods (i.e., goods that move quickly through the manufacturing-distribution chain, such as short shelf-life products) using the materials of this invention may have little to no creep resistance, which is particularly acceptable for products that are consumed quickly, and so creep resistance is less important for flexible containers used with such products as compared to flexible containers for products, items, or goods having a long shelf life.

Referring again to Figure 15b, in one embodiment, the first laminate 2010 includes a first sealable layer 2014 connected to a first reinforcing layer 2024-1 by a first tie layer 2026-1, a first gas barrier layer 2020 directly connected to the first reinforcing layer 2024-1, a second reinforcing layer 2024-2 directly connected to the first gas barrier layer 2020, and connected to a second sealable layer 2016 by a second tie layer 2026-1. The first and second sealable layers 2014, 2016 can include multiple layers of sealable material. For example, the first and second sealable layers can each include a first sealable material 2014a, 2016a, such as mLLDPE layered on a second sealable material 2014b, 2016b, such as a blend of LLDPE and LDPE. The first and second tie layers 2026-1, 2026-2 can be MA-LDPE. The first and second reinforcing layers 2016-1, 2016-2 can be nylon. The first gas barrier layer 2020 can be EVOH.

The second laminate 2012 can include, in an embodiment, a third sealant layer 2018 connected to a first reinforcing layer 2024-1 by a first tie layer 2026-1, a second gas barrier layer 2022 directly connected to and between first and second reinforcing layers 2024-1, 2024-2, and a second tie layer or adhesive layer 2026-2 connecting a print layer 2028 to the second reinforcing layer 2024-2. The third sealable layer 2018 can include a first sealable material 2018a such as mLLDPE, layered on a second sealable material 2018b, such as a blend of LLDPE and LDPE. The second gas barrier layer 2022 can be EVOH. The first and second reinforcing layers 2024-1, 2024-2 can be nylon.

The first laminate 2010 can be joined to the second laminate 2012 by at least one seal 2040. For example, the at least one seal can join the first sealable layer 2014 or the second sealable layer 2016 of the first laminate 2010 the third sealable layer 2018 of the second laminate 2012. For ease of reference throughout the disclosure, reference will be made to joining of the second sealable layer 2016 to the third sealable layer 2018, with the first sealable layer 2014 defining an exterior layer of the flexible material 2000. It should be understood that either of the first sealable layer 2014 or the second sealable layer 2016 can be joined to the third sealable layer 2018 by the at least one seal with the other one of the first sealable 2014 or the second sealable 2016 layer defining the exterior layer of the flexible material 2000.

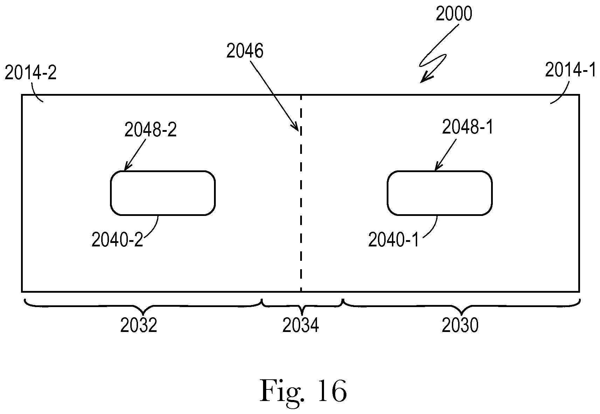

Referring to Figure 16, the flexible material 2000 can include at least one first seal 2040 that joins a portion of the first laminate 2010 to a potion of the second laminate 2012. The at least one first seal 2040 can define at least one boundary 2048 of the structural support volume of the flexible container formed from the flexible material 2000. The at least one first seal 2040 joins a portion of the first sealable layer 2014 of the first laminate 2010 to a portion of the third sealable layer 2018 of the second laminate 2012. For example, the at least one first seal 2040 at least partially defines an inner boundary of a structural support volume from the perspective of the container center. The structural support volume is provided between the first and second laminates 2010, 2012.

As illustrated in Figure 16, the flexible material 2000 can include a first region 2030, a second region 2032, and a fold region 2034. The first and second regions 2030, 2032 can each include at least one first seal 2040-1, 2040,2 defining at least partially at least one boundary 2048-1, 2048-2 of a structural support volume to be formed in the first and second regions 2030, 2032. One or more first seals 2040 can be formed to define a boundary 2048 of a structural support volume. For example, in some embodiments, such as illustrated in Figure 1, the multiple structural support volumes can be included in the flexible container. In such embodiments, multiple first seals 2040 can be formed in the flexible material 2000, each defining at least one boundary 2048 of one of the structural support volumes. In various embodiments, the flexible material 2000 can include first and second regions 2030, 2032 with a structural support volume being provided in only one of the first or second regions 2030, 2032.

Figure 16 illustrates an embodiment in which the at least one first seal 2040 is provided in the first and second regions 2030, 2032 as mirror images and are aligned when the flexible material 2000 is folded along a line 2046 in the fold region 2034. In alternative embodiments, the first seals 2040-1, 2040-2 of the first and second regions 2030, 2032 can be arranged such that they at least partially overlap, but are not necessarily mirror images and/or not necessarily completely aligned when the flexible material 2000 is folded along a line 2046.

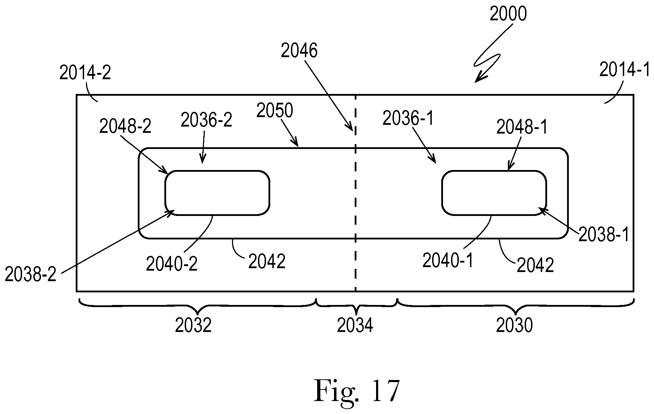

Referring to Figure 17, in yet another embodiment, at least one second seal 2042 can extend between the first and second regions 2030, 2032 to define at least one additional boundary 2050 of the structural support volume in both the first and second regions 2030, 2032. While Figure 17 illustrates an embodiment in which the at least one second seal 2042 is symmetrical across a line 2046 between the first and second regions 2030, 2032, it is contemplated that the portion of the second seal 2042 in the first region 2030 can be non-symmetrical with the portion of the second seal 2042 in the second region 2032. The second seal 2042 in the first region 2030 at least partially overlaps with a portion of the second seal 2042 in the second region 2032 when the flexible material 2000 is folded about a line 2046.

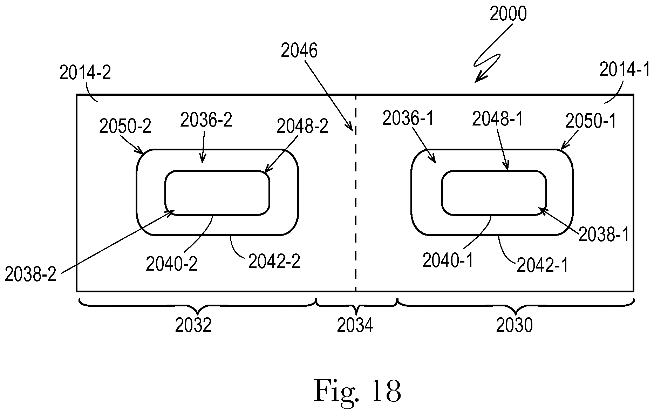

Referring to Figure 18, in some embodiments, the flexible material 2000 can further include at least one second seal 2042 that joins a portion of the first sealable layer 2014 to a portion of the third sealable layer 2018 and defines at least one additional boundary 2050 of the structural support volume. For example, the at least one second seal 2042 can define an outer boundary of the structural support volume, while the at least one first seal 2040 can define an inner boundary of the structural support volume, from the perspective of the container center. As described above with respect to the at least one first seal, the flexible material 2000 can include at least one second seal 2042-1, 2042,-2 disposed in each of first and second regions 2030, 2032 of the flexible material 2000, as illustrated in Figure 18. Figure 18 illustrates an embodiment in which the second seals 2042-1, 2042-2 in the first and second regions 2030, 2032 are mirror images and are aligned to completely overlap when the flexible material 2000 is folded along a line 2046

In various embodiments, a container blank can be formed from the flexible material 2000 having at least one first seal 2040 and optionally at least on second seal 2042 formed in the flexible sheet. In one embodiment, the container blank is formed from a single sheet of flexible material 2000. For example, referring to Figure 20, the flexible material 2000 can include first and second regions 2030, 2032 with at least one first seal 2040 formed in first and second regions 2030, 2032. The flexible material 2000 can be folded long a line 2046, or multiple lines as illustrated in Figure 20, such that the first sealable layer 2014 of the first region 2030 is brought into contact with the first sealable layer 2014 of the second region 2032. At least one third seal (not shown) can be formed in the flexible sheet joining the first sealable layer 2014 of the first region 2030 to the first sealable layer 2014 of the second region 2032 to define at least one boundary 2052 of the product volume.

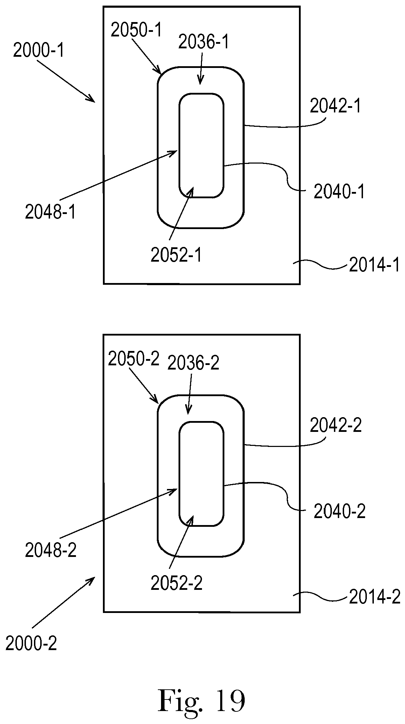

Referring to Figure 21, the container blank can be formed from two or more sheets of flexible material 2000-1, 2000-2. Figure 19 illustrates first and second flexible material sheets 2000-1 and 2000-2. For example, the container blank can be formed by bring the first sealable layer 2014-1 of the first flexible material 2000-1 into contact with the first sealable layer 2014-2 of the second flexible material 2000-1 with the at least one third seal joining the first sealable layer 2014-1 of the first flexible material 2000 to the first sealable layer 2014-2 of the second flexible material 2000-2. One or more additional sheets of flexible material 2000 or other film materials can be further included in forming the container blank, for example, such as forming a gusset region. As described, above, the flexible material sheets 2000-1 and 2000-2 can each further include at least one second seal 2042-1, 2042-2, defining at least one additional boundary 2050-1, 2050-2 of the structure supporting volume in each of the first and second flexible material sheets 2000-1, 2000-2.

In some embodiments, for example, where the flexible material(s) 2000 have only the a first seal 2040 defining at least one boundary 2048 of the structural support volume (as shown in Figure 16), the at least one third seal 2044 can also define at least one additional boundary 2050 of the structural support volume as well as at least one boundary of the product volume. In other embodiments, for example, where the flexible material 2000 has first and second seals 2040, 2042 (as shown in Figure 18), the at least one third seal 2044 can be formed over at least a part of the at least one second seal 2042 to define the at least one boundary of the product volume. In some embodiments, the at least one third seal 2044 can completely overlap with the at least one second seal 2042. In some embodiments, the at least one third seal 2044 does not overlap with the first or second seals 2040, 2042.

In any of the foregoing embodiments, the first, second, and/or third seals can be formed to have a small opening or gap to allow for the structural support volumes and/or the product volume to be filled with the desired expansion material (in the structural support volume) or product (in the product volume). One or more additional seals can be formed after filling the respective volumes of the container during formation of the container.

As described above, the flexible container includes a structural support volume that in some embodiments may be expanded and may be pressurized with a gas. The flexible material 2000 in accordance with embodiments of the disclosure can provide a gas barrier in at least the structural support volume to ensure that sufficient pressurization is maintained in the structural support volume over the shelf-life of the flexible container. For example, a container can have a structural support volume pressured to a gauge pressure of about 41,300 Pa to about 55,140 Pa, and the flexible material 2000 in at least the structural support volume can provide a sufficient barrier to gas transmission such that the structural support volume losses less than about 6890 Pa to about 20,678 Pa in about one month, in about six months, in about one year, or in about two years.

To further improve the structural properties of the flexible material 2000, the flexible container can be treated to cross-link one or more layer of the laminates of the flexible material 2000. For example, the flexible container can be exposed to electron beam radiation to cross-link one or more layers of the laminates.

### EXAMPLES

In the following examples, creep was measured in accordance with ASTM 2990-09. Samples are cut into 25.4 mm width strips, about 200 mm long, and a 50.8 mm gate length used. A stress of 5 MPa in about 1 sec was applied and the stress was maintained at 23 °C for a specified time. The extension of the sample was monitored by grip displacement.

The tensile properties of the material were measured in accordance with ASTM D882-12 using a 25.4 mm wide film, a gauge length of 50 mm, and a crosshead speed of 5 mm/min.

Mocon oxygen transmission rate was measured using MOCON equipment in accordance with ASTM F2622-08.

The composition and thickness of the layers of the laminates were measured by FTIR, temperature rising elution fractionation (TREF), and SEM analysis.

### Example 1:

A first laminate having layers ordered as shown below was formed. The total film thickness was about 90 microns. The PE layers were a blend of 90% LLDPE(ZN) with 10% LDPE as determined by temperature rising elution fractionation (TREF).

| **Composition and Order of the Layers** | **Thickness of the Layer (micron)** | **Function** |
|---|---|---|
| PE | 18 | Sealable layer |
| Tie layer | <2 | Tie layer |
| Nylon | ∼3 | Reinforcing layer |
| EVOH | 6 | Gas barrier |
| Nylon | ∼3 | Reinforcing layer |
| EVA | 22 | Tie layer |
| Nylon | ∼3 | Reinforcing layer |
| EVOH | 6 | Gas barrier |
| Nylon | ∼3 | Reinforcing layer |
| Tie layer | <2 | Tie layer |
| PE | 18 | Sealable layer |

The first laminate had the following properties.

| Creep: 5 MPa; 23C | 0.4% change @ 4 hours |
|---|---|
| Tensile Properties | Modulus: 870 MPa |
| | % strain at yield: 2.5% |
| | Stress at yield: 20 MPa |
| OTR MOCON | 0.0104 cc/100in²·day |

### Example 2:

A first laminate having layers ordered as shown below was formed. The total film thickness was about 92 microns. The PE layers were 100% LLDPE(ZN) as determined by temperature rising elution fractionation (TREF).

| **Composition and Order of the Layers** | **Thickness of the Layer** | **Function** |
|---|---|---|
| PE | 42 µm | Sealant layer |
| Tie Layer | < 2 µm | Tie layer |
| Nylon 6 | 18 µm | Gas barrier/Reinforcing layer |
| Tie Layer | < 2 µm | Tie layer |
| PE | 28 µm | Sealant layer |

The first laminate had the following properties:

| Creep: 5 MPa; 23C | 1.9% change @ 4 hours |
|---|---|
| Tensile Properties | Modulus: 480 MPa |
| | % Strain at yield: 3% |
| | Stress at yield: 13.5 MPa |

### Example 3:

A first laminate having layers ordered as shown below was formed. The total film thickness was about 80 microns. The PE layers were mostly LDPE with a small amount of LLDPE(ZN) as determined by temperature rising elution fractionation (TREF).

| **Composition and Order of the Layers** | **Thickness of the Layer** | **Function** |
|---|---|---|
| PE | 32 µm | Sealable layer |
| Tie Layer | < 2 µm | Tie layer |
| EVOH | 12 µm | Gas Barrier |
| Tie Layer | < 2 µm | Tie Layer |
| PE | 32 µm | Sealable Layer |

The first laminate had the following properties:

| Creep Resistance: 5MPa; 23C | 0.7% change @ 4 hours |
|---|---|
| Tensile Properties | Modulus: 708 MPa |
| | % strain at yield: 2.5% |
| | Stress at yield: 15 MPa |

### Example 4:

A second laminate having layers ordered as shown below was formed. The total film thickness was about 66 microns.

| **Composition and Order of the Layers** | **Thickness of the Layer** | **Function** |
|---|---|---|
| PET | 9 µm | Print layer |
| Adhesive | ∼3 µm | Adhesive/Tie layer |
| vm-BOPP | 18 µm | Gas and water barrier |
| Adhesive | ∼3 µm | Adhesive/Tie layer |
| LLDPE/LDPE Blend | 38 µm | Sealable Layer |

The first laminate had the following properties:

| Creep: 5MPa; 23C | 0.4% change @ 4 hours |
|---|---|
| Tensile Properties | Modulus: 1208 MPa |
| | % strain at yield: 2.5% |
| | Stress at yield: 25 MPa |

### Example 5:

A first laminate having layers ordered as shown below was formed. The total film thickness was about 91.4 microns. The composition and thickness of the adhesive can be adjusted to achieve the desired lamination strength.

| **Composition and Order of the Layers** | **Thickness of the Layer** | **Function** |
|---|---|---|
| LLDPE/LDPE Blend | 38 µm | Sealable layer |
| Adhesive | ∼3 µm | Tie layer |
| vm-Biaxially oriented Nylon (BON) | 18 µm | Gas barrier |
| Adhesive | ∼3 µm | Tie layer |
| LLDPE/LDPE Blend | 38 µm | Sealable Layer |

The first laminate had the following properties:

| Creep: 5MPa; 23C | 1.3% change @ 4 hours |
|---|---|
| Tensile Properties | Modulus: 712 MPa |
| | % strain at yield: 3% |
| | Stress at yield: 15 MPa |

### Example 6:

A second laminate having layers ordered as shown below was formed. The total film thickness was about 91.4 microns. The composition and thickness of the adhesive can be adjusted to achieve the desired lamination strength. The print layer and the sealable layers were confirmed by TREF to have mostly LLDPE (ZN) with a small amount of LDPE. The print layer was rendered printable by corona treating the layer. The corona treatment also degrades the sealable of the layer such that the second laminate of this example would be considered to have only a single sealable layer.

| **Composition and Order of the Layers** | **Thickness of the Layer** | **Function** |
|---|---|---|
| LLDPE (ZN)/LDPE Sealant (corona treated) | 32.85 µm | Print layer |
| Tie layer | ∼3 µm | Tie layer |
| Nylon | 8.34 µm | Reinforcing layer |
| EVOH | 40.03 µm | Gas barrier layer |
| Nylon | 8.85 µm | Reinforcing layer |
| Tie layer | ∼3 µm | Tie layer |
| metallocene LLDPE (ZN)/LDPE | 43 µm | Sealable Layer |

### Example 7:

A second laminate having layers ordered as shown below was formed. The total film thickness was about 66 microns. The composition and thickness of the adhesive can be adjusted to achieve the desired lamination strength.

| **Composition and Order of the Layers** | **Thickness of the Layer** | **Function** |
|---|---|---|
| PET | 9 µm | Print layer |
| Adhesive | ∼3 µm | Tie layer |
| vm-BOPP | 15 µm | Gas barrier layer and liquid barrier layer |
| Adhesive | ∼3 µm | Tie layer |
| LLDPE/LDPE Blend | 38 µm | Sealable Layer |

The second laminate had the following properties:

| Creep: 5MPa; 23C | 0% change @ 4 hours |
|---|---|
| Tensile Properties | Modulus: 1330 MPa |
| | % strain at yield: 3% |
| | Stress at yield: 25 MPa |

### Example 8:

A first laminate having layers ordered as shown below has a total laminate thickness of about 115 microns.

| **Composition and Order of the Layers** | **Thickness of the Layer** | **Function** |
|---|---|---|
| mLLDPE | 3 µm | Sealable layer |
| LLDPE/LDPE Blend | 35 µm | Sealable layer |
| MA-LDPE | 4 µm | Tie layer |
| Nylon | 8 µm | Reinforcing layer |
| EVOH | 15 µm | Gas barrier layer |
| Nylon | 8 µm | Reinforcing layer |
| MA-LDPE | 4 µm | Tie Layer |
| LLDPE/LDPE Blend | 35 µm | Sealable layer |
| mLLDPE | 3 µm | Sealable layer |

The second laminate having layers ordered as shown below has a total laminate thickness of about 126 microns.

| **Composition and Order of the Layers** | **Thickness of the Layer** | **Function** |
|---|---|---|
| BOPP | 20 µm | Print Layer |
| Ink | ∼2 µm | Ink |
| Adhesive | ∼3 µm | Tie layer |
| LLDPE/LDPE Blend | 25 µm | Sealable layer |
| MA-LDPE | ∼4 µm | Tie layer |
| Nylon | 8 µm | Reinforcing layer |
| EVOH | 15 µm | Gas barrier layer |
| Nylon | 8 µm | Reinforcing layer |
| MA-LDPE | ∼4 µm | Tie Layer |
| LLDPE/LDPE Blend | 35 µm | Sealable layer |
| mLLDPE | 3 µm | Sealable layer |

While flexible containers have been demonstrated herein to have sufficient structural integrity to be suitable for use with products having a long shelf life, such as on the order of 2 to 3 years, it is also recognized that flexible containers within the scope of the present disclosure are particularly suitable for products having shorter shelf life. When constructing flexible containers for use with products having shorter shelf life, as well as flexible containers for fluent products that are not heavy aqueous fluids prone to evaporation and/or diffusion, some of the considerations in selecting appropriate flexible materials are different when compared to those same considerations when selecting flexible materials appropriate for use with longer shelf life products or for use with fluent materials less prone to evaporation or diffusion. For instance, for products having a shelf life on the order of one month or less, it is not critical to construct the flexible container from flexible materials exhibiting extremely low gas transmission rates, extremely low water vapor transmission rates, or extremely high resistance to creep. While there is still desirability to using materials having adequate gas barrier, water barrier, and resistance to creep properties when constructing flexible containers for use with short shelf life products, the ability to relax the standards with respect to the selection of those properties to some degree provides expanded range of options with respect to materials that can be successfully employed. For example, simpler materials can be used that are single layers, not laminates, or simpler laminates.

Single layers or simple coextruded structures can be used, for example, with or without coatings (extruded, printed, vacuum deposited, or otherwise applied). An additional benefit of using simpler materials is that single materials can be used, thereby enabling the flexible materials to be recycled in traditional materials recycle streams. For example, if the materials primarily comprised of polyethylene, they could be recycled in the polyethylene recycle stream.

Flexible containers that are suitable for use with products whose consumption by the ultimate user commences less than six months after packaging are referred to herein as short shelf life flexible containers. While structural support volumes of a flexible container made of flexible materials having higher gas transmission rates are prone to lose pressure sooner than flexible materials having low gas transmission rates, the flexible materials can be selected such that their gas transmission rates are adequate for the shelf life of the product to be packaged in the flexible container. Furthermore, in some embodiments, a higher pressure can be used to fill a structural support volume knowing that this will lose pressure over time. As such, a visually discernible depressurization or deflation of the structural support volumes, as may be indicated, for example, by a sagging appearance of the flexible container, could serve as a visual indicator that the product is past its recommended shelf life. Flexible materials could be pre-selected with appropriate gas transmission rates for the products to be contained, so as to program the visible deflation of the structural support volumes of the flexible container according to the contained product's shelf life.

As indicated earlier, the selection requirements of flexible materials appropriate for use with shorter shelf life products are more relaxed versus the selection of flexible materials for longer shelf life products. For instance, the selection of materials to comprise the one or more structural support volumes of a flexible container, where the one or several structural support volumes is expanded with a pressurized gas, can include materials normally rejected because of higher gas transmission rates.

The flexible material 2000 for a flexible container includes a structural support volume forming region 2036 corresponding to the portion of the material for forming the structural support volume of the container and a product volume forming region 2038 corresponding to the portion of the material forming the product volume of the container. As described in detail below, the structural support volume is provided between the first and second flexible sheet materials 2000-1, 2000-2, while the product volume is provided between faces of a sealable layer 2014-1, 2014-2 of the flexible material 2000 (as shown in Figure 20) or between sealable layers 2014-1, 2014-2 of two flexible material sheets 2000-1, 2000-2 each having first and second laminates (as shown in Figure 21). In an embodiment, the flexible material 2000 includes the first and second flexible materials 2010, 2012 only in the structural support volume forming region. In some embodiments, the one or more structural support volume(s) is configured to be expanded and maintain a pressurized gas within. In such embodiments, the flexible material 2000 can include a flexible sheet material, for example, a single layer, a single laminate, in the product volume forming region, which is the same or different than the flexible material in the structural support volume region. For example, the flexible sheet material of the product volume forming region may include only non-sealable layers. In other embodiments, the flexible material 2000 includes the first and second laminates 2010, 2012 in both the structural support volume forming region and the product volume forming region.

In some embodiments, the structural support volumes are pressurized to pressures of about 2 psi gauge to about 15 psi gauge. For example, a container can have a structural support volume pressured to a gauge pressure of about 41,300 Pa to about 55,140 Pa, and the flexible material 2000 in at least the structural support volume can provide a sufficient barrier to gas transmission such that the structural support volume losses less than about 6890 Pa to about 20,678 Pa in about one week, one month, or in about six months. The barrier to gas transmission can be expressed as rate of loss cc/m² dy (day) atm (atmosphere) as a method for identifying adequate materials.

The gas transmission rate can be influenced by the properties of the flexible material itself, the thickness of the flexible material, the ratio of the surface area of the structural support volume to the surrounding environment to the expanded volume of the structural support volume, over-expansion of the flexible material, and the pressure of the surrounding environment, which in most circumstances is at 1 atmosphere.

The ratio of the surface area of the structural support volume to the surrounding environment to the expanded volume of the structural support volume can vary. In some embodiments cylindrical expanded structure support volumes have a cross-section of about 5mm to 30mm in diameter.

It is generally understood that as gas escapes the structural support volume over time the daily gas transmission rate will decrease since the pressure within the structural support volume is reduced, which reduces the driving force to diffuse gas through the flexible material. It is recognized that a structural support volume is at least partially co-facial with a product volume and may share at least part of its wall to define a portion of the product volume. With a closed (and possibly filled) product volume the gas transmission rate from the structural support volume through the portion of the flexible material directed toward the product volume may differ than for those areas of the structural support volume which face the environment. While not wishing to be bound to theory, for a situation with a closed product volume the gas transmission rate may be retarded to a degree at the interface between the structural support volume and the product volume. For an open or partially open product volume which is in fluid communication with the atmosphere of the environment, the gas transmission rate may be less affected or unaffected at the interface between the structural support volume and the product volume, as the product volume is open to the same atmospheric environment as are other parts of the surface of the flexible material of the structural support volume. Because of all of these factors, it is appreciated that different materials are suitable for different embodiments of containers with different shelf life.

The flexible containers of the present disclosure also alter preconceived notions or understandings about constraints regarding where product packaging is produced in relation to where it is filled or otherwise packed with product, and subsequently distributed. For instance, flexible containers of the present disclosure may be formed, filled, and placed into a distribution chain in a single production line. Such a line could be provided on the premises of a merchant. Flexible materials to be formed into the flexible containers of the present disclosure, and in particular, into short shelf life flexible containers, can be delivered as raw material to the merchant's premises in the form of sheets, or alternately, rolls or continuous webs. Alternately, boxes, packs, rolls, or other sets of pre-assembled empty flexible containers that have not yet had their structural support volumes expanded could be delivered to a filling site, such that the flexible containers are essentially flat, condensed, or collapsed. As such, efficiencies can be realized by avoiding shipment of formed three-dimensional flexible containers (or other conventional product packaging) from the manufacturer to the merchant. For a refrigerated product, the flexible container may be filled at any temperature, such as a cold-fill, a room temperature fill, a warm-fill, or a hot-fill, then transported and stored to a refrigerated environment. For sale through a retailer, the flexible container containing the product, preferably with the container closed, can be kept in a refrigerated environment, such as in a shopper-accessible cooler, chiller, display, room, or storage unit, such as a refrigerated room, storage unit, display, or the like.

On-premises flexible container formation and filling, or delivery of flat, condensed, or collapsed flexible containers for on-premises filling, could be particularly advantageous for use with perishable food and other products that are made, mixed, stirred, combined, poured, dispensed, ground, decanted, prepared, cooked, baked, dried, wetted, or otherwise processed on-premises.

The packaging or filling operations, when used with flexible containers having a consumer-friendly closure or sealing capability, can be completed in part or whole by the customer (or a delegate), user, employee of the establishment or business at the locale, or other third party. Examples of localities that may benefit from such on-premises flexible container packing or filling operations include: Restaurants, including fast-food businesses; delicatessen shops or other counter-service food shops; food markets including supermarkets and convenience stores; bulk foods stores and counters that for example distribute candy, chocolates, nuts, coffee including ground coffee, tea ingredients, beverages; small business kiosks and vendors that for example may distribute detergent, shampoo, beverages, snacks, pet food, seeds, fertilizer, bakeries and bakery counters, sandwich shops and counters, pizza or ice cream shops or counters. At food-serving establishments the food may be packed and taken away for later consumption. However, also contemplated is the packing of remaining or leftover food from a meal ordered at restaurant that was not fully consumed while consuming on the premises (often when the customer is seated at a table or counter).

For near-premises packing, businesses or other entities may have several customer visitable shops, stands or counters in a geographical region. These businesses may particularly cater to individuals or groups desiring and potentially willing to pay a premium for fast turnaround from product packing to customer possession and use. For example, a local baking company may serve several local or even somewhat geographically-remote retail stores which are supplied multiple times a week, or even daily, with freshly made and packaged baked goods, the freshness of which may be maintained by storage in the flexible containers described herein. Flexible containers may also be pre-filled and displayed for purchase from a vending machine. In the case of short shelf life product containers, to the extent they are displayed for sale from vending machines, it is preferable that such vending machines are restocked with high frequency, such as weekly, bi-weekly, every three days, every two days, daily, or twice daily.

Alternately, where flexible containers of the present disclosure are assembled and filled remotely from a merchant's location, the flexible containers can be enhanced through the use of labeling or other printing techniques that can be incorporated into the flexible packaging assembly and/or filling operations to facilitate product distribution. For instance, as explained in the summary, flexible containers of this disclosure can be easier to print and/or decorate, because the flexible materials of which they are assembled can be printed and/or decorated as conformable webs, before they are formed into containers. As such, during a mass production run of flexible containers, a controller controlling a printer or other indicia-supplying member employed as part of the flexible container manufacturing or assembly process can be operated to supply one or a plurality of the containers with indicia indicative of a destination, such as a geographic region, a particular store chain, store number, or other distribution channel, a particular regional distribution facility, a particular store location, a particular location within a store or distribution facility or manufacturing facility, or a particular consumer's address or other identifying information or where information such as a bin, pallet, palletizer, load, product lot, loading bay number, or truck number to whom or to which the flexible container, once fully assembled and filled, is to be sent or delivered, generally referred to herein (and as further defined above) as destination indicia DI.

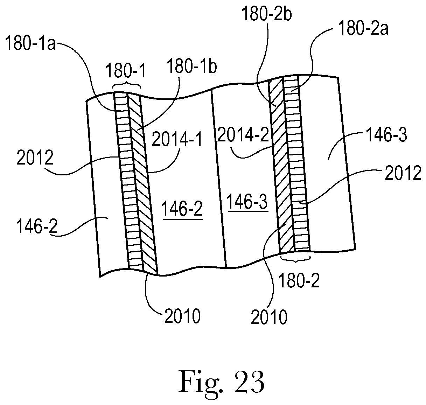

The panels 180-1, 180-2 of the flexible containers disclosed herein are particularly suitable for use as product destination indicia DI-receiving panels, inasmuch as the structural support members 146-1, 146-2, 146-3, and 146-4, from which the panels 180-1, 180-2 are, as illustrated in Figure 23, recessed upon expansion of those structural support members 146-1, 146-2, 146-3, and 146-4 (preferably with a cryogenic fluid, such as liquid nitrogen, liquid carbon dioxide, liquid helium, liquid argon, and combinations thereof), serve to protect that indicia from contamination, scuffing, abrasion, smearing, or other damage that may impede the ability to decipher the indicia, potentially delaying or preventing successful delivery of the flexible container to the intended destination.

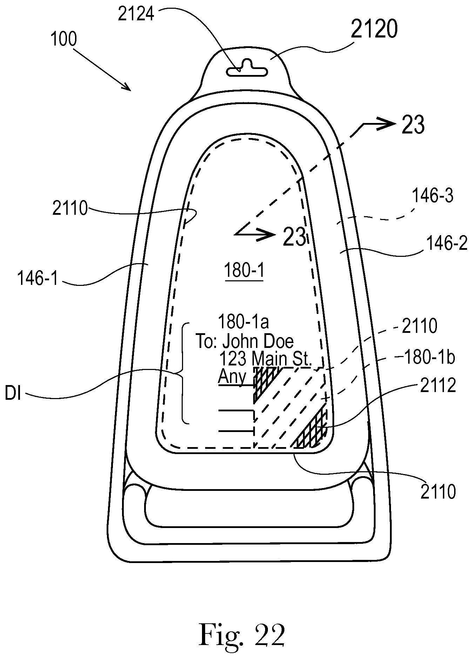

In one embodiment, a flexible container 100 has a product volume wherein at least one of the panels 180-1, 180-2 is provided with a sacrificial outer layer 180-1a, as illustrated in FIG. 22. As described above, Figure 15A illustrates that the flexible material 2000 for a flexible container can include first and second laminates 2010, 2012, with at least a portion of the second laminate 2012 being joined to at least a portion of the first laminate 2010. As further described above, the product volume is provided between faces of a sealable layer 2014-1, 2014-2 of the flexible material 2000 (as shown in Figure 20) or between sealable layers 2014-1, 2014-2 of two flexible material sheets 2000-1, 2000-2 each having first and second laminates (as shown in Figure 21). Thus, during assembly, as illustrated in Figure 23, the first and second laminates 2010, 2012 are preferably folded such that the first laminate 2010 is folded onto itself, with the product volume defined between inner surfaces 2014-1, 2014-2 of that first laminate 2010, which first laminate 2010 forms an inner layer 180-1b of product volume panel 180-1. When referring to first and second flexible materials, it is to be recognized that the first and second flexible materials, or laminates, can either be distinct materials or distinct regions of a single material that is folded, cut, and/or otherwise processed to orient the regions into the desired locations in the assembly or construction of the flexible container. The second laminate 2012 forms the outer layer 180-1a of the panels 180-1, 180-2, each of which is formed as a double-walled layer of the two laminates 2010, 2012. That outer layer 180-1a may be provided with a perforated perimeter or region 2110, preferably with a pull tab 2112 or other tear-initiating means such as a tear strip or arrangement of perforations to facilitate removing all, or at least a portion of, the sacrificial outer layer 180-1a. In Figure 22, the pull tab 2112 is illustrated at the bottom right corner of the outer layer 180-1a of the panel 180-1, and phantom lines and a curved directional arrow illustrate the manner in which the pull tab 2112 may be used to remove the sacrificial outer layer 180-1a from the panel 180-1 to reveal the inner layer 180-1b. The inner layer 180-1b of the product volume panel 180-1 is preferably pre-printed with a pattern that is visually complementary to any pattern, color scheme, or artwork displayed on the exterior of the structural support members 146-1, 146-2, 146-3, and 146-4, and/or with a pattern, color scheme, or artwork displayed on an exterior of the opposite panel 180-2 (or on an outer-facing surface of the inner layer 180-2b of the product volume panel 180-2 in the event that product volume panel 180-2 similarly includes a sacrificial outer layer 180-2a). As such, once the sacrificial outer layer 180-1a is removed, the flexible container 100 is still presentable as a product dispenser until the product contained therein is exhausted. Alternately or in addition, at least a portion of at least one of the inner layers 180-1b, 180-2b of the product volume panel 180-1 or 180-2 may be transparent or translucent, such that upon removal of the sacrificial outer layer 180-1a or 180-2a, the product contained in the product volume can be seen through the revealed transparent or translucent inner layer 180-1b or 180-2b, which may be desirable to ascertain a level of product remaining in the flexible container. Alternately or in addition, the outer-facing surface of one or both of the inner layers 180-1b, 180-2b could be supplied with a return shipping label and/or pre-paid postage to facilitate return of the flexible container.

The sacrificial outer layer 180-1a of the product volume panel 180-1 (as well as, if provided, the sacrificial outer layer 180-2a of the opposing product volume panel 180-2) provide a surface that can be supplied with destination indicia DI, as defined above. The destination indicia DI may be supplied by various means, including any of the methodologies within the scope of the term "printing" as defined herein, printing the indicia directly on an outer surface of the sacrificial outer layer 180-1a and/or 180-2a; applying (such as by one or more of heat-sealing, adhesive, or other suitable securement techniques) a label to the outer surface of the sacrificial outer layer 180-1a and/or 180-2a; and printing an address-receiving panel on the outer surface of the sacrificial outer layer 180-1a and/or 180-2a, onto which an address is subsequently inserted by hand or printed machine. The destination indicia DI need not be on a sacrificial outer layer 180-1a, but rather, could be applied to an outer surface of a product volume panel 180-1 or 180-2 that lacks a sacrificial panel, or may be printed on an extra flap of material that is removable by the recipient, such as the consumer, similar to the manner in which a removable coupon or rebate sticker is applied to conventional product containers made of rigid or semi-rigid materials.

Regardless of whether the destination indicia is provided on a sacrificial outer layer such as outer layer 180-1a, on a label adhesively or otherwise secured to the flexible container, or on a non-removable product volume panel 180-1, so long as the destination indicia DI is somehow associated with the flexible container, it is possible to achieve direct shipment or other distribution of the flexible container from the line used to assemble, fill, and seal or otherwise securely close the flexible container, without intermediate handling. There is the ability to associate destination indicia DI with a flexible container even before that flexible container is formed and filled. The integration of destination indicia DI into the flexible container formation or assembly process permits the manufacturer to achieve just-in-time production that more closely correlates required inventory with demand. For instance, if a given product to be packaged in a flexible container is ordered by individual consumers, retail stores, chains, or distribution centers via the Internet or via an intranet (such as an in-store electronic ordering system), those orders can be processed by a controller associated with the flexible container production line. Furthermore, when placing an order for a particular product to be packaged in a flexible container, that order can include information as to customizable or user-preferred options relating to that product, such as preferred scent, color, texture, volume, concentration, taste, quantity, or combination or mixture of multiple products (particularly for two-products-in-one flexible containers or associated pluralities of flexible containers). The user may also or additionally be able to customize the patterns, colors, or other visual characteristics of the flexible materials used in the construction of the flexible container, so as to have the ability to select, for example, from among a plurality of predefined options.

Alternately or in addition, the selection of one or more options concerning the product to be packaged in the flexible container, such as a product or product additive to be introduced into the product volume of a flexible container to be assembled, may trigger the printing of at least one of a predetermined set of graphics, such as product-identifying indicia, to be printed on at least one of the flexible materials employed in the assembly of the flexible container. For example, if a user were to select a musk scent for a liquid fluent product to be packaged in the flexible container, the system may be configured such that the flexible materials to be employed in the assembly of that flexible container would be printed with masculine-focused graphics, text, color schemes, or imagery, whereas if the user were to select a floral scent for the liquid fluent product to be packaged in the product container the flexible materials may be printed with feminine-focused graphics, text, color schemes, or imagery.

Alternately or additionally, if the system were arranged to fill distinct flexible containers with different fluent materials, the automated selection of one of a predetermined set of graphics, text, color schemes, or imagery, may be triggered by the product selected by the user to be introduced into a given flexible container. If the user chose a first product for a given first flexible container or first set of flexible containers, the system would automatically select for printing on the flexible materials to be used in the assembly of that flexible container or first set of flexible containers predetermined graphics, text, color schemes, or imagery associated with the manufacturer's desired branded packaging of that first product. If that user, or another user, chose a second, different product for a second, subsequent flexible container or set of containers, the system would automatically select for printing on the flexible materials to be used in assembly of that second flexible container or set of containers predetermined graphics, text, color schemes, or imagery associated with the manufacturer's desired branded packaging of that second product.

The manufacturing line could be programmed to fill the product volume with a product according to one or more parameters associated with the destination indicia DI, which one or more parameters are selectable by the user at the time of placing the order. This provides consumers and other purchasers of flexible containers with the ability to fully or partially customize the contents and/or appearance of one or a set of flexible containers, and the manufacturing line would facilitate sorting and distribution of that selected flexible container, or set of flexible containers, to the destination indicia DI with which the parameters are associated (e.g., the destination indicia DI associated with the user who selected the parameters). Destination indicia DI relating to each respective order can be associated with one or a plurality of flexible containers to be assembled and filled, the necessary printing or alternate destination indicia deposition operations may be performed on the flexible materials to be assembled into the flexible containers, and then the flexible containers may be assembled, filled, and immediately placed in transit to their intended destinations or into staging areas to be ready for pick-up. Alternatively, the destination indicia can be added to the flexible container after the flexible container is assembled but prior to filling the product volume, or after filling and sealing or otherwise securely closing the product volume. As a further alternative, a portion of the destination indicia may be applied to the flexible material that will be used to assemble a flexible container prior to the assembly, and further destination indicia may be applied (or the initial destination indicia may be altered) subsequent to forming, filling, and sealing the flexible container, or at any time intermediate any of those operations.

By associating with a flexible container a designation such as any of those mentioned in the definition of destination indicia DI provided above, that designation may be used to segregate one or more flexible containers, group one or more flexible containers with other flexible containers or with other products that share the same or similar designations, or to facilitate delivery to a particular destination. The destination indicia DI may alternately or additionally be used in transit to verify the progress of delivery (i.e., in conjunction with tracking software to assist with determining the location and estimating time to delivery). The destination indicia DI may also or alternatively be used by the intended recipient to verify that the flexible container is intended for that recipient and/or contains the product ordered by that recipient.

The structural support members 146-1, 146-2, 146-3, and 146-4 of the flexible containers disclosed herein provide integrated dunnage, inasmuch as, once expanded, they serve to protect the product volume from damage. As a result, the flexible containers can be sufficiently durable for shipment through the mail or via courier. It is recognized that it may be desirable to provide, either singularly or in combination, an outer envelope, protective plastic shrink-wrap or clamshell packaging, carton sleeve, foil, or other packaging surrounding the flexible container during shipping. While such outer envelope or packaging may be in the form of packaging with one or more layers of bubble wrap air-filled dunnage chambers, or foam dunnage to further protect the flexible container from damage and contaminants while in transit, thereby maintaining the cleanliness of the outer layers of the flexible container and the sterility of the contained product, the outer envelope or packaging may include a transparent window through which the destination indicia on or otherwise associated with the product volume panel 180-1 or 180-2 may be seen. The flexible containers may be individually wrapped or wrapped in groups in such outer envelope and/or other packaging. When multiple like flexible containers are shipped together, the structural support members 146-1, 146-2, 146-3, and 146-4 of the flexible containers not only protect the particular flexible container with which those structural support members 146-1, 146-2, 146-3, and 146-4 are associated, but also serve to protect adjacent flexible containers.

An additional desirable feature for the flexible containers to facilitate efficient product distribution is for the flexible containers to be optimized for efficient handling by humans and/or by mechanized pick-and-place units through the supply chain and distribution centers, for traditional distribution channels or for E-commerce channels. As used herein, "pick-and-place units" mean any type of gripper (mechanical, vacuum, magnetic, or other) that may be operated by a human or operating autonomously, such as a robotic machine or apparatus, and may either be part of a larger system or a standalone unit. Typically, individual containers are placed into corrugate cartons for distribution and these corrugate cartons are stacked onto pallets. Within a particular distribution center, the individual boxes are broken apart from a pallet and warehoused so that shipments of individual containers from various sources can be grouped together into totes or other distribution containers for shipments to individuals (E-commerce) or stores (traditional channels). Today, there is little optimization of how containers are arranged within a corrugate for the distributions center. One aspect of this invention is that the containers may be optimized within the shipping corrugate carton. This may entail orienting the flexible containers in an arrangement that best permits grabbing the flexible containers individually by a human hand or by a grasping device of a pick-and-place unit, such as a robotic machine or apparatus. The containers can nest standing up or laying on a side or even upside down or combinations of these orientations to aid with removal from the carton. The flexible container may also have a particular region that is suited for gripping, for example a flat area suitable for vacuum gripper, or any other type of feature designed to mate or assist with human or machine picking of the container and removal from the corrugate carton. The flexible container may also be provided with a prominent tab 2120, which may be associated with a valve or a seam of the flexible container or extend from any other surface of the flexible container, which prominent tab 2120 may either be permanent or removable, such as by one or more perforations, weakened tear lines, or adhesive. The tab 2120 is shaped and positioned to facilitate grasping by a grasping device of a pick-and-place unit, and/or to facilitate manual handling, and/or may include an aperture 2122 for use in hanging the flexible container from a retail display rod, from a wire rack, or from a hook. Alternately, a plurality of flexible containers may be connected in a web, either permanently or by a removable (e.g., perforated) strip 2124. The strip 2124 may include a perforation 2126 at a point of connection to at least one of the flexible containers of a set of flexible containers to facilitate separation of the flexible container from the strip. A plurality of the flexible containers may be festooned in a box to facilitate manual or automated picking processes either at a point of manufacture or at a distribution facility. Furthermore, the corrugate carton may be designed in such as way so as to dispense a single container at a time, to assist with manual or automatic picking operations. For example, a stack of eight flexible containers may be contained within a corrugate carton and an tear off or rip open slot on one side of the package may be present. The package can then be loaded into a rack with the opening on the bottom and with a single bar preventing the eight flexible containers from falling out by gravity. When the distribution center tote is under the corrugate carton configured as such, the single bar can be moved to dispense the number of flexible containers needed, from one to eight containers. Various optimizations to the corrugate and how containers are packed within the corrugate are possible for improving the efficiency of the distribution process.

Part, parts, or all of any of the embodiments disclosed herein can be combined with part, parts, or all of other embodiments known in the art of flexible containers, including those described below.

Embodiments of the present disclosure can use any and all embodiments of materials, structures, and/or features for flexible containers, as well as any and all methods of making and/or using such flexible containers, as disclosed in the following patent applications: (1) US non-provisional application 13/888,679 filed May 7, 2013, entitled "Flexible Containers" and published as US20130292353 (applicant's case 12464M); (2) US non-provisional application 13/888,721 filed May 7, 2013, entitled "Flexible Containers" and published as US20130292395 (applicant's case 12464M2); (3) US non-provisional application 13/888,963 filed May 7, 2013, entitled "Flexible Containers" published as US20130292415 (applicant's case 12465M); (4) US non-provisional application 13/888,756 May 7, 2013, entitled "Flexible Containers Having a Decoration Panel" published as US20130292287 (applicant's case 12559M); (5) US non-provisional application 13/957,158 filed August 1, 2013, entitled "Methods of Making Flexible Containers" published as US20140033654 (applicant's case 12559M); and (6) US non-provisional application 13/957,187 filed August 1, 2013, entitled "Methods of Making Flexible Containers" published as US20140033655 (applicant's case 12579M2); (7) US non-provisional application 13/889,000 filed May 7, 2013, entitled "Flexible Containers with Multiple Product Volumes" published as US20130292413 (applicant's case 12785M); (8) US non-provisional application 13/889,061 filed May 7, 2013, entitled "Flexible Materials for Flexible Containers" published as US20130337244 (applicant's case 12786M); (9) US non-provisional application 13/889,090 filed May 7, 2013, entitled "Flexible Materials for Flexible Containers" published as US20130294711 (applicant's case 12786M2); (10) US provisional application 61/861,100 filed August 1, 2013, entitled "Disposable Flexible Containers having Surface Elements" (applicant's case 13016P); (11) US provisional application 61/861,106 filed August 1, 2013, entitled "Flexible Containers having Improved Seam and Methods of Making the Same" (applicant's case 13017P); (12) US provisional application 61/861,118 filed August 1, 2013, entitled "Methods of Forming a Flexible Container" (applicant's case 13018P); (13) US provisional application 61/861,129 filed August 1, 2013, entitled "Enhancements to Tactile Interaction with Film Walled Packaging Having Air Filled Structural Support Volumes" (applicant's case 13019P); (14) Chinese patent application CN2013/085045 filed October 11, 2013, entitled "Flexible Containers Having a Squeeze Panel" (applicant's case 13036); (15) Chinese patent application CN2013/085065 filed October 11, 2013, entitled "Stable Flexible Containers" (applicant's case 13037); (16) US provisional application 61/900,450 filed November 6, 2013, entitled "Flexible Containers and Methods of Forming the Same" (applicant's case 13126P); (17) US provisional application 61/900,488 filed November 6, 2013, entitled "Easy to Empty Flexible Containers" (applicant's case 13127P); (18) US provisional application 61/900,501 filed November 6, 2013, entitled "Containers Having a Product Volume and a Stand-Off Structure Coupled Thereto" (applicant's case 13128P); (19) US provisional application 61/900,508 filed November 6, 2013, entitled "Flexible Containers Having Flexible Valves" (applicant's case 13129P); (20) US provisional application 61/900,514 filed November 6, 2013, entitled "Flexible Containers with Vent Systems" (applicant's case 13130P); (21) US provisional application 61/900,765 filed November 6, 2013, entitled "Flexible Containers for use with Short Shelf-Life Products and Methods for Accelerating Distribution of Flexible Containers" (applicant's case 13131P); (22) US provisional application 61/900,794 filed November 6, 2013, entitled "Flexible Containers and Methods of Forming the Same" (applicant's case 13132P); (23) US provisional application 61/900,805 filed November 6, 2013, entitled "Flexible Containers and Methods of Making the Same" (applicant's case 13133P); (24) US provisional application 61/900,810 filed November 6, 2013, entitled "Flexible Containers and Methods of Making the Same" (applicant's case 13134P). Embodiments of the present disclosure can use any and all embodiments of materials, structures, and/or features for flexible containers, as well as any and all methods of making and/or using such flexible containers, as disclosed in the following patent documents: US patent 5,137,154, filed October 29, 1991, entitled "Food bag structure having pressurized compartments" in the name of Cohen, granted August 11, 1992; PCT international patent application WO 96/01775 filed July 5, 1995, published January 26, 1995, entitled "Packaging Pouch with Stiffening Air Channels" in the name of Prats (applicant Danapak Holding A/S); PCT international patent application WO 98/01354 filed July 8, 1997, published January 15, 1998, entitled "A Packaging Container and a Method of its Manufacture" in the name of Naslund; US patent 5,960,975 filed March 19, 1997, entitled "Packaging material web for a self-supporting packaging container wall, and packaging containers made from the web" in the name of Lennartsson (applicant Tetra Laval), granted October 5, 1999; US patent 6,244,466 filed July 8, 1997, entitled "Packaging Container and a Method of its Manufacture" in the name of Naslund, granted June 12, 2001; PCT international patent application WO 02/085729 filed April 19, 2002, published October 31, 2002, entitled "Container" in the name of Rosen (applicant Eco Lean Research and Development A/S); Japanese patent JP4736364 filed July 20, 2004, published July 27, 2011, entitled "Independent Sack" in the name of Masaki (applicant Toppan Printing); PCT international patent application WO2005/063589 filed November 3, 2004, published 14 July 2005, entitled "Container of Flexible Material" in the name of Figols Gamiz (applicant Volpak, S.A.); German patent application DE202005016704 U1 filed January 17, 2005, entitled "Closed bag for receiving liquids, bulk material or objects comprises a bag wall with taut filled cushions or bulges which reinforce the wall to stabilize it" in the name of Heukamp (applicant Menshen), laid open as publication DE102005002301; Japanese patent application 2008JP-0024845 filed February 5, 2008, entitled "Self-standing Bag" in the name of Shinya (applicant Toppan Printing), laid open as publication JP2009184690; US patent application 10/312,176 filed April 19, 2002, entitled "Container" in the name of Rosen, published as US20040035865; US patent 7,585,528 filed December 16, 2002, entitled "Package having an inflated frame" in the name of Ferri, et al., granted on September 8, 2009; US patent application 12/794286 filed June 4, 2010, entitled "Flexible to Rigid Packaging Article and Method of Use and Manufacture" in the name of Helou (applicant, published as US20100308062; US patent 8,540,094 filed June 21, 2010, entitled "Collapsible Bottle, Method Of Manufacturing a Blank For Such Bottle and Beverage-Filled Bottle Dispensing System" in the name of Reidl, granted on September 24, 2013; and PCT international patent application WO 2013/124201 filed February 14, 2013, published August 29, 2013, entitled "Pouch and Method of Manufacturing the Same" in the name of Rizzi (applicant Cryovac, Inc.). Part, parts, or all of any of the embodiments disclosed herein also can be combined with part, parts, or all of other embodiments known in the art of containers for fluent products, so long as those embodiments can be applied to flexible containers, as disclosed herein. For example, in various embodiments, a flexible container can include a vertically oriented transparent strip, disposed on a portion of the container that overlays the product volume, and configured to show the level of the fluent product in the product volume.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

The citation of any document is not an admission that it is prior art with respect to any document disclosed or claimed herein or that it alone, or in any combination with any other reference or references, teaches, suggests or discloses any such embodiment. Further, to the extent that any meaning or definition of a term in this document conflicts with any meaning or definition of the same term in a document incorporated by reference, the meaning or definition assigned to that term in this document shall govern.

While particular embodiments have been illustrated and described herein, it should be understood that various other changes and modifications may be made without departing from the scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A disposable flexible container (100, 200, 300, 400, 500, 600, 700, 800, 900, 1000, 1100) comprising a product volume (150, 250, 350, 450, 550, 650, 750, 850, 950, 1050, 1150);
a structural support frame (140, 240, 340, 440, 540, 640, 740, 840, 940, 1040, 1140) that includes a plurality of structural support volumes, each of which is formed by one or more flexible materials expanded with one or more gases; **characterized in that** the container further comprises:
a fluent product disposed within the product volume, wherein the fluent product has a shelf life that is six months or less; and
wherein at least one of the one or more flexible materials has a gas transmission rate of 0.5 to 7000 cc/m² day atm, as measured for nitrogen by ASTM D 1434-82 at 50% relative humidity and 25°C using procedure V with partial pressures of 1 atm of high purity test gas on the high pressure side and 1 atm of clean atmospheric air on the low pressure side.

2. The flexible container (100, 200, 300, 400, 500, 600, 700, 800, 900, 1000, 1100) of any prior claim, wherein:
the fluent product has a shelf life that is three months or less; and
at least one of the one or more flexible materials has a gas transmission rate of 0.5 to 230 cc/m day atm.

3. The flexible container (100, 200, 300, 400, 500, 600, 700, 800, 900, 1000, 1100) of any prior claim, wherein:
the fluent product has a shelf life that is one month or less; and
at least one of the one or more flexible materials has a gas transmission rate of 0.5 to 680 cc/m day atm.

4. The flexible container (100, 200, 300, 400, 500, 600, 700, 800, 900, 1000, 1100) of any prior claim, wherein:
the fluent product has a shelf life that is one week or less; and
at least one of the one or more flexible materials has a gas transmission rate of 0.5 to 2700 cc/m day atm.

5. The flexible container (100, 200, 300, 400, 500, 600, 700, 800, 900, 1000, 1100) of any prior claim, wherein the fluent product has a shelf life that is three days or less.

6. The flexible container (100, 200, 300, 400, 500, 600, 700, 800, 900, 1000, 1100) of any prior claim, wherein each of the one or more flexible materials forming the structural support volumes has a gas transmission rate of 0.5 to 7000 cc/m2 day atm.

7. The flexible container (100, 200, 300, 400, 500, 600, 700, 800, 900, 1000, 1100) of any prior claim, wherein all flexible materials forming the container have a gas transmission rate of 0.5 to 7000 cc/m2 day atm.

8. The flexible container (100, 200, 300, 400, 500, 600, 700, 800, 900, 1000, 1100) of any prior claim, wherein at least one of the one or more flexible materials forming the structural support volumes is a single layer material.

9. The flexible container (100, 200, 300, 400, 500, 600, 700, 800, 900, 1000, 1100) of any prior claim, wherein each of the one or more flexible materials forming the structural support volumes is a single layer material.

10. The flexible container (100, 200, 300, 400, 500, 600, 700, 800, 900, 1000, 1100) of any prior claim, wherein all of flexible materials forming the container are single layer materials.

11. The flexible container (100, 200, 300, 400, 500, 600, 700, 800, 900, 1000, 1100) of any prior claim, wherein all of flexible materials forming the container are recyclable in a single component stream.

12. The flexible container (100, 200, 300, 400, 500, 600, 700, 800, 900, 1000, 1100) of any prior claim, wherein all of flexible materials forming the container are recyclable in a single component stream.

13. The flexible container (100, 200, 300, 400, 500, 600, 700, 800, 900, 1000, 1100) of any prior claim, wherein all of flexible materials forming the container are primarily comprised of polyethylene.

14. The flexible container (100, 200, 300, 400, 500, 600, 700, 800, 900, 1000, 1100) of any prior claim, wherein the gas transmission rate is configured such that, once the structural support volumes have been expanded for a period of time that is longer than the shelf life for the fluent product, the structural support frame becomes noticeably deflated.

15. The flexible container (100, 200, 300, 400, 500, 600, 700, 800, 900, 1000, 1100) of any prior claim, wherein the gas transmission rate is configured such that, once the structural support volumes have been expanded for a period of time that is longer than the shelf life for the fluent product, the structural support volumes provide a visual indicator that the fluent product has passed its shelf life.

## Patentansprüche

1. Elastischer Einwegbehälter (100, 200, 300, 400, 500, 600, 700, 800, 900, 1000, 1100), umfassend:
ein Produktvolumen (150, 250, 350, 450, 550, 650, 750, 850, 950, 1050, 1150) ;
einen konstruktiven Stützrahmen (140, 240, 340, 440, 540, 640, 740, 840, 940, 1040, 1140),
der eine Mehrzahl von konstruktiven Stützvolumen einschließt, wobei jedes
von einem oder mehreren elastischen Materialien geformt ist, das bzw. die mit einem oder mehreren Gasen expandiert wird bzw. werden;
**dadurch gekennzeichnet, dass** der Behälter ferner umfasst:
ein flüssiges Produkt, das innerhalb des Produktvolumens angeordnet ist, wobei das flüssige Produkt eine Haltbarkeitsdauer hat, die sechs Monate oder weniger ist; und
wobei mindestens eines des einen oder der mehreren elastischen Materialien eine Gastransportrate von 0,5 bis 7000 cm³/m² Tag atm aufweist, wie für Stickstoff von ASTM D 1434-82 bei 50 % relativer Feuchte und 25 °C unter Verwendung von Verfahren V mit Partialdruck von 1 atm von hochreinem Testgas auf der Hochdruckseite und 1 atm reiner Umgebungsluft auf der Niederdruckseite gemessen.

2. Elastischer Behälter (100, 200, 300, 400, 500, 600, 700, 800, 900, 1000, 1100) nach einem der vorstehenden Ansprüche, wobei:
das flüssige Produkt eine Haltbarkeitsdauer hat, die drei Monate oder weniger beträgt; und
mindestens eines des einen oder der mehreren elastischen Materialien eine Gastransportrate von 0,5 bis 230 cm³/m Tag atm hat.

3. Elastischer Behälter (100, 200, 300, 400, 500, 600, 700, 800, 900, 1000, 1100) nach einem der vorstehenden Ansprüche, wobei:
das flüssige Produkt eine Haltbarkeitsdauer hat, die einen Monat oder weniger beträgt; und
mindestens eines des einen oder der mehreren elastischen Materialien eine Gastransportrate von 0,5 bis 680 cm³/m Tag atm hat.

4. Elastischer Behälter (100, 200, 300, 400, 500, 600, 700, 800, 900, 1000, 1100) nach einem der vorstehenden Ansprüche, wobei:
das flüssige Produkt eine Haltbarkeitsdauer hat, die eine Woche oder weniger beträgt; und
mindestens eines des einen oder der mehreren elastischen Materialien eine Gastransportrate von 0,5 bis 2700 cm³/m Tag atm hat.

5. Elastischer Behälter (100, 200, 300, 400, 500, 600, 700, 800, 900, 1000, 1100)
nach einem der vorstehenden Ansprüche, wobei das flüssige Produkt eine Haltbarkeitsdauer hat, die
drei Tage oder weniger beträgt.

6. Elastischer Behälter (100, 200, 300, 400, 500, 600, 700, 800, 900, 1000, 1100)
nach einem der vorstehenden Ansprüche, wobei jedes des einen oder der mehreren elastischen
Materialien, die die konstruktiven Stützvolumen bilden, eine Gastransportrate von 0,5 bis 7000 cm³/m2 Tag atm hat.

7. Elastischer Behälter (100, 200, 300, 400, 500, 600, 700, 800, 900, 1000, 1100)
nach einem der vorstehenden Ansprüche , wobei alle elastischen Materialien, die den
Behälter bilden, eine Gastransportrate von 0,5 bis 7000 cm³/m2 Tag atm haben.

8. Elastischer Behälter (100, 200, 300, 400, 500, 600, 700, 800, 900, 1000, 1100)
nach einem der vorstehenden Ansprüche , wobei mindestens eines des einen oder der mehreren elastischen
Materialien, die die konstruktiven Stützvolumen bilden, ein Einschichtmaterial ist.

9. Elastischer Behälter (100, 200, 300, 400, 500, 600, 700, 800, 900, 1000, 1100)
nach einem der vorstehenden Ansprüche , wobei jedes des einen oder der mehreren elastischen
Materialien, die die konstruktiven Stützvolumen bilden, ein Einschichtmaterial ist.

10. Elastischer Behälter (100, 200, 300, 400, 500, 600, 700, 800, 900, 1000, 1100)
nach einem der vorstehenden Ansprüche , wobei alle elastischen Materialien, die den
Behälter bilden, Einschichtmaterialien sind.

11. Elastischer Behälter (100, 200, 300, 400, 500, 600, 700, 800, 900, 1000, 1100)
nach einem der vorstehenden Ansprüche , wobei alle elastischen Materialien, die den
Behälter bilden, in einem einzigen Komponentenstrom recycelfähig sind.

12. Elastischer Behälter (100, 200, 300, 400, 500, 600, 700, 800, 900, 1000, 1100)
nach einem der vorstehenden Ansprüche , wobei alle elastischen Materialien, die den
Behälter bilden, in einem einzigen Komponentenstrom recycelfähig sind.

13. Elastischer Behälter (100, 200, 300, 400, 500, 600, 700, 800, 900, 1000, 1100)
nach einem der vorstehenden Ansprüche , wobei alle elastischen Materialien, die den
Behälter bilden, in erster Linie aus Polyethylen bestehen.

14. Elastischer Behälter (100, 200, 300, 400, 500, 600, 700, 800, 900, 1000, 1100)
nach einem der vorstehenden Ansprüche, wobei die Gastransportrate derart konfiguriert ist,
dass, wenn die konstruktiven Stützvolumen über einen längeren Zeitabschnitt als die Haltbarkeitsdauer für das flüssige Produkt expandiert wurden, der konstruktive Stützrahmen zusehends entleert wird.

15. Elastischer Behälter (100, 200, 300, 400, 500, 600, 700, 800, 900, 1000, 1100)
nach einem der vorstehenden Ansprüche , wobei die Gastransportrate derart konfiguriert ist,
dass, wenn die konstruktiven Stützvolumen über einen längeren Zeitabschnitt als die Haltbarkeitsdauer für das flüssige Produkt expandiert wurden, die konstruktiven Stützvolumen eine visuelle Anzeige bieten, dass das flüssige Produkt seine Haltbarkeitsdauer überschritten hat.

## Revendications

1. Récipient souple jetable (100, 200, 300, 400, 500, 600, 700, 800, 900, 1000, 1100) comprenant :
un volume de produit (150, 250, 350, 450, 550, 650, 750, 850, 950, 1050, 1150) ;
un cadre de support structural (140, 240, 350, 440, 540, 640, 740, 840, 940, 1040, 1140)
qui inclut une pluralité de volumes de support structuraux, dont chacun
est formé par un ou plusieurs matériaux souples expansés avec un ou plusieurs gaz ;
**caractérisé en ce que** le récipient comprend en outre :
un produit fluide disposé au sein du volume de produit, dans lequel le produit fluide a une durée de conservation qui est de six mois ou moins ; et
dans lequel au moins le matériau souple ou l'un des matériaux souples a un taux de transmission de gaz de 0,5 à 7000 cm³/m² jour atm, tel que mesuré pour l'azote par l'ASTM D 1434-82 à 50 % d'humidité relative et 25 °C en utilisant la procédure V avec des pressions partielles de 1 atm de gaz de test à pureté élevée sur le côté haute pression et 1 atm d'air atmosphérique propre sur le côté basse pression.

2. Récipient souple (100, 200, 300, 400, 500, 600, 700, 800, 900, 1000, 1100) selon l'une quelconque revendication précédente, dans lequel :
le produit fluide a une durée de conservation qui est de trois mois ou moins ; et
le matériau souple ou au moins un des matériaux souples a un taux de transmission de gaz de 0,5 à 230 cm³/m jour atm.

3. Récipient souple (100, 200, 300, 400, 500, 600, 700, 800, 900, 1000, 1100) selon l'une quelconque revendication précédente, dans lequel :
le produit fluide a une durée de conservation qui est d'un mois ou moins ; et
le matériau souple ou au moins un des matériaux souples a un taux de transmission de gaz de 0,5 à 680 cm³/m jour atm.

4. Récipient souple (100, 200, 300, 400, 500, 600, 700, 800, 900, 1000, 1100) selon l'une quelconque revendication précédente, dans lequel :
le produit fluide a une durée de conservation qui est d'une semaine ou moins ; et
le matériau souple ou au moins un des matériaux souples a un taux de transmission de gaz de 0,5 à 2700 cm³/m jour atm.

5. Récipient souple (100, 200, 300, 400, 500, 600, 700, 800, 900, 1000, 1100)
selon l'une quelconque revendication précédente, dans lequel le produit fluide a une durée de conservation qui est
de trois jours ou moins.

6. Récipient souple (100, 200, 300, 400, 500, 600, 700, 800, 900, 1000, 1100)
selon l'une quelconque revendication précédente, dans lequel le matériau souple ou chacun des matériaux souples
formant les volumes de support structuraux a un taux de transmission de gaz de 0,5 à 7000 cm³/m2 jour atm.

7. Récipient souple (100, 200, 300, 400, 500, 600, 700, 800, 900, 1000, 1100)
selon l'une quelconque revendication précédente, dans lequel tous les matériaux souples formant le
récipient ont un taux de transmission de gaz de 0,5 à 7000 cm³/m2 jour atm.

8. Récipient souple (100, 200, 300, 400, 500, 600, 700, 800, 900, 1000, 1100)
selon l'une quelconque revendication précédente, dans lequel le matériau souple ou au moins l'un des matériaux souples
formant les volumes de support structuraux est un matériau monocouche.

9. Récipient souple (100, 200, 300, 400, 500, 600, 700, 800, 900, 1000, 1100)
selon l'une quelconque revendication précédente, dans lequel le matériau souple ou chacun des matériaux souples
formant les volumes de support structuraux est un matériau monocouche.

10. Récipient souple (100, 200, 300, 400, 500, 600, 700, 800, 900, 1000, 1100)
selon l'une quelconque revendication précédente, dans lequel tous les matériaux souples formant le
récipient sont des matériaux monocouches.

11. Récipient souple (100, 200, 300, 400, 500, 600, 700, 800, 900, 1000, 1100)
selon l'une quelconque revendication précédente, dans lequel tous les matériaux souples formant le
récipient sont recyclables dans un flux à composant unique.

12. Récipient souple (100, 200, 300, 400, 500, 600, 700, 800, 900, 1000, 1100)
selon l'une quelconque revendication précédente, dans lequel tous les matériaux souples formant le
récipient sont recyclables dans un flux à composant unique.

13. Récipient souple (100, 200, 300, 400, 500, 600, 700, 800, 900, 1000, 1100)
selon l'une quelconque revendication précédente, dans lequel tous les matériaux souples formant le
récipient sont principalement constitués de polyéthylène.

14. Récipient souple (100, 200, 300, 400, 500, 600, 700, 800, 900, 1000, 1100)
selon l'une quelconque revendication précédente, dans lequel le taux de transmission de gaz est configuré
de telle sorte que, une fois que les volumes de support structuraux ont été expansés pendant un laps de temps qui est plus long que la durée de conservation pour le produit fluide, le cadre de support structural devient perceptiblement dégonflé.

15. Récipient souple (100, 200, 300, 400, 500, 600, 700, 800, 900, 1000, 1100)
selon l'une quelconque revendication précédente, dans lequel le taux de transmission de gaz est configuré
de telle sorte que, une fois que les volumes de support structuraux ont été expansés pendant un laps de temps qui est plus long que la durée de conservation pour le produit fluide, les volumes de support structuraux fournissent un indicateur visuel indiquant que le produit fluide a dépassé sa durée de conservation.
